# EUROPEAN PATENT APPLICATION

(11) **EP 3 994 986 A1**
(43) Date of publication of application: **11.05.2022**
(21) Application number: 20206331.9
(22) Date of filing: 08.11.2020
(51) Int. Cl.: A01N 25/06, A01N 25/30, A01N 25/32, A01N 37/50, A01N 41/10, A01N 43/56, A01N 43/653, A01N 43/66, A01N 43/713, A01N 43/80, A01N 47/06, A01P 3/00, A01P 7/00, A01P 13/00

(54) **AGROCHEMICAL COMPOSITION WITH IMPROVED DRIFT AND SPREADING PROPERTIES**

(71) Applicant: Bayer Aktiengesellschaft, 51373 Leverkusen (DE)
(72) Inventor: The designation of the inventor has not yet been filed
(74) Representative: BIP Patents

(57) **Abstract**

The present invention relates to agrochemical compositions: their use for foliar application; their use at low spray volumes; their use by unmanned aerial systems (UAS), unmanned guided vehicles (UGV), and tractor mounted boom sprayers fitted with conventional nozzles but also pulse width modulation spray nozzles or rotating disc droplet applicators; and their application for controlling agricultural pests, weeds or diseases, in particular on waxy leaves, and in particular the present invention relates to agrochemical compositions with a reduced drift, in particular in spray applications.

## Description

The present invention relates to agrochemical compositions: their use for foliar application; their use at low spray volumes; their use by unmanned aerial systems (UAS), unmanned guided vehicles (UGV), and tractor mounted boom sprayers fitted with conventional nozzles but also pulse width modulation spray nozzles or rotating disc droplet applicators; and their application for controlling agricultural pests, weeds or diseases, in particular on waxy leaves, and in particular the present invention relates to agrochemical compositions with a reduced drift, in particular in spray applications.

Pesticidal active compounds (AIs), e.g., herbicides, fungicides, insecticides, bactericides, miticides, plant growth regulators, etc., and their formulated products are often sprayed, usually after dilution in an aqueous spray liquid, onto plants and / or their habitat.

While modern agriculture faces many challenges in producing sufficient food in a safe and sustainable way, there is also a need to utilise crop protection products to enhance the safety, quality and yield while minimising the impact to the environment and agricultural land. Many crop protection products, whether chemical or biological, are normally applied at relatively high spray volumes, for example in selected cases >50 L/ha, and often >150-400 L/ha. A consequence of this is that much energy must be expended to carry the high volume of spray liquid and then apply it to the crop by spray application. This can be performed by large tractors which on account of their weight and also the weight of the spray liquid produce CO₂ from the mechanical work involved and also cause detrimental compaction of the soil, affecting root growth, health and yield of the plants, as well as the energy subsequently expended in remediating these effects.

Morover, when applying such spray formulations, a more or less pronounced drifting of the spray solution containing the active substance(s) may be observed, depending on the wind conditions, nozzle type, and other application parameters such as, for example, nozzle pressure, boom height, and tractor speed.

Pesticide spray drift is a major source of concern in relation to the environmental impact of agriculture on natural ecosystems and urban areas. Furthermore, this drift is undesirable because it causes a certain part of the applied agrochemical to be lost as far as the intended application rate of the treated area is concerned.

More importantly, the drifting material might cause damage to neighbouring crops and especially, have effects on the local environment (e.g., surface water, non-target flora and fauna) as well as bystanders and occupants in residential areas.

There is a need for a solution that significantly reduces the drift of the active ingredients / formulations, both when sprayed, while at the same time preferably reducing high volumes of spray liquid and reducing the weight of the equipment required to apply the product.

Various methods are used to prevent the drifting of the spray outside the field borders. The use of natural or artificial windbreaks is well known. However, it has been described that even when such screens are used, drift can cause deposition of the active substances behind such borders (e.g., "Deposition of spray drift behind border structures", M. De Schampheleire et al. Crop Protection 28 (2009) 1061-1075). Another frequently used drift mitigation measure is buffer zones, either off-crop or in-crop. A disadvantage of off-crop buffer zones is that part of the field cannot be sown with a crop, an economic cost to the farmer. A disadvantage of in-crop buffer zones is that part of the crop is not protected adequately, resulting in a lower yield and perhaps resistance development. Clearly, this is something farmers want to prevent.

Next to physically limiting spray drift, it is also possible to alter the structure of the spray cloud so that less drops are prone to drift - i.e., typically those drops prone to drift have a diameter under 100 µm. This can be done by choosing different types of nozzles, changing the pressure at which the spray cloud is produced, or by changing the properties of the spray liquid itself. Especially changing nozzles and / or nozzle pressure is something farmers do not prefer to do because it is time consuming and makes the production of their crop more expensive. Also, the equipment necessary on sprayer to deal with variable application rates is not common. For these reasons, a more acceptable way to optimise a spray cloud, so that it leads to less or more limited drift, is by adjusting the properties of the spray liquid.

Although other factors such as meteorological conditions and spray boom height contribute to the potential for drift, spray droplet size distribution has been found to be a predominant factor. Teske et. al. (Teske M. E., Hewitt A. J., Valcore, D. L. 2004. The Role of Small Droplets in Classifying Drop Size Distributions ILASS Americas 17th Annual Conference: Arlington VA) have reported a value of < 156 microns (µm) as the fraction of the spray droplet distribution that contributes to drift. Other researchers consider droplets with diameter < 150 µm to be most drift-prone (J. H. Combellack, N. M. Westen and R. G. Richardson, Crop Prot., 1996, 15, 147-152, O. Permin, L. N. Jørgensen and K. Persson, Crop Prot., 1992, 11, 541 - 546). Another group H. Zhu, R. W. Dexter, R. D. Fox, D. L. Reichard, R. D. Brazee and H. E. Ozkan, J. Agric. Engineering Res., 1997, 67, 35-45.) cites a value of < 200 µm as the driftable fraction. Based on theoretical studies and computer simulations, spray droplets with diameter < 100 µm have been identified as the most drift-prone (H. Holterman, Kinetics and evaporation of water drops in air, 2003, IMAG Report 2003-12; P. A. Hobson, P. C. H. Miller, P. J. Walklate, C. R. Tuck and N. M. Western, J. Agr. Eng. Res., 1993, 54, 293-305; P. C. H. Miller, The measurement of spray drift, Pesticide Outlook, 2003, 14, 205-209). A good estimation of droplet size likely to contribute to drift, therefore, is the fraction below about 100 µm (driftable fraction). The smaller the droplets the longer is the residence time in the air and the higher is the tendency to evaporate and / or to drift rather than deposit within the field borders. A way to minimize the drift effect is by adding suitable drift control agents to pesticide formulations that increase the size of the droplets in the spray cloud - i.e., shift the droplet spectra towards larger droplets. When searching for solutions to overcome the drift problem, it has to be taken into account that the biological performance of the resulting application is not reduced. The use of formulation (both in-can and tank-mix) that increase the spray droplet size may reduce the efficacy to some extent, mainly because of reduced cover (e.g., "Biological efficacy of herbicides and fungicides applied with low-drift and twin-fluid nozzles" P.K.Jensen et al. Crop Protection 20 (2001)57-64). Retention of larger droplets on leaf surfaces can be reduced as they run-off or bounce or shatter and redistribute. Fewer larger droplets adhering to the leaf surface can reduce overall biological efficacy. Furthermore, for crops where the spray cloud has to penetrate into the canopy of the crop, very large droplets can pass directly through canopies, or bounce off leaves, or shatter and redistribute to soil. All these effects of applying active compound in large droplets may add to reduced efficacy.

It also has to be taken into account that many compounds added to a formulation to improve efficacy, storage, and other important properties often have a negative effect on drift properties of the spray broth, i.e. tend to reduce droplet size or enhance evaporation afterwards.

Moreover, in agriculture, low spray volume application technologies including unmanned aerial systems (UAS), unmanned guided vehicles (UGV), and tractor mounted boom sprayers fitted with pulse width modulation spray nozzles or rotating disc droplet applicators are offering farmers solutions to apply products with low spray volumes, typically down to 10 to 20 l/ha or less. These solutions have advantages including for example that they require significantly less water which is important in regions where the supply of water is limited, require less energy to transport and apply the spray liquid, are faster both from quicker filling of the spray tank and faster application, reduce the CO₂ generation from both the reduced volume of spray liquid to transport and from the use of smaller and lighter vehicles, reduced soil compaction damage, and enabling the use of cheaper application systems.

However, Wang et al [Field evaluation of an unmanned aerial vehicle (UAV) sprayer: effect of spray volume on deposition and the control of pests and disease in wheat. Pest Management Science 2019 doi/epdf/10.1002/ps.5321] demonstrated that as the spray volume is decreased from 450 and 225 l/ha to 28.1, 16.8 and 9.0 l/ha, the coverage (% area), number of spray deposits per area, and diameter of the spray deposits as measured on water sensitive paper all decreased (see Table 3 in Wang *et al,* 2019). In parallel, the biological control efficacy for both wheat aphid control and powdery mildew control decreased at low spray volumes with the greatest decrease observed at 9.0 l/ha, followed by 16.8 l/ha (see Figures 6, 7 and 8 in Wang *et al*, 2019).

There is therefore a need to design formulation systems that overcome the reduction in the coverage and diameter of the spray deposits at low spray volumes even through the number of spray deposits per area is decreasing: as the spray volume decreases, the number of spray droplets per unit area decreases proportionately for the same spray droplet spectra size. This is especially necessary below 25 l/ha, more especially below 17 l/ha, and even more especially at 10 l/ha and below.

Moreover, due to an increase in concentration of adjuvants in the spray solution to enhance the spreading, there is a higher chance for wash-off of the spray solution due to the higher local concentration of adjuvants and among them spreading agents.

Also, higher concentrations of surfactants in low spray volume formulations and spray broths usually lead to a smaller droplet size which in turn increases drift.

Therefore, there is a need to provide formulations which, when sprayed not only at "normal" volumes (50-500 l/ha) but also at ultra-low spray volumes according to the present invention, show a good coverage of the crops to provide good biological efficacy while at the same time do not show a high wash-off.

The solution is provided by formulations according to claim 1 and specifically by formulations containing specific drift reducing agents in combination with selected spreading agents at specific concentrations. Such formulations provide minimized or at least maintained drift while simultaneously providing increased coverage and increased diameter of spray deposits at low spray volumes, while maintaining or improving spreading and thus biological efficacy. Furthermore, the increased coverage and increased diameter of spray deposits is comparable to the coverage obtained at normal higher spray volumes.

Moreover, the formulations exemplifying the invention are particularly effective on hard to wet leaf surfaces where more conventional spray volumes have poor retention and coverage.

For low volume applications a particular advantage of the invention stemming from the low total amount of all ingredients compared to the level required at normal higher spray volumes is lower cost of formulations and their ease of production. Further advantages include improved formulation stability and simplified manufacture, less cost of goods as well as less impact on the environment.

Formulations, also for tank mixes, known in the prior art containing drift reducing agents are principally designed for much higher spray volumes and generally contain lower concentrations of spreading agents in the spray broth. Nevertheless, due to the high spray volumes used in the prior art, the total amount of spreading agents used and therefore in the environment is higher than according to the present invention.

The concentration of the drift reducing agents is an important element of the invention, since in particular for oil based drift retardants, which also are used as penetration enhancers, suitable effects occur already at much lower concentrations then any effect on the penetration of actives. Thus, with low amounts of said oils and little impact on the environment drift can be reduced significantly. "Low amounts of said drift reducing agents (also referred to as drift retardants) means less than 25 g/l. This means, that already with an amount of 5 to 10 g/ha good drift reduction can be achieved instead of conventional 100 - 500 g/ha, which has to be present for an uptake effect.

On the other hand, high oil contents increase volume of product, manufacture complexity and can decrease product stability, thus they should be avoided if not necessary as uptake enhancer or solvent.

The minimum concentration of drift reducing agents is achieved, normally at 0.5. g/l.

With regard to the spreading agents in low volume applications, in a spray volume of 500 l/ha as it is used in the prior art, about 250 g/ha of spreading agents would be required to achieve suitable spreading. Hence, faced with the task to reduce the spray volume, the skilled person would apply the same concentration of spreading agents in the formulation. For example, for a spray volume of 10 l/ha about 5 g/ha (about 0.05% in the spray broth) surfactant would be required. However, at such a low volume with such low concentration of spreading agents sufficient spreading cannot be achieved (see examples).

As has been shown in prior applications, we have found that increasing the concentration of spreading agents as the spray volume decreases can compensate for the loss in coverage (due to insufficient spreading) from the reduction in spray volume. It was surprisingly found that for every reduction of the spray volume by 50%, the concentration of surfactant should roughly be doubled.

Thus, although the absolute concentration of the spreading agents is increased compared to formulations known in the art, the relative total amount per ha can be decreased, which is advantageous, both economically and ecologically, while coverage by and efficacy of the formulation according to the invention is improved, maintained or at least kept at an acceptable level when other benefits of the low volume applications are considered, e.g. less costs of formulation due to less cost of goods, smaller vehicles with less working costs, less compacting of soil etc.

Further, we have surprisingly found that the formulations according to the present invention show low drift and good spreading properties when compared to formulations without drift retardant agents known in the art.

It also has been found, that despite the high concentration of spreading agents and wetters the drift reduction of the formulations according to the present invention is also comparable or better than those of the reference formulations based on the prior art.

Further, it was found that when methyl esters of vegetable oils are used as b), there is also a positive effect observed on foaming, i.e. a reduction of foam, of the formulation, in particular in connection with the organosilicone spreaders.

As pointed out above, the formulations of the present invention are particularly suited for low volume applications depending on the leaf surface texture . Bico et al [Wetting of textured surfaces, Colloids and Surfaces A, 206 (2002) 41-46] have established that compared to smooth surfaces, textured surfaces can enhance the wetting for formulation spray dilutions with contact angles <90° and reduce the wetting for contact angles >90°.

This is also the case for leaf surfaces, in particular textured leaf surfaces, when sprayed in a method according to the invention resulting in low total amounts (per ha) of spreading agents due to the low spray volumes with formulations according to the invention having a high concentration of the spreading agents. Remarkably high coverage of the leaf surfaces by the spray liquid, even to a level greater than would be normally be expected, could be demonstrated.

Textured leaf surfaces include leaves containing micron-scale wax crystals on the surface such as wheat, barley, rice, rapeseed, soybean (young plants) and cabbage for example, and leaves with surface textures such as lotus plant leaves for example. The surface texture can be determined by scanning electron microscope (SEM) observations and the leaf wettability determined by measuring the contact angle made by a drop of water on the leaf surface.

In summary, the object of the present invention is to provide a formulation which can be applied in high (200-500 l/ha or even higher) to low volumes, i.e. < 20 l/ha, while still providing good drift reduction, leaf coverage and biological efficacy against fungicidal pathogens, weeds and pests, and providing good rain-fastness, and at the same time reducing the amounts of additional additives applied per ha, as well as a method of using said formulation at high to low volumes (< 20 l/ha), and the use of said formulation for application in low volumes as defined above.

While the application on textured leaves is preferred, surprisingly it was found that also on non-textured leaves the formulations according to the instant invention showed good spreading and coverage as well as other properties compared to classical spray application formulations for 200 l/h..

In one aspect, the present invention is directed to the use of the compositions according to the invention for foliar application.

If not otherwise indicated, % in this application means percent by weight (%w/w).

It is understood that in case of combinations of various components, the percentages of all components of the formulations always sum up to 100.

Further, if not otherwise indicated, the reference "to volume" for water indicates that water is added to a total volume of a formulation of 1000 ml (11). For the sake of clarity it is understood that if unclear the density of the formulation is understood as to be 1 g/cm³.

In the context of the present invention aqueous based agrochemical compositions comprise at least 5% of water and include suspension concentrates, aqueous suspensions, suspo-emulsions or capsule suspensions, preferably suspension concentrates and aqueous suspensions.

Further, it is understood, that the preferred given ranges of the application volumes or application rates as well as of the respective ingredients as given in the instant specification can be freely combined and all combinations are disclosed herein, however, in a more preferred embodiment, the ingredients are preferably present in the ranges of the same degree of preference, and even more preferred the ingredients are present in the most preferred ranges.
Figure 1 shows spray deposits on wheat leaves. (i) and (iii) are at a spray dilution concentration of 10 l/ha, (ii) and (iv) are at a spray dilution concentration of 200 l/ha. (i) and (ii) are a reference recipe, (iii) and (iv) are a recipe illustrative of the invention. Images are taken from Example FN7.
Figure 2 shows spray deposits on tomato plants at a spray dilution concentration of 15 l/ha, (i) is a reference recipe, (ii) is a recipe illustrative of the invention. Images are taken from Example FN8.

In one aspect, the invention refers to a formulation comprising:
a) One or more active ingredients,
b) One or more drift reducing agents
c) One or more spreading agents,
f) Other formulants,
g) one or more carriers to volume (1L or 1 kg),
wherein in one preferred embodiment b) is a vegetable oil or a vegetable oil ester or diester and in another embodiment component b) is a polymeric drift reducing agent.

In another preferred embodiment c) is present in 5 to 150 g/l and wherein b) is present in 0.01 to 50 g/l.

If not otherwise indicated in the present invention the carrier is usually used to volume the formulation. Preferably, the concentration of carrier in the formulation according to the invention is at least 5 % w/w, more preferred at least 10 % w/w such as at least 20% w/w, at least 40% w/w , at least 50% w/w, at least 60% w/w, at least 70 % w/w and at least 80 % w/w or respectively at least 50 g/l, more preferred at least 100 g/l such as at least 200g/l, at least 400g/l, at least 500g/l, at least 600 g/l, at least 700 g/l and at least 800 g/l.

The formulation is preferably a spray application to be used on crops.

In a preferred embodiment according to the present invention, also for the following embodiments in the specification, the carrier is water.

In a preferred embodiment the formulation of the instant invention comprises
a) One or more active ingredients,
b) One or more drift reducing ingredients
c) One or more spreading agents,
f1) At least one suitable non-ionic surfactant and/or suitable ionic surfactant.,
f2) Optionally, a rheological modifier,
f3) Optionally, a suitable antifoam substance,
f4) Optionally, suitable antifreeze agents,
f5) Optionally, suitable other formulants.
g) carrier to volume,
wherein c) is present in 5 to 150 g/l, and wherein water is even more preferred as carrier, and wherein in one preferred embodiment b) is a vegetable oil or an vegetable oil ester or diester and in another embodiment component b) is a polymeric drift reducing agent..

In another embodiment at least one of f2, f3, f4 and f5 are mandatory, preferably, at least two of fl, f2, f3, f4 and f5 are mandatory, and in yet another embodiment f1, f2, f3, f4 and f5 are mandatory.

In a preferred embodiment component a) is preferably present in an amount from 5 to 500 g/l, preferably from 10 to 320 g/l, and most preferred from 20 to 230 g/l.

In an alternative embodiment component a) is a fungicide.

In an alternative embodiment component a) is an insecticide.

In an alternative embodiment component a) is a herbicide.

In a preferred embodiment component b) is present in 0.01 to 50 g/l, preferably from 0.1 to 30 g/l, and most preferred from 1 to 20 g/l.

In case b) is selected from the group of vegetable oils and esters, b) preferably is present in 1 to 50 g/l, preferably from 5 to 30 g/l, and most preferred from 6 to 30 g/l.

In case b) is selected from the group of polymeric drift reducing agents, b) preferably is present in 0.05 to 10 g/l, preferably from 0.1 to 8 g/l, and most preferred from 0.2 to 6 g/l.

In a preferred embodiment component c) is present in 5 to 150 g/l, preferably from 10 to 120 g/l, and most preferred from 20 to 80 g/l.

In a preferred embodiment the one or more component f1) is present in 4 to 250 g/l, preferably from 8 to 120 g/l, and most preferred from 10 to 80 g/l.

In a preferred embodiment the one or more component f2) is present in 0 to 60 g/l, preferably from 1 to 20 g/l, and most preferred from 2 to 10 g/l.

In a preferred embodiment the one or more component f3) is present in 0 to 30 g/l, preferably from 0.5 to 20 g/l, and most preferred from 1 to 12 g/l.

In a preferred embodiment the one or more component f4) is present in 0 to 200 g/l, preferably from 5 to 150 g/l, and most preferred from 10 to 120 g/l.

In a preferred embodiment the one or more component f5) is present in 0 to 200 g/l, preferably from 0.1 to 120 g/l, and most preferred from 0.5 to 80 g/l.

In one embodiment the formulation comprises the components a) to f) in the following amounts
a) from 5 to 500 g/l, preferably from 10 to 320 g/l, and most preferred from 20 to 230 g/l,
b) from 0.01 to 50 g/l, preferably from 0.1 to 30 g/l, and most preferred from 1 to 20 g/l, and in case of b) being an vegetable oil or ester from in 1 to 50 g/l, preferably from 5 to 30 g/l, and most preferred from 6 to 30 g/l, in case of b) being a drift reducing polymer in 0.05 to 10 g/l, preferably from 0.1 to 8 g/l, and most preferred from 0.2 to 6 g/l.
c) from 5 to 150 g/l, preferably from 10 to 120 g/l, and most preferred from 20 to 80 g/l,
f) from 4 to 250 g/l, preferably from 8 to 120 g/l, and most preferred from 10 to 80 g/l.
g) carrier to volume.

In another embodiment the formulation comprises the components a) to f) in the following amounts
a) from 5 to 500 g/l, preferably from 10 to 320 g/l, and most preferred from 20 to 230 g/l,
b) from 0.01 to 50 g/l, preferably from 0.1 to 30 g/l, and most preferred from 1 to 20 g/l, and in case of b) being an vegetable oil or ester from in 1 to 50 g/l, preferably from 5 to 30 g/l, and most preferred from 6 to 30 g/l, in case of b) being a drift reducing polymer in 0.05 to 10 g/l, preferably from 0.1 to 8 g/l, and most preferred from 0.2 to 6 g/l.
c) from 5 to 150 g/l, preferably from 10 to 120 g/l, and most preferred from 20 to 80 g/l,
f1) from 4 to 250 g/l, preferably from 8 to 120 g/l, and most preferred from 10 to 80 g/l,
f2) from 0 to 60 g/l, preferably from 1 to 20 g/l, and most preferred from 2 to 10 g/l,
f3) from 0 to 30 g/l, preferably from 0.5 to 20 g/l, and most preferred from 1 to 12 g/l,
f4) from 0 to 200 g/l, preferably from 5 to 150 g/l, and most preferred from 10 to 120 g/l,
f5) from 0 to 200 g/l, preferably from 0.1 to 120 g/l, and most preferred from 0.5 to 80 g/l,
g) carrier to volume.

It is understood that in case a solid carrier is used, the above referenced amounts refer to 1 kg instead of to 11, i.e. g/kg.

As indicated above, component g) is always added to volume, i.e. to 11 or 1 kg (the latter in case of solid formulations).

In a further preferred embodiment of the present invention the formulation consists only of the above described ingredients a) to g) in the specified amounts and ranges.

In a preferred embodiment the herbicide is used in combination with a safener, which is preferably selected from the group comprising isoxadifen-ethyl and mefenpyr-diethyl.

The instant invention further applies to a method of application of the above referenced formulations, wherein the formulation is applied at a spray volume of between 1 and 20 l/ha, preferably 2 and 15 l/ha, more preferably 5 and 15 l/ha.

More preferred, the instant invention applies to a method of application of the above referenced formulations, wherein the formulation is applied at a spray volume of between 1 and 20 l/ha, preferably 2 and 15 l/ha, more preferably 5 and 15 l/ha, and the amount of c) is present in 5 to 250 g/l, preferably from 8 to 120 g/l, and most preferred from 10 to 80 g/l, wherein in a further preferred embodiment a) is present from 5 to 500 g/l, preferably from 10 to 320 g/l, and most preferred from 20 to 230 g/l, and even further preferred b) is present from 0.01 to 50 g/l, preferably from 0.1 to 30 g/l, and most preferred from 1 to 20 g/l, and in case of b) being an vegetable oil or ester from in 1 to 50 g/l, preferably from 5 to 30 g/l, and most preferred from 6 to 30 g/l, in case of b) being a drift reducing polymer in 0.05 to 10 g/l, preferably from 0.1 to 8 g/l, and most preferred from 0.2 to 6 g/l,and even further preferred c) is present in an amount from 5 to 150 g/l, preferably from 10 to 120 g/l, and most preferred from 20 to 80 g/l.

In another aspect the instant invention applies to a method of application of the above referenced formulations,
wherein the formulation is applied at a spray volume of between 1 and 20 l/ha, preferably 2 and 15 l/ha, more preferably 5 and 15 l/ha, and
wherein preferably the applied amount of a) to the crop is between 2 and 150 g/ha, preferably between 5 and 120 g/ha, and more preferred between 20 and 100 g/ha.

Further, the drift reducing agent b) in case of b) being a vegetable oil or ester of an vegetable oil is preferably applied from 0.1 g/ha to 50 g/ha, more preferably from 1 g/ha to 40 g/ha, and most preferred from 5 g/ha to 30 g/ha.

Further, the drift reducing agent b) in case of b) being a polymer is preferably applied from 0.01 g/ha to 25 g/ha, more preferably from 0.05 g/ha to 10 g/ha, and most preferred from 0.1 g/ha to 6 g/ha.

In contrast to the aforementioned oils as drift reducing agents the corresponding polymers have to be present in higher concentrations in the instant formulation in case they shall be sprayed later at higher spray volumes, since dilution has a stronger effect on those.

Further, the spreading agent c) is preferably applied from 5 g/ha to 150 g/ha, more preferably from 7.5 g/ha to 100 g/ha, and most preferred from 10 g/ha to 60 g/ha.

In one embodiment, the with the above indicated method applied amount of a) to the crop is between 2 and 10 g/ha.

In another embodiment, the with the above indicated method applied amount of a) to the crop is between 40 and 110 g/ha.

In one embodiment in the applications described above, the active ingredient (ai) a) is preferably applied from 2 and 150 g/ha, preferably between 5 and 120 g/ha, and more preferred between 20 and 100 g/ha, while correspondingly the spreading agent is preferably applied from 10 g/ha to 100 g/ha, more preferably from 20 g/ha to 80 g/ha, and most preferred from 40 g/ha to 60 g/ha.

In particular the formulations of the instant invention are useful for application with a spray volume of between 1 and 20 l/ha, preferably 2 and 15 l/ha, more preferably 5 and 15 l/ha on plants or crops with textured leaf surfaces, preferably on wheat, barley, rice, rapeseed, soybean (young plants) and cabbage.

Further, the instant invention refers to a method of treating crops with textured leaf surfaces, preferably wheat, barley, rice, rapeseed, soybean (young plants) and cabbage, with a spray volume of between 1 and 20 l/ha, preferably 2 and 15 l/ha, more preferably 5 and 15 l/ha.

In a preferred embodiment the above described applications are applied on crops with textured leaf surfaces, preferably on wheat, barley, rice, rapeseed, soybean (young plants) and cabbage.

In one embodiment the active ingredient is a fungicide or a mixture of two fungicides or a mixture of three fungicides.

In another embodiment the active ingredient is an insecticide or a mixture of two insecticides or a mixture of three insecticides.

In yet another embodiment the active ingredient is a herbicide or a mixture of two herbicides or a mixture of three herbicides, wherein preferably in the mixtures on mixing partner is a safener.

The corresponding doses of spreading agent (c) in formulations according to the invention to the applied doses are:
A 2 l/ha liquid formulation delivering
   - 50 g/ha of spreading agent contains 25 g/l of surfactant (c).
   - 30 g/ha of spreading agent contains 15 g/l of surfactant (c).
   - 12 g/ha of spreading agent contains 6 g/l of surfactant (c).
   - 10 g/ha of spreading agent contains 5 g/l of surfactant (c).
A 1 l/ha liquid formulation delivering:
   50 g/ha of spreading agent contains 50 g/l of surfactant (c),
   30 g/ha of spreading agent contains 30 g/l of surfactant (c),
   12 g/ha of spreading agent contains 12 g/l of surfactant (c),
   10 g/ha of spreading agent contains 10 g/l of surfactant (c).
A 0.5 l/ha liquid formulation delivering:
   50 g/ha of spreading agent contains 100 g/l of surfactant (c),
   30 g/ha of spreading agent contains 60 g/l of surfactant (c),
   12 g/ha of spreading agent contains 24 g/l of surfactant (c),
   10 g/ha of spreading agent contains 20 g/l of surfactant (c).
A 0.2 l/ha liquid formulation delivering:
   50 g/ha of spreading agent contains 250 g/l of surfactant (c),
   30 g/ha of spreading agent contains 150 g/l of surfactant (c),
   12 g/ha of spreading agent contains 60 g/l of surfactant (c),
   10 g/ha of spreading agent contains 50 g/l of surfactant (c).
A 2 kg/ha solid formulation delivering:
   50 g/ha of spreading agent contains 25 g/kg of surfactant (c),
   30 g/ha of spreading agent contains 15 g/kg of surfactant (c),
   12 g/ha of spreading agent contains 6 g/kg of surfactant (c),
   10 g/ha of spreading agent contains 5 g/kg of surfactant (c).
A 1 kg/ha solid formulation delivering:
   50 g/ha of spreading agent contains 50 g/kg of surfactant (c),
   30 g/ha of spreading agent contains 30 g/kg of surfactant (c),
   12 g/ha of spreading agent contains 12 g/kg of surfactant (c),
   10 g/ha of spreading agent contains 10 g/kg of surfactant (c).
A 0.5 kg/ha solid formulation delivering:
   50 g/ha of spreading agent contains 100 g/kg of surfactant (c),
   30 g/ha of spreading agent contains 60 g/kg of surfactant (c),
   12 g/ha of spreading agent contains 24 g/kg of surfactant (c),
   10 g/ha of spreading agent contains 20 g/kg of surfactant (c).

The concentrations of spreading agent (c) in formulations that are applied at other dose per hectare rates can be calculated in the same way.

In the context of the present invention, suitable formulation types are by definition suspension concentrates, aqueous suspensions, suspo-emulsions or capsule suspensions, emulsion concentrates, water dispersible granules, oil dispersions, emulsifiable concentrates, dispersible concentrates, wettable granules, preferably suspension concentrates, aqueous suspensions, suspo-emulsions and oil dispersions, wherein in the case of non-aqueous formulations or solid formulations the sprayable formulation are obtained by adding water.

### Active ingredients (a):

The active compounds identified here by their common names are known and are described, for example, in the pesticide handbook ("The Pesticide Manual" 16th Ed., British Crop Protection Council 2012) or can be found on the Internet (e.g. http://www.alanwood.net/pesticides). The classification is based on the current IRAC Mode of Action Classification Scheme at the time of filing of this patent application.

Examples of fungicides (a) according to the invention are:
1) Inhibitors of the ergosterol biosynthesis, for example (1.001) cyproconazole, (1.002) difenoconazole, (1.003) epoxiconazole, (1.004) fenhexamid, (1.005) fenpropidin, (1.006) fenpropimorph, (1.007) fenpyrazamine, (1.008) fluquinconazole, (1.009) flutriafol, (1.010) imazalil, (1.011) imazalil sulfate, (1.012) ipconazole, (1.013) metconazole, (1.014) myclobutanil, (1.015) paclobutrazol, (1.016) prochloraz, (1.017) propiconazole, (1.018) prothioconazole, (1.019) pyrisoxazole, (1.020) spiroxamine, (1.021) tebuconazole, (1.022) tetraconazole, (1.023) triadimenol, (1.024) tridemorph, (1.025) triticonazole, (1.026) (1R,2S,5S)-5-(4-chlorobenzyl)-2-(chloromethyl)-2-methyl-1-(1H-1,2,4-triazol-1-ylmethyl)cyclopentanol, (1.027) (1S,2R,5R)-5-(4-chlorobenzyl)-2-(chloromethyl)-2-methyl-1-(1H-1,2,4-triazol-1-ylmethyl)cyclopentanol, (1.028) (2R)-2-(1-chlorocyclopropyl)-4-[(1R)-2,2-dichlorocyclopropyl]-1-(1H-1,2,4-triazol-1-yl)butan-2-ol, (1.029) (2R)-2-(1-chlorocyclopropyl)-4-[(1S)-2,2-dichlorocyclopropyl]-1-(1H-1,2,4-triazol-1-yl)butan-2-ol, (1.030) (2R)-2-[4-(4-chlorophenoxy)-2-(trifluoromethyl)phenyl]-1-(1H-1,2,4-triazol-1-yl)propan-2-ol, (1.031) (2S)-2-(1-chlorocyclopropyl)-4-[(1R)-2,2-dichlorocyclopropyl]-1-(1H-1,2,4-triazol-1-yl)butan-2-ol, (1.032) (2S)-2-(1-chloro-cyclopropyl)-4-[(1S)-2,2-dichlorocyclopropyl]-1-(1H-1,2,4-triazol-1-yl)butan-2-ol, (1.033) (2S)-2-[4-(4-chlorophenoxy)-2-(trifluoromethyl)phenyl]-1-(1H-1,2,4-triazol-1-yl)propan-2-ol, (1.034) (R)-[3-(4-chloro-2-fluorophenyl)-5-(2,4-difluorophenyl)-1,2-oxazol-4-yl](pyridin-3-yl)methanol, (1.035) (S)-[3-(4-chloro-2-fluorophenyl)-5-(2,4-difluorophenyl)-1,2-oxazol-4-yl](pyridin-3-yl)methanol, (1.036) [3-(4-chloro-2-fluorophenyl)-5-(2,4-difluorophenyl)-1,2-oxazol-4-yl](pyridin-3-yl)methanol, (1.037) 1-({(2R,4S)-2-[2-chloro-4-(4-chlorophenoxy)phenyl]-4-methyl-1,3-dioxolan-2-yl}methyl)-1H-1,2,4-triazole, (1.038) 1-({(2S,4S)-2-[2-chloro-4-(4-chlorophenoxy)phenyl]-4-methyl-1,3-dioxolan-2-yl}methyl)-1H-1,2,4-triazole, (1.039) 1-{[3-(2-chlorophenyl)-2-(2,4-difluorophenyl)oxiran-2-yl]methyl}-1H-1,2,4-triazol-5-ylthiocyanate, (1.040) 1-{[rel(2R,3R)-3-(2-chlorophenyl)-2-(2,4-difluorophenyl)oxiran-2-yl]methyl}-1H-1,2,4-triazol-5-yl thiocyanate, (1.041) 1-{[rel(2R,3S)-3-(2-chlorophenyl)-2-(2,4-difluorophenyl)oxiran-2-yl]methyl}-1H-1,2,4-triazol-5-yl thiocyanate, (1.042) 2-[(2R,4R,5R)-1-(2,4-dichlorophenyl)-5-hydroxy-2,6,6-trimethylheptan-4-yl]-2,4-dihydro-3H-1,2,4-triazole-3-thione, (1.043) 2-[(2R,4R,5S)-1-(2,4-dichlorophenyl)-5-hydroxy-2,6,6-trimethylheptan-4-yl]-2,4-dihydro-3H-1,2,4-triazole-3-thione, (1.044) 2-[(2R,4S,5R)-1-(2,4-dichlorophenyl)-5-hydroxy-2,6,6-trimethylheptan-4-yl]-2,4-dihydro-3H-1,2,4-triazole-3-thione, (1.045) 2-[(2R,4S,5S)-1-(2,4-dichloro-phenyl)-5-hydroxy-2,6,6-trimethylheptan-4-yl]-2,4-dihydro-3H-1,2,4-triazole-3-thione, (1.046) 2-[(2S,4R,5R)-1-(2,4-dichlorophenyl)-5-hydroxy-2,6,6-trimethylheptan-4-yl]-2,4-dihydro-3H-1,2,4-triazole-3-thione, (1.047) 2-[(2S,4R,5S)-1-(2,4-dichlorophenyl)-5-hydroxy-2,6,6-trimethylheptan-4-yl]-2,4-dihydro-3H-1,2,4-triazole-3-thione, (1.048) 2-[(2S,4S,5R)-1-(2,4-dichlorophenyl)-5-hydroxy-2,6,6-trimethylheptan-4-yl]-2,4-dihydro-3H-1,2,4-triazole-3-thione, (1.049) 2-[(2S,4S,5S)-1-(2,4-dichlorophenyl)-5-hydroxy-2,6,6-trimethylheptan-4-yl]-2,4-dihydro-3H-1,2,4-triazole-3-thione, (1.050) 2-[1-(2,4-dichlorophenyl)-5-hydroxy-2,6,6-trimethylheptan-4-yl]-2,4-dihydro-3H-1,2,4-triazole-3 -thione, (1.051) 2-[2-chloro-4-(2,4-dichlorophenoxy)phenyl]-1-(1H-1,2,4-triazol-1-yl)propan-2-ol, (1.052) 2-[2-chloro-4-(4-chlorophenoxy)phenyl]-1-(1H-1,2,4-triazol-1-yl)butan-2-ol, (1.053) 2-[4-(4-chlorophenoxy)-2-(trifluoromethyl)phenyl]-1-(1H-1,2,4-triazol-1-yl)butan-2-ol, (1.054) 2-[4-(4-chlorophenoxy)-2-(trifluoromethyl)phenyl]-1-(1H-1,2,4-triazol-1-yl)pentan-2-ol, (1.055) mefentrifluconazole, (1.056) 2-{[3-(2-chlorophenyl)-2-(2,4-difluorophenyl)oxiran-2-yl]methyl}-2,4-dihydro-3H-1,2,4-triazole-3-thione, (1.057) 2-{[rel(2R,3R)-3-(2-chlorophenyl)-2-(2,4-difluoro-phenyl)oxiran-2-yl]methyl}-2,4-dihydro-3H-1,2,4-triazole-3-thione, (1.058) 2-{[rel(2R,3S)-3-(2-chlorophenyl)-2-(2,4-difluorophenyl)oxiran-2-yl]methyl}-2,4-dihydro-3H-1,2,4-triazole-3-thione, (1.059) 5-(4-chlorobenzyl)-2-(chloromethyl)-2-methyl-1-(1H-1,2,4-triazol-1-ylmethyl)cyclopentanol, (1.060) 5-(allylsulfanyl)-1-{[3-(2-chlorophenyl)-2-(2,4-difluorophenyl)oxiran-2-yl]methyl}-1H-1,2,4-triazole, (1.061) 5-(allylsulfanyl)-1-{[rel(2R,3R)-3-(2-chlorophenyl)-2-(2,4-difluorophenyl)oxiran-2-yl]methyl}-1H-1,2,4-triazole, (1.062) 5-(allylsulfanyl)-1-{[rel(2R,3S)-3-(2-chlorophenyl)-2-(2,4-difluorophenyl)oxiran-2-yl]methyl}-1H-1,2,4-triazole, (1.063) N'-(2,5-dimethyl-4-{[3-(1,1,2,2-tetrafluoroethoxy)phenyl]sulfanyl}phenyl)-N-ethyl-N-methylimidoformamide, (1.064) N'-(2,5-dimethyl-4-{[3-(2,2,2-trifluoroethoxy)phenyl]sulfanyl}phenyl)-N-ethyl-N-methylimidoformamide, (1.065) N'-(2,5-dimethyl-4-{[3-(2,2,3,3-tetrafluoropropoxy)phenyl]sulfanyl}phenyl)-N-ethyl-N-methylimidoformamide, (1.066) N'-(2,5-dimethyl-4-{[3-(pentafluoroethoxy)phenyl]sulfanyl}phenyl)-N-ethyl-N-methylimidoformamide, (1.067) N'-(2,5-dimethyl-4-{3-[(1,1,2,2-tetrafluoroethyl)sulfanyl]-phenoxy}phenyl)-N-ethyl-N-methylimidoformamide, (1.068) N'-(2,5-dimethyl-4-{3-[(2,2,2-trifluoroethyl)sulfanyl]phenoxy}phenyl)-N-ethyl-N-methylimidoformamide, (1.069) N'-(2,5-dimethyl-4-{3-[(2,2,3,3-tetrafluoropropyl)sulfanyl]phenoxy}phenyl)-N-ethyl-N-methylimidoformamide, (1.070) N'-(2,5-dimethyl-4-{3-[(pentafluoroethyl)sulfanyl]phenoxy}phenyl)-N-ethyl-N-methylimidoformamide, (1.071) N'-(2,5-dimethyl-4-phenoxyphenyl)-N-ethyl-N-methylimidoformamide, (1.072) N'-(4-{[3-(difluoromethoxy)phenyl]sulfanyl}-2,5-dimethylphenyl)-N-ethyl-N-methylimidoformamide, (1.073) N'-(4-{3-[(difluoromethyl)sulfanyl]phenoxy}-2,5-dimethylphenyl)-N-ethyl-N-methylimidoformamide, (1.074) N'-[5-bromo-6-(2,3-dihydro-1H-inden-2-yloxy)-2-methylpyridin-3-yl]-N-ethyl-N-methylimido-formamide, (1.075) N'-{4-[(4,5-dichloro-1,3-thiazol-2-yl)oxy]-2,5-dimethylphenyl}-N-ethyl-N-methylimidoformamide, (1.076) N'-{5-bromo-6-[(1R)-1-(3,5-difluorophenyl)ethoxy]-2-methylpyridin-3-yl}-N-ethyl-N-methylimidoformamide, (1.077) N'-{5-bromo-6-[(1S)-1-(3,5-difluorophenyl)ethoxy]-2-methylpyridin-3-yl}-N-ethyl-N-methylimidoformamide, (1.078) N'-{5-bromo-6-[(cis-4-isopropyl-cyclohexyl)oxy]-2-methylpyridin-3-yl}-N-ethyl-N-methylimidoformamide, (1.079) N'-{5-bromo-6-[(trans-4-isopropylcyclohexyl)oxy]-2-methylpyridin-3-yl}-N-ethyl-N-methylimidoformamide, (1.080) N'-{5-bromo-6-[1-(3,5-difluorophenyl)ethoxy]-2-methylpyridin-3-yl}-N-ethyl-N-methylimido-formamide, (1.081) ipfentrifluconazole, (1.082) 2-[4-(4-chlorophenoxy)-2-(trifluoromethyl)phenyl]-1-(1H-1,2,4-triazol-1-yl)propan-2-ol, (1.083) 2-[6-(4-bromophenoxy)-2-(trifluoromethyl)-3-pyridyl]-1-(1,2,4-triazol-1-yl)propan-2-ol, (1.084) 2-[6-(4-chlorophenoxy)-2-(trifluoromethyl)-3-pyridyl]-1-(1,2,4-triazol-1-yl)propan-2-ol, (1.085) 3-[2-(1-chlorocyclopropyl)-3-(3-chloro-2-fluoro-phenyl)-2-hydroxy-propyl]imidazole-4-carbonitrile, (1.086) 4-[[6-[rac-(2R)-2-(2,4-difluorophenyl)-1,1-difluoro-2-hydroxy-3-(5-thioxo-4H-1,2,4-triazol-1-yl)propyl]-3-pyridyl]oxy]benzonitrile, (1.087) N-isopropyl-N'-[5-methoxy-2-methyl-4-(2,2,2-trifluoro-1-hydroxy-1-phenylethyl)phenyl]-N-methylimidoformamide, (1.088) N'-{5-bromo-2-methyl-6-[(1-propoxypropan-2-yl)oxy]pyridin-3-yl}-N-ethyl-N-methylimido-formamide, (1.089) hexaconazole, (1.090) penconazole, (1.091) fenbuconazole.
2) Inhibitors of the respiratory chain at complex I or II, for example (2.001) benzovindiflupyr, (2.002) bixafen, (2.003) boscalid, (2.004) carboxin, (2.005) fluopyram, (2.006) flutolanil, (2.007) fluxapyroxad, (2.008) furametpyr, (2.009) Isofetamid, (2.010) isopyrazam (anti-epimeric enantiomer 1R,4S,9S), (2.011) isopyrazam (anti-epimeric enantiomer 1S,4R,9R), (2.012) isopyrazam (anti-epimeric racemate 1RS,4SR,9SR), (2.013) isopyrazam (mixture of syn-epimeric racemate 1RS,4SR,9RS and anti-epimeric racemate 1RS,4SR,9SR), (2.014) isopyrazam (syn-epimeric enantiomer 1R,4S,9R), (2.015) isopyrazam (syn-epimeric enantiomer 1S,4R,9S), (2.016) isopyrazam (syn-epimeric racemate 1RS,4SR,9RS), (2.017) penflufen, (2.018) penthiopyrad, (2.019) pydiflumetofen, (2.020) Pyraziflumid, (2.021) sedaxane, (2.022) 1,3-dimethyl-N-(1,1,3-trimethyl-2,3-dihydro-1H-inden-4-yl)-1H-pyrazole-4-carboxamide, (2.023) 1,3-dimethyl-N-[(3R)-1,1,3-trimethyl-2,3-dihydro-1H-inden-4-yl]-1H-pyrazole-4-carboxamide, (2.024) 1,3-dimethyl-N-[(3S)-1,1,3-trimethyl-2,3-dihydro-1H-inden-4-yl]-1H-pyrazole-4-carboxamide, (2.025) 1-methyl-3-(trifluoromethyl)-N-[2'-(trifluoromethyl)biphenyl-2-yl]-1H-pyrazole-4-carboxamide, (2.026) 2-fluoro-6-(trifluoromethyl)-N-(1,1,3-trimethyl-2,3-dihydro-1H-inden-4-yl)benzamide, (2.027) 3-(difluoromethyl)-1-methyl-N-(1,1,3-trimethyl-2,3-dihydro-1H-inden-4-yl)-1H-pyrazole-4-carboxamide, (2.028) inpyrfluxam, (2.029) 3-(difluoromethyl)-1-methyl-N-[(3S)-1,1,3-trimethyl-2,3-dihydro-1H-inden-4-yl]-1H-pyrazole-4-carboxamide, (2.030) fluindapyr, (2.031) 3-(difluoromethyl)-N-[(3R)-7-fluoro-1,1,3-trimethyl-2,3-dihydro-1H-inden-4-yl]-1-methyl-1H-pyrazole-4-carboxamide, (2.032) 3-(difluoromethyl)-N-[(3S)-7-fluoro-1,1,3-trimethyl-2,3-dihydro-1H-inden-4-yl]-1-methyl-1H-pyrazole-4-carboxamide, (2.033) 5,8-difluoro-N-[2-(2-fluoro-4-{[4-(trifluoromethyl)-pyridin-2-yl]oxy}phenyl)ethyl]quinazolin-4-amine, (2.034) N-(2-cyclopentyl-5-fluorobenzyl)-N-cyclopropyl-3-(difluoromethyl)-5-fluoro-1-methyl-1H-pyrazole-4-carboxamide, (2.035) N-(2-tert-butyl-5-methylbenzyl)-N-cyclopropyl-3-(difluoromethyl)-5-fluoro-1-methyl-1H-pyrazole-4-carboxamide, (2.036) N-(2-tert-butylbenzyl)-N-cyclopropyl-3-(difluoromethyl)-5-fluoro-1-methyl-1H-pyrazole-4-carboxamide, (2.037) N-(5-chloro-2-ethylbenzyl)-N-cyclopropyl-3-(difluoromethyl)-5-fluoro-1-methyl-1H-pyrazole-4-carboxamide, (2.038) isoflucypram, (2.039) N-[(1R,4S)-9-(dichloromethylene)-1,2,3,4-tetrahydro-1,4-methanonaphthalen-5-yl]-3-(difluoromethyl)-1-methyl-1H-pyrazole-4-carboxamide, (2.040) N-[(1S,4R)-9-(dichloromethylene)-1,2,3,4-tetrahydro-1,4-methanonaphthalen-5-yl]-3-(difluoromethyl)-1-methyl-1H-pyrazole-4-carboxamide, (2.041) N-[1-(2,4-dichlorophenyl)-1-methoxypropan-2-yl]-3-(difluoromethyl)-1-methyl-1H-pyrazole-4-carboxamide, (2.042) N-[2-chloro-6-(trifluoromethyl)benzyl]-N-cyclopropyl-3-(difluoromethyl)-5-fluoro-1-methyl-1H-pyrazole-4-carboxamide, (2.043) N-[3-chloro-2-fluoro-6-(trifluoromethyl)benzyl]-N-cyclopropyl-3-(difluoromethyl)-5-fluoro-1-methyl-1H-pyrazole-4-carboxamide, (2.044) N-[5-chloro-2-(trifluoromethyl)benzyl]-N-cyclopropyl-3-(difluoromethyl)-5-fluoro-1-methyl-1H-pyrazole-4-carboxamide, (2.045) N-cyclopropyl-3-(difluoromethyl)-5-fluoro-1-methyl-N-[5-methyl-2-(trifluoromethyl)benzyl]-1H-pyrazole-4-carboxamide, (2.046) N-cyclopropyl-3-(difluoromethyl)-5-fluoro-N-(2-fluoro-6-isopropylbenzyl)-1-methyl-1H-pyrazole-4-carboxamide, (2.047) N-cyclopropyl-3-(difluoromethyl)-5-fluoro-N-(2-isopropyl-5-methylbenzyl)-1-methyl-1H-pyrazole-4-carboxamide, (2.048) N-cyclopropyl-3-(difluoromethyl)-5-fluoro-N-(2-isopropylbenzyl)-1-methyl-1H-pyrazole-4-carbothioamide, (2.049) N-cyclopropyl-3-(difluoromethyl)-5-fluoro-N-(2-isopropylbenzyl)-1-methyl-1H-pyrazole-4-carboxamide, (2.050) N-cyclopropyl-3-(difluoromethyl)-5-fluoro-N-(5-fluoro-2-isopropylbenzyl)-1-methyl-1H-pyrazole-4-carboxamide, (2.051) N-cyclopropyl-3-(difluoromethyl)-N-(2-ethyl-4,5-dimethylbenzyl)-5-fluoro-1-methyl-1H-pyrazole-4-carboxamide, (2.052) N-cyclopropyl-3-(difluoromethyl)-N-(2-ethyl-5-fluorobenzyl)-5-fluoro-1-methyl-1H-pyrazole-4-carboxamide, (2.053) N-cyclopropyl-3 -(difluoromethyl)-N-(2-ethyl-5 -methylbenzyl)-5 - fluoro-1-methyl-1H-pyrazole-4-carboxamide, (2.054) N-cyclopropyl-N-(2-cyclopropyl-5-fluorobenzyl)-3-(difluoromethyl)-5-fluoro-1-methyl-1H-pyrazole-4-carboxamide, (2.055) N-cyclopropyl-N-(2-cyclopropyl-5-methylbenzyl)-3-(difluoromethyl)-5-fluoro-1-methyl-1H-pyrazole-4-carboxamide, (2.056) N-cyclopropyl-N-(2-cyclopropylbenzyl)-3-(difluoromethyl)-5-fluoro-1-methyl-1H-pyrazole-4-carboxamide, (2.057) pyrapropoyne, (2.058) N-[rac-(1S,2S)-2-(2,4-dichlorophenyl)cyclobutyl]-2-(trifluoromethyl)-nicotinamide, (2.059) N-[(1S,2S)-2-(2,4-dichlorophenyl)cyclobutyl]-2-(trifluoromethyl)nicotinamide.
3) Inhibitors of the respiratory chain at complex III, for example (3.001) ametoctradin, (3.002) amisulbrom, (3.003) azoxystrobin, (3.004) coumethoxystrobin, (3.005) coumoxystrobin, (3.006) cyazofamid, (3.007) dimoxystrobin, (3.008) enoxastrobin, (3.009) famoxadone, (3.010) fenamidone, (3.011) flufenoxystrobin, (3.012) fluoxastrobin, (3.013) kresoxim-methyl, (3.014) metominostrobin, (3.015) orysastrobin, (3.016) picoxystrobin, (3.017) pyraclostrobin, (3.018) pyrametostrobin, (3.019) pyraoxystrobin, (3.020) trifloxystrobin, (3.021) (2E)-2-{2-[({[(1E)-1-(3-{[(E)-1-fluoro-2-phenylvinyl]oxy}phenyl)ethylidene]amino}oxy)methyl]phenyl}-2-(methoxyimino)-N-methylacetamide, (3.022) (2E,3Z)-5-{[1-(4-chlorophenyl)-1H-pyrazol-3-yl]oxy}-2-(methoxyimino)-N,3-dimethylpent-3-enamide, (3.023) (2R)-2-{2-[(2,5-dimethylphenoxy)methyl]phenyl}-2-methoxy-N-methylacetamide, (3.024) (2S)-2-{2-[(2,5-dimethylphenoxy)methyl]phenyl}-2-methoxy-N-methylacetamide, (3.025) fenpicoxamid, (3.026) mandestrobin, (3.027) N-(3-ethyl-3,5,5-trimethylcyclohexyl)-3-formamido-2-hydroxybenzamide, (3.028) (2E,3Z)-5-{[1-(4-chloro-2-fluorophenyl)-1H-pyrazol-3-yl]oxy}-2-(methoxyimino)-N,3-dimethylpent-3-enamide, (3.029) methyl {5-[3-(2,4-dimethylphenyl)-1H-pyrazol-1-yl]-2-methylbenzyl}carbamate, (3.030) metyltetraprole, (3.031) florylpicoxamid.
4) Inhibitors of the mitosis and cell division, for example (4.001) carbendazim, (4.002) diethofencarb, (4.003) ethaboxam, (4.004) fluopicolide, (4.005) pencycuron, (4.006) thiabendazole, (4.007) thiophanate-methyl, (4.008) zoxamide, (4.009) pyridachlometyl, (4.010) 3-chloro-5-(4-chlorophenyl)-4-(2,6-difluorophenyl)-6-methylpyridazine, (4.011) 3-chloro-5-(6-chloropyridin-3-yl)-6-methyl-4-(2,4,6-trifluorophenyl)pyridazine, (4.012) 4-(2-bromo-4-fluorophenyl)-N-(2,6-difluorophenyl)-1,3-dimethyl-1H-pyrazol-5-amine, (4.013) 4-(2-bromo-4-fluorophenyl)-N-(2-bromo-6-fluorophenyl)-1,3-dimethyl-1H-pyrazol-5-amine, (4.014) 4-(2-bromo-4-fluorophenyl)-N-(2-bromophenyl)-1,3-dimethyl-1H-pyrazol-5-amine, (4.015) 4-(2-bromo-4-fluorophenyl)-N-(2-chloro-6-fluorophenyl)-1,3-dimethyl-1H-pyrazol-5-amine, (4.016) 4-(2-bromo-4-fluorophenyl)-N-(2-chlorophenyl)-1,3-dimethyl-1H-pyrazol-5-amine, (4.017) 4-(2-bromo-4-fluorophenyl)-N-(2-fluorophenyl)-1,3-dimethyl-1H-pyrazol-5-amine, (4.018) 4-(2-chloro-4-fluorophenyl)-N-(2,6-difluorophenyl)-1,3-dimethyl-1H-pyrazol-5-amine, (4.019) 4-(2-chloro-4-fluorophenyl)-N-(2-chloro-6-fluorophenyl)-1,3-dimethyl-1H-pyrazol-5-arnine, (4.020) 4-(2-chloro-4-fluorophenyl)-N-(2-chlorophenyl)-1,3-dimethyl-1H-pyrazol-5-amine, (4.021) 4-(2-chloro-4-fluorophenyl)-N-(2-fluorophenyl)-1,3-dimethyl-1H-pyrazol-5-amine, (4.022) 4-(4-chlorophenyl)-5-(2,6-difluorophenyl)-3,6-dimethylpyridazine, (4.023) N-(2-bromo-6-fluorophenyl)-4-(2-chloro-4-fluorophenyl)-1,3-dimethyl-1H-pyrazol-5-amine, (4.024) N-(2-bromophenyl)-4-(2-chloro-4-fluorophenyl)-1,3-dimethyl-1H-pyrazol-5-amine, (4.025) N-(4-chloro-2,6-difluorophenyl)-4-(2-chloro-4-fluorophenyl)-1,3-dimethyl-1H-pyrazol-5-amine, (4.026) fluopimomide.
5) Compounds capable to have a multisite action, for example (5.001) bordeaux mixture, (5.002) captafol, (5.003) captan, (5.004) chlorothalonil, (5.005) copper hydroxide, (5.006) copper naphthenate, (5.007) copper oxide, (5.008) copper oxychloride, (5.009) copper(2+) sulfate, (5.010) dithianon, (5.011) dodine, (5.012) folpet, (5.013) mancozeb, (5.014) maneb, (5.015) metiram, (5.016) metiram zinc, (5.017) oxine-copper, (5.018) propineb, (5.019) sulfur and sulfur preparations including calcium polysulfide, (5.020) thiram, (5.021) zineb, (5.022) ziram, (5.023) 6-ethyl-5,7-dioxo-6,7-dihydro-5H-pyrrolo [3',4':5,6][1,4]dithiino[2,3-c][1,2]thiazole-3-carbonitrile.
6) Compounds capable to induce a host defence, for example (6.001) acibenzolar-S-methyl, (6.002) isotianil, (6.003) probenazole, (6.004) tiadinil.
7) Inhibitors of the amino acid and/or protein biosynthesis, for example (7.001) cyprodinil, (7.002) kasugamycin, (7.003) kasugamycin hydrochloride hydrate, (7.004) oxytetracycline, (7.005) pyrimethanil, (7.006) 3-(5-fluoro-3,3,4,4-tetramethyl-3,4-dihydroisoquinolin-1-yl)quinoline.
8) Inhibitors of the ATP production, for example (8.001) silthiofam.
9) Inhibitors of the cell wall synthesis, for example (9.001) benthiavalicarb, (9.002) dimethomorph, (9.003) flumorph, (9.004) iprovalicarb, (9.005) mandipropamid, (9.006) pyrimorph, (9.007) valifenalate, (9.008) (2E)-3-(4-tert-butylphenyl)-3-(2-chloropyridin-4-yl)-1-(morpholin-4-yl)prop-2-en-1-one, (9.009) (2Z)-3-(4-tert-butylphenyl)-3-(2-chloropyridin-4-yl)-1-(morpholin-4-yl)prop-2-en-1-one.
10) Inhibitors of the lipid and membrane synthesis, for example (10.001) propamocarb, (10.002) propamocarb hydrochloride, (10.003) tolclofos-methyl.
11) Inhibitors of the melanin biosynthesis, for example (11.001) tricyclazole, (11.002) tolprocarb.
12) Inhibitors of the nucleic acid synthesis, for example (12.001) benalaxyl, (12.002) benalaxyl-M (kiralaxyl), (12.003) metalaxyl, (12.004) metalaxyl-M (mefenoxam).
13) Inhibitors of the signal transduction, for example (13.001) fludioxonil, (13.002) iprodione, (13.003) procymidone, (13.004) proquinazid, (13.005) quinoxyfen, (13.006) vinclozolin.
14) Compounds capable to act as an uncoupler, for example (14.001) fluazinam, (14.002) meptyldinocap.
15) Further fungicides selected from the group consisting of (15.001) abscisic acid, (15.002) benthiazole, (15.003) bethoxazin, (15.004) capsimycin, (15.005) carvone, (15.006) chinomethionat, (15.007) cufraneb, (15.008) cyflufenamid, (15.009) cymoxanil, (15.010) cyprosulfamide, (15.011) flutianil, (15.012) fosetyl-aluminium, (15.013) fosetyl-calcium, (15.014) fosetyl-sodium, (15.015) methyl isothiocyanate, (15.016) metrafenone, (15.017) mildiomycin, (15.018) natamycin, (15.019) nickel dimethyldithiocarbamate, (15.020) nitrothal-isopropyl, (15.021) oxamocarb, (15.022) oxathiapiprolin, (15.023) oxyfenthiin, (15.024) pentachlorophenol and salts, (15.025) phosphorous acid and its salts, (15.026) propamocarb-fosetylate, (15.027) pyriofenone (chlazafenone), (15.028) tebufloquin, (15.029) tecloftalam, (15.030) tolnifanide, (15.031) 1-(4-{4-[(5R)-5-(2,6-difluorophenyl)-4,5-dihydro-1,2-oxazol-3-yl]-1,3-thiazol-2-yl}piperidin-1-yl)-2-[5 -methyl-3-(trifluoromethyl)-1H-pyrazol-1-yl]ethanone, (15.032) 1-(4-{4-[(5S)-5-(2,6-difluorophenyl)-4,5-dihydro-1,2-oxazol-3-yl]-1,3-thiazol-2-yl}piperidin-1-yl)-2-[5-methyl-3-(trifluoromethyl)-1H-pyrazol-1-yl] ethanone, (15.033) 2-(6-benzylpyridin-2-yl)quinazoline, (15.034) dipymetitrone, (15.035) 2-[3,5-bis(difluoromethyl)-1H-pyrazol-1-yl]-1-[4-(4-{5-[2-(prop-2-yn-1-yloxy)phenyl]-4,5-dihydro-1,2-oxazol-3-yl}-1,3-thiazol-2-yl)piperidin-1-yl]ethanone, (15.036) 2-[3,5-bis(difluoromethyl)-1H-pyrazol-1-yl]-1-[4-(4-{5-[2-chloro-6-(prop-2-yn-1-yloxy)phenyl]-4,5-dihydro-1,2-oxazol-3-yl}-1,3-thiazol-2-yl)piperidin-1-yl]ethanone, (15.037) 2-[3,5-bis(difluoromethyl)-1H-pyrazol-1-yl]-1-[4-(4-{5-[2-fluoro-6-(prop-2-yn-1-yloxy)-phenyl]-4,5-dihydro-1,2-oxazol-3-yl}-1,3-thiazol-2-yl)piperidin-1-yl]ethanone, (15.038) 2-[6-(3-fluoro-4-methoxyphenyl)-5-methylpyridin-2-yl]quinazoline, (15.039) 2-{(5R)-3-[2-(1-{[3,5-bis(difluoro-methyl)-1H-pyrazol-1-yl]acetyl}piperidin-4-yl)-1,3-thiazol-4-yl]-4,5-dihydro-1,2-oxazol-5-yl}-3-chlorophenyl methanesulfonate, (15.040) 2-{(5S)-3-[2-(1-{[3,5-bis(difluoromethyl)-1H-pyrazol-1-yl]acetyl}pipendin-4-yl)-1,3-thiazol-4-yl]-4,5-dihydro-1,2-oxazol-5-yl}-3-chlorophenyl methanesulfonate, (15.041) ipflufenoquin, (15.042) 2-{2-fluoro-6-[(8-fluoro-2-methylquinolin-3-yl)oxy]phenyl}propan-2-ol, (15.043) fluoxapiprolin, (15.044) 2-{3-[2-(1-{[3,5-bis(difluoromethyl)-1H-pyrazol-1-yl]acetyl}piperidin-4-yl)-1,3-thiazol-4-yl]-4,5-dihydro-1,2-oxazol-5-yl}phenyl methanesulfonate, (15.045) 2-phenylphenol and salts, (15.046) 3-(4,4,5-trifluoro-3,3-dimethyl-3,4-dihydroisoquinolin-1-yl)quinoline, (15.047) quinofumelin, (15.048) 4-amino-5-fluoropyrimidin-2-ol (tautomeric form: 4-amino-5-fluoropyrimidin-2(1H)-one), (15.049) 4-oxo-4-[(2-phenylethyl)amino]butanoic acid, (15.050) 5-amino-1,3,4-thiadiazole-2-thiol, (15.051) 5-chloro-N'-phenyl-N'-(prop-2-yn-1-yl)thiophene-2-sulfonohydrazide, (15.052) 5-fluoro-2-[(4-fluorobenzyl)oxy]-pyrimidin-4-amine, (15.053) 5-fluoro-2-[(4-methylbenzyl)oxy]pyrimidin-4-amine, (15.054) 9-fluoro-2,2-dimethyl-5-(quinolin-3-yl)-2,3-dihydro-1,4-benzoxazepine, (15.055) but-3-yn-1-yl {6-[({[(Z)-(1-methyl-1H-tetrazol-5-yl)(phenyl)methylene]amino}oxy)methyl]pyridin-2-yl}carbamate, (15.056) ethyl (2Z)-3-amino-2-cyano-3-phenylacrylate, (15.057) phenazine-1-carboxylic acid, (15.058) propyl 3,4,5-trihydroxybenzoate, (15.059) quinolin-8-ol, (15.060) quinolin-8-ol sulfate (2:1), (15.061) tert-butyl {6-[({[(1-methyl-1H-tetrazol-5-yl)(phenyl)methylene]amino}oxy)methyl]pyridin-2-yl}carbamate, (15.062) 5-fluoro-4-imino-3-methyl-1-[(4-methylphenyl)sulfonyl]-3,4-dihydropyrimidin-2(1H)-one, (15.063) aminopyrifen, (15.064) (N'-[2-chloro-4-(2-fluorophenoxy)-5-methylphenyl]-N-ethyl-N-methylimido-formamide), (15.065) (N'-(2-chloro-5-methyl-4-phenoxyphenyl)-N-ethyl-N-methylimidoformamide), (15.066) (2-{2-[(7,8-difluoro-2-methylquinolin-3 -yl)oxy]-6-fluorophenyl }propan-2-ol), (15.067) (5-bromo-1-(5,6-dimethylpyridin-3-yl)-3,3-dimethyl-3,4-dihydroisoquinoline), (15.068) (3-(4,4-difluoro-5,5 -dimethyl-4,5 -dihydrothieno [2,3 - c]pyridin-7-yl)quinoline), (15.069) (1-(4,5-dimethyl-1H-benzimidazol-1-yl)-4,4-difluoro-3,3-dimethyl-3,4-dihydroisoquinoline), (15.070) 8-fluoro-3-(5-fluoro-3,3-dimethyl-3,4-dihydroisoquinolin-1-yl)quinolone, (15.071) 8-fluoro-3-(5-fluoro-3,3,4,4-tetramethyl-3,4-dihydroisoquinolin-1-yl)quinolone, (15.072) 3 -(4,4-difluoro-3,3-dimethyl-3,4-dihydroisoquinolin-1-yl)-8-fluoroquinoline, (15.073) (N-methyl-N-phenyl-4-[5-(trifluoromethyl)-1,2,4-oxadiazol-3-yl]benzamide), (15.074) methyl {4-[5-(trifluoromethyl)-1,2,4-oxadiazol-3-yl]phenyl}carbamate, (15.075) (N-{4-[5-(trifluoromethyl)-1,2,4-oxadiazol-3-yl]benzyl}cyclopropanecarboxamide), (15.076) N-methyl-4-(5-(trifluoromethyl)-1,2,4-oxadiazol-3-yl]benzamide, (15.077) N-[(E)-methoxyimino-methyl]-4-[5-(trifluoromethyl)-1,2,4-oxadiazol-3-yl]benzamide, (15.078) N-[(Z)-methoxyiminomethyl]-4-[5-(trifluoromethyl)-1,2,4-oxadiazol-3-yl]benzamide, (15.079) N-[4- [5 - (trifluoromethyl)-1,2,4-oxadiazol-3-yl]phenyl]cyclopropanecarboxamide, (15.080) N-(2-fluorophenyl)-4-[5-(trifluoromethyl)-1,2,4-oxadiazol-3-yl]benzamide, (15.081) 2,2-difluoro-N-methyl-2-[4-[5-(trifluoromethyl)-1,2,4-oxadiazol-3-yl]phenyl]acetamide, (15.082) N-allyl-N-[[4-[5-(trifluoromethyl)-1,2,4-oxadiazol-3-yl)phenyl]methyl]acetamide, (15.083) N-[(E)-N-methoxy-C-methyl-carbonimidoyl]-4-(5-(trifluoro-methyl)-1,2,4-oxadiazol-3-yl]benzamide, (15.084) N-[(Z)-N-methoxy-C-methyl-carbonimidoyl]-4-[5-(trifluoromethyl)-1,2,4-oxadiazol-3-yl]benzamide, (15.085) N-allyl-N-[[4-[5-(trifluoromethyl)-1,2,4-oxadiazol-3-yl]phenyl]methyl]propanamide, (15.086) 4,4-dimethyl-1-[[4-[5-(trifluoromethyl)-1,2,4-oxadiazol-3-yl]phenyl]methyl]pyrrolidin-2-one, (15.087) N-methyl-4-[5-(trifluoromethyl)-1,2,4-oxadiazol-3-yl]benzenecarbothioamide, (15.088) 5-methyl-1-[[4-[5-(trifluoromethyl)-1,2,4-oxadiazol-3-yl]phenyl]methyl]pyrrolidin-2-one, (15.089) N-((2,3-difluoro-4-[5-(trifluoromethyl)-1,2,4-oxadiazol-3-yl]phenyl]methyl]-3,3,3-trifluoro-propanamide, (15.090) 1-methoxy-1-methyl-3-[[4-[5-(trifluoro-methyl}-1,2,4-oxadiazol-3-yl]phenyl]methyl]urea, (15.091) 1,1-diethyl-3-[[4-[5-(trifluoromethyl}-1,2,4-oxadiazol-3-yl]phenyl]methyl]urea, (15.092) N-[[4-[5-(trifluoromethyl)-1,2,4-oxadiazol-3-yl]phen-yl]methyl]propanamide, (15.093) N-methoxy-N-[[4-[5-(trifluoromethyl)-1,2,4-oxadiazol-3-yl]phenyl]-methyl]cyclopropanecarboxamide, (15.094) 1-methoxy-3-methyl-1-[[4-[5-(trifluoromethyl)-1,2,4-oxadiazol-3-yl]phenyl]methyl]urea, (15.095) N-methoxy-N-[[4-[5-(trifluoromethyl)-1,2,4-oxadiazol-3-yl]phenyl]methyl)cyclopropanecarboxamide, (15.096) N,2-dimethoxy-N-[[4-[5-(trifluoromethyl}-1,2,4-oxadiazol-3-yl]phenyl]methyl]propanamide, (15.097) N-ethyl-2-methyl-N-[[4-[5-(trifluoromethyl)-1,2,4-oxadiazol-3-yl)phenyl]methyl]propanamide, (15.098) 1-methoxy-3-methyl-1-[[4-[5-(trifluoro-methyl)-1,2,4-oxadiazol-3-yl]phenyl]methyl]urea, (15.099) 1,3-dimethoxy-1-[[4-[5-(trifluoromethyl)-1,2,4-oxadiazol-3 -yl]phenyl]methyl]urea, (15.100) 3 -ethyl-1-methoxy-1-[[4-[5-(trifluoromethyl)-1,2,4-oxadiazol-3-yl]phenyl]methyl]urea, (15.101) 1-[[4-[5-(trifluoromethyl)-1,2,4-oxadiazol-3-yl]phenyl]-methyl]piperidin-2-one, (15.102) 4,4-dimethyl-2-[[4-[5-(trifluoromethyl)-1,2,4-oxadiazol-3-yl]phenyl]-methyl]isooxazolidin-3-one, (15.103) 5,5-dimethyl-2-[[4-[5-(trifluoromethyl)-1,2,4-oxadiazol-3 -yl]phenyl]methyl]isoxazolidin-3 -one, (15.104) 3,3-dimethyl-1-[[4-[5-(trifluoromethyl)-1,2,4-oxadiazol-3-yl]phenyl]methyl]piperidin-2-one, (15.105) 1-[[3-fluoro-4-(5-(trifluoromethyl)-1,2,4-oxadiazol-3-yl]-phenyl]methyl]azepan-2-one, (15.106) 4,4-dimethyl-2-[[4-(5-(trifluoromethyl)-1,2,4-oxadiazol-3-yl]-phenyl]methyl]isoxazolidin-3-one, (15.107) 5,5-dimethyl-2-[[4-[5-(trifluoromethyl)-1,2,4-oxadiazol-3-yl]phenyl]methyl]isoxazolidin-3-one, (15.108) ethyl 1-{4-[5-(trifluoromethyl)-1,2,4-oxadiazol-3-yl]benzyl}-1H-pyrazole-4-carboxylate, (15.109) N,N-dimethyl-1-{4-[5-(trifluoromethyl)-1,2,4-oxadiazol-3-yl]benzyl}-1H-1,2,4-triazol-3-amine, (15.110) N-{2,3-difluoro-4-[5-(trifluoromethyl)-1,2,4-oxadiazol-3-yl]benzyl}butanamide, (15.111) N-(1-methylcyclopropyl)-4-[5-(trifluoromethyl)-1,2,4-oxadiazol-3-yl]benzamide, (15.112) N-(2,4-difluorophenyl)-4-[5-(trifluoromethyl)-1,2,4-oxadiazol-3-yl]benzamide, (15.113) 1-(5,6-dimethylpyridin-3-yl)-4,4-difluoro-3,3-dimethyl-3,4-dihydroisoquinoline, (15.114) 1-(6-(difluoromethyl)-5-methyl-pyridin-3-yl)-4,4-difluoro-3,3-dimethyl-3,4-dihydro-isoquinoline, (15.115) 1-(5-(fluoromethyl)-6-methyl-pyridin-3-yl)-4,4-difluoro-3,3-dimethyl-3,4-dihydroisoquinoline, (15.116) 1-(6-(difluoromethyl)-5-methoxy-pyridin-3-yl)-4,4-difluoro-3,3-dimethyl-3,4-dihydroisoquinoline, (15.117) 4-[5-(trifluoromethyl)-1,2,4-oxadiazol-3-yl]phenyl dimethyl-carbamate, (15.118) N-{4-[5-(trifluoromethyl)-l,2,4-oxadiazol-3-yl]phenyl}propanamide, (15.119) 3-[2-(1-{[5-methyl-3-(trifluoromethyl)-1H-pyrazol-1-yl]acetyl}piperidin-4-yl)-1,3-thiazol-4-yl]-1,5-dihydro-2,4-benzodioxepin-6-yl methane sulfonate, (15.120) 9-fluoro-3-[2-(1-{[5-methyl-3-(trifluoromethyl)-1H-pyrazol-1-yl]acetyl}piperidin-4-yl)-1,3-thiazol-4-yl]-1,5-dihydro-2,4-benzodioxepin-6-yl methanesulfonate, (15.121) 3-[2-(1-{[3,5-bis(difluoromethyl)-1H-pyrazol-1-yl]acetyl}piperidin-4-yl)-1,3-thiazol-4-yl]-1,5-dihydro-2,4-benzodioxepin-6-yl methanesulfonate, (15.122) 3-[2-(1-{[3,5-bis(difluoromethyl)-1H-pyrazol-1-yl]acetyl}piperidin-4-yl)-1,3-thiazol-4-yl]-9-fluoro-1,5-dihydro-2,4-benzodioxepin-6-yl methanesulfonate, (15.123) 1-(6,7-dimethylpyrazolo[1,5-a]pyridin-3-yl)-4,4-difluoro-3,3-dimethyl-3,4-dihydroisoquinoline, (15.124) 8-fluoro-N-(4,4,4-trifluoro-2-methyl-1-phenylbutan-2-yl)quinoline-3-carboxamide, (15.125) 8-fluoro-N-[(2S)-4,4,4-trifluoro-2-methyl-1-phenylbutan-2-yl]quinoline-3-carboxamide, (15.126) N-(2,4-dimethyl-1-phenylpentan-2-yl)-8-fluoroquinoline-3-carboxamide and (15.127) N-[(2S)-2,4-dimethyl-1-phenylpentan-2-yl]-8-fluoroquinoline-3 -carboxamide.

Examples of insecticides (a) according to the invention are:
(1) Acetylcholinesterase(AChE)-inhibitors, e.g. Carbamates Alanycarb, Aldicarb, Bendiocarb, Benfuracarb, Butocarboxim, Butoxycarboxim, Carbaryl, Carbofuran, Carbosulfan, Ethiofencarb, Fenobucarb, Formetanate, Furathiocarb, Isoprocarb, Methiocarb, Methomyl, Metolcarb, Oxamyl, Pirimicarb, Propoxur, Thiodicarb, Thiofanox, Triazamate, Trimethacarb, XMC and an Xylylcarb, or organophosphates , e.g. Acephat, Azamethiphos, Azinphos-ethyl, Azinphos-methyl, Cadusafos, Chlorethoxyfos, Chlorfenvinphos, Chlormephos, Chlorpyrifos-methyl, Coumaphos, Cyanophos, Demeton-S-methyl, Diazinon, Dichlorvos/DDVP, Dicrotophos, Dimethoat, Dimethylvinphos, Disulfoton, EPN, Ethion, Ethoprophos, Famphur, Fenamiphos, Fenitrothion, Fenthion, Fosthiazat, Heptenophos, Imicyafos, Isofenphos, Isopropyl-O-(methoxyaminothio-phosphoryl)salicylat, Isoxathion, Malathion, Mecarbam, Methamidophos, Methidathion, Mevinphos, Monocrotophos, Naled, Omethoate, Oxydemeton-methyl, Parathion-methyl, Phenthoat, Phorat, Phosalon, Phosmet, Phosphamidon, Phoxim, Pirimiphos-methyl, Profenofos, Propetamphos, Prothiofos, Pyraclofos, Pyridaphenthion, Quinalphos, Sulfotep, Tebupirimfos, Temephos, Terbufos, Tetrachlorvinphos, Thiometon, Triazophos, Triclorfon and and Vamidothion.
(2) GABA-gated chloride channel antagonists, preferably Cyclodien-organochlorine selected from the group of Chlordan and Endosulfan, or Phenylpyrazole (Fiprole) selected from Ethiprol and Fipronil.
(3) Sodium channel modulators / voltage-dependent sodium channel blockers, for example pyrethroids, e.g. Acrinathrin, Allethrin, d-cis-trans Allethrin, d-trans Allethrin, Bifenthrin, Bioallethrin, Bioallethrin S-cyclopentenyl isomer, Bioresmethrin, Cycloprothrin, Cyfluthrin, beta-Cyfluthrin, Cyhalothrin, lambda-Cyhalothrin, gamma-Cyhalothrin, Cypermethrin, alpha-Cypermethrin, beta-Cypermethrin, theta-Cypermethrin, zeta-Cypermethrin, Cyphenothrin [(1R)-trans isomers], Deltamethrin, Empenthrin [(EZ)-(1R) isomers), Esfenvalerate, Etofenprox, Fenpropathrin, Fenvalerate, Flucythrinate, Flumethrin, tau-Fluvalinate, Halfenprox, Imiprothrin, Kadethrin, Momfluorothrin, Permethrin, Phenothrin [(1R)-trans isomer), Prallethrin, Pyrethrine (pyrethrum), Resmethrin, Silafluofen, Tefluthrin, Tetramethrin, Tetramethrin [(1R) isomers)], Tralomethrin and Transfluthrin or DDT or Methoxychlor.
(4) Nicotinic acetylcholine receptor (nAChR) competitive activators, preferably Neonicotinoids selected from Acetamiprid, Clothianidin, Dinotefuran, Imidacloprid, Nitenpyram, Thiacloprid and Thiamethoxam, or Nicotin, or Sulfoximine selected from Sulfoxaflor, or Butenolide selected from Flupyradifurone, or Mesoionics selected from Triflumezopyrim.
(5) Nicotinic acetylcholine receptor (nAChR) allosteric activators, preferably Spinosynes selected from Spinetoram and Spinosad.
(6) Allosteric modulators of the glutamate-dependent chloride channel (GluCl), preferablyAvermectine/Milbemycine selected from Abamectin, Emamectin-benzoate, Lepimectin and Milbemectin.
(7) Juvenile hormone mimetics, preferably Juvenile hormon-analogs selected from Hydropren, Kinopren and Methopren, or Fenoxycarb or Pyriproxyfen.
(8) Various non-specific (multi-site) inhibitors, preferably Alkylhalogenides selected from Methylbromide and other Alkylhalogenides, or Chloropicrin or Sulfurylfluorid or Borax or Tartar emetic or Methylisocyanate generators selected from Diazomet and Metam.
(9) TRPV channel modulators of chordotonal organs selected from Pymetrozin and Pyrifluquinazon.
(10) Mite growth inhibitors selected from Clofentezin, Hexythiazox, Diflovidazin and Etoxazol.
(11) Microbial disruptors of the insect intestinal membrane selected from Bacillus thuringiensis Subspezies israelensis, Bacillus sphaericus, Bacillus thuringiensis Subspezies aizawai, Bacillus thuringiensis Subspezies kurstaki, Bacillus thuringiensis subspecies tenebrionis and B.t.-plant proteins selected from Cry1Ab, Cry1Ac, Cry1Fa, Cry1A.105, Cry2Ab, VIP3A, mCry3A, Cry3Ab, Cry3Bb and Cry34Ab1/35Ab1_{.}
(12) Mitochondrial ATP synthase inhibitors, preferably ATP-disruptors selected from Diafenthiuron, or Organo-tin-compoiunds selected from Azocyclotin, Cyhexatin and Fenbutatin-oxid, or Propargit or Tetradifon.
(13) Decoupler of oxidative phosphorylation by disturbance of the proton gradient selected from Chlorfenapyr, DNOC and Sulfluramid.
(14) Nicotinic acetylcholine receptor channel blocker selected from Bensultap, Cartap-hydrochlorid, Thiocyclam and Thiosultap-Sodium.
(15) Inhibitors of chitin biosynthesis, Typ 0, selected from Bistrifluron, Chlorfluazuron, Diflubenzuron, Flucycloxuron, Flufenoxuron, Hexaflumuron, Lufenuron, Novaluron, Noviflumuron, Teflubenzuron and Triflumuron.
(16) Inhibitors of chitin biosynthesis, Typ 1 selected from Buprofezin.
(17) Molting disruptor (especially dipteras, i.e. two-winged insects) selected from Cyromazin.
(18) Ecdyson receptor agonists selected from Chromafenozid, Halofenozid, Methoxyfenozid and Tebufenozid.
(19) Octopamin-receptor-agonists selected from Amitraz.
(20) Mitochondrial complex III electron transport inhibitors selected from Hydramethylnon, Acequinocyl and Fluacrypyrim.
(21) Mitochondrial complex I electron transport inhibitors, preferably so-called METI-acaricides selected from Fenazaquin, Fenpyroximat, Pyrimidifen, Pyridaben, Tebufenpyrad and Tolfenpyrad, or Rotenon (Derris).
(22) Blocker of the voltage-dependent sodium channel selected from Indoxacarb and Metaflumizone.
(23) Inhibitors of acetyl-CoA carboxylase, preferably tetronic and tetramic acid derivatives selected from Spirodiclofen, Spiromesifen, Spirotetramat and Spidoxamate (IUPAC Name: 11-(4-chloro-2,6-xylyl)-12-hydroxy-1,4-dioxa-9-azadispiro[4.2.42]tetradec-11-en-10-one).
(24) Mitochondrial complex IV electron transport inhibitors, preferably Phosphines selected from Aluminiumphosphid, Calciumphosphid, Phosphin and Zinkphosphid, or Cyanides selected from Calciumcyanid, Potassiumcyanid and Sodiumcyanid.
(25) Mitochondrial complex II electron transport inhibitors, preferablybeta-Ketonitrilderivate selected from Cyenopyrafen and Cyflumetofen, or Carboxanilide selected from Pyflubumid.
(28) Ryanodinreceptor-modulators, preferably Diamide selected from Chlorantraniliprol, Cyantraniliprol and Flubendiamid.
(29) Modulators of chordotonal organs (with undefined target structure) selected from Flonicamid.
(30) other active ingredients selected from Acynonapyr, Afidopyropen, Afoxolaner, Azadirachtin, Benclothiaz, Benzoximat, Benzpyrimoxan, Bifenazat, Broflanilid, Bromopropylat, Chinomethionat, Chloroprallethrin, Cryolit, Cyclaniliprol, Cycloxaprid, Cyhalodiamid, Dicloromezotiaz, Dicofol, Dimpropyridaz, epsilon-Metofluthrin, epsilon-Momfluthrin, Flometoquin, Fluazaindolizin, Fluensulfon, Flufenerim, Flufenoxystrobin, Flufiprol, Fluhexafon, Fluopyram, Flupyrimin, Fluralaner, Fluxametamid, Fufenozid, Guadipyr, Heptafluthrin, Imidaclothiz, Iprodione, Isocycloseram, kappa-Bifenthrin, kappa-Tefluthrin, Lotilaner, Meperfluthrin, Oxazosulfyl, Paichongding, Pyridalyl, Pyrifluquinazon, Pyriminostrobin, Spirobudiclofen, Spiropidion, Tetramethylfluthrin, Tetraniliprol, Tetrachlorantraniliprol, Tigolaner, Tioxazafen, Thiofluoximat and Iodmethan; products from Bacillus firmus (1-1582, BioNeem, Votivo), as well as following compounds: 1-{2-Fluor-4-methyl-5-[(2,2,2-trifluorethyl)sulfinyl]phenyl}-3-(trifluormethyl)-1H-1,2,4-triazol-5-amin (known from WO2006/043635) (CAS 885026-50-6), {1'-[(2E)-3-(4-Chlorphenyl)prop-2-en-1-yl]-5-fluorspiro [indol-3,4'-piperidin]-1(2H)-yl}(2-chlorpyridin-4-yl)methanon (known from WO2003/106457) (CAS 637360-23-7), 2-Chlor-N-[2-{1-[(2E)-3-(4-chlorphenyl)prop-2-en-1-yl]piperidin-4-yl}-4-(trifluormethyl)phenyl]isonicotinamid (known from WO2006/003494) (CAS 872999-66-1), 3-(4-Chlor-2,6-dimethylphenyl)-4-hydroxy-8-methoxy-1,8-diazaspiro[4.5]dec-3-en-2-on (known from WO 2010052161) (CAS 1225292-17-0), 3-(4-Chlor-2, 6-dimethylphenyl)-8-methoxy-2-oxo-1,8-diazaspiro[4.5]dec-3-en-4-yl-ethylcarbonat (known from EP 2647626) (CAS-1440516-42-6), 4-(But-2-in-1-yloxy)-6-(3,5-dimethylpiperidin-1-yl)-5-fluorpyrimidin (known from WO2004/099160) (CAS 792914-58-0), PF1364 (known from JP2010/018586) (CAS-Reg.No. 1204776-60-2), (3E)-3-[1-[(6-Chlor-3-pyridyl)methyl]-2-pyridyliden]-1,1,1-trifluorpropan-2-on (known from WO2013/144213) (CAS 1461743-15-6), N-[3-(Benzylcarbamoyl)-4-chlorphenyl]-1-methyl-3-(pentafluorethyl)-4-(trifluormethyl)-1H-pyrazol-5-carboxamid (known from WO2010/051926) (CAS 1226889-14-0), 5-Brom-4-chlor-N-[4-chlor-2-methyl-6-(methylcarbamoyl)phenyl]-2-(3-chlor-2-pyridyl)pyrazol-3-carboxamid (known from CN103232431) (CAS 1449220-44-3), 4-[5-(3,5-Dichlorphenyl)-4,5-dihydro-5-(trifluormethyl)-3-isoxazolyl]-2-methyl-N-(cis-1-oxido-3-thietanyl)benzamid, 4-[5-(3,5-Dichlorphenyl)-4,5-dihydro-5-(trifluormethyl)-3-isoxazolyl]-2-methyl-N-(trans-1-oxido-3-thietanyl)benzamid and 4-[(5S)-5-(3,5-Dichlorphenyl)-4,5-dihydro-5-(trifluormethyl)-3-isoxazolyl]-2-methyl-N-(cis-1-oxido-3-thietanyl)benzamid (known from WO 2013/050317 A1) (CAS 1332628-83-7), N-[3-Chlor-1-(3-pyridinyl)-1H-pyrazol-4-yl]-N-ethyl-3-[(3,3,3-trifluorpropyl)sulfinyl]propanamid, (+)-N-[3-Chlor-1-(3-pyridinyl)-1H-pyrazol-4-yl]-N-ethyl-3-[(3,3,3-trifluorpropyl)sulfinyl]propanamid and (-)-N-[3-Chlor-1-(3-pyridinyl)-1H-pyrazol-4-yl]-N-ethyl-3-[(3,3,3-trifluorpropyl)sulfinyl]propanamid (known from WO 2013/162715 A2, WO 2013/162716 A2, US 2014/0213448 A1) (CAS 1477923-37-7), 5-[[(2E)-3-Chlor-2-propen-1-yl]amino]-1-[2,6-dichlor-4-(trifluormethyl)phenyl]-4-[(trifluormethyl)sulfinyl]-1H-pyrazol-3-carbonitrile (known from CN 101337937 A) (CAS 1105672-77-2), 3-Brom-N-[4-chlor-2-methyl-6-[(methylamino)thioxomethyl]phenyl]-1-(3-chlor-2-pyridinyl)-1H-pyrazol-5-carboxamid, (Liudaibenjiaxuanan, known from CN 103109816 A) (CAS 1232543-85-9); N-[4-Chlor-2-[[(1,1-dimethylethyl)amino]carbonyl]-6-methylphenyl]-1-(3-chlor-2-pyridinyl)-3-(fluormethoxy)-1H-pyrazol-5-carboxamid (known from WO 2012/034403 A1) (CAS 1268277-22-0), N-[2-(5-Amino-1,3,4-thiadiazol-2-yl)-4-chlor-6-methylphenyl]-3-brom-1-(3-chlor-2-pyridinyl)-1H-pyrazol-5-carboxamid (known from WO 2011/085575 A1) (CAS 1233882-22-8), 4-[3-[2,6-Dichlor-4-[(3,3-dichlor-2-propen-1-yl)oxy]phenoxy]propoxy]-2-methoxy-6-(trifluormethyl)pyrimidin (known from CN 101337940 A) (CAS 1108184-52-6); (2E)- and 2(Z)-2-[2-(4-Cyanophenyl)-1-[3-(trifluormethyl)phenyl]ethyliden]-N-[4-(difluormethoxy)phenyl]hydrazincarboxamid (known from CN 101715774 A) (CAS 1232543-85-9); Cyclopropancaibonsäure-3-(2,2-dichlorethenyl)-2,2-dimethyl-4-(1H-benzimidazol-2-yl)phenylester (known from CN 103524422 A) (CAS 1542271-46-4); (4aS)-7-Chlor-2,5-dihydro-2-[[(methoxycarbonyl)[4-[(trifluormethyl)thio]phenyl]amino]carbonyl]indeno[1,2-e][1,3,4]oxadiazin-4a(3H)-carbonsäuremethylester (known from CN 102391261 A) (CAS 1370358-69-2); 6-Desoxy-3-O-ethyl-2,4-di-O-methyl-1-[N-[4-[1-[4-(1,1,2,2,2-pentafluorethoxy)phenyl]-1H-1,2,4-triazol-3-yl]phenyl]carbamat]-α-L-mannopyranose (known from US 2014/0275503 A1) (CAS 1181213-14-8); 8-(2-Cyclopropylmethoxy-4-trifluormethylphenoxy)-3-(6-trifluormethylpyridazin-3-yl)-3-azabicyclo[3.2.1]octan (CAS 1253850-56-4), (8-anti)-8-(2-Cyclopropylmethoxy-4-trifluormethylphenoxy)-3-(6-trifluormethylpyridazin-3-yl)-3-azabicyclo[3.2.1]octan (CAS 933798-27-7), (8-syn)-8-(2-Cyclopropylmethoxy-4-trifluormethylphenoxy)-3-(6-trifluormethylpyridazin-3-yl)-3-azabicyclo[3.2.1]octan (known from WO 2007040280 A1, WO 2007040282 A1) (CAS 934001-66-8), N-[3-Chlor-1-(3-pyridinyl)-1H-pyrazol-4-yl]-N-ethyl-3-[(3,3,3-trifluorpropyl)thio]-propanamid (known from WO 2015/058021 A1, WO 2015/058028 A1) (CAS 1477919-27-9) and N-[4-(Aminothioxomethyl)-2-methyl-6-[(methylamino)carbonyl]phenyl]-3-bromo-1-(3-chloro-2-pyridinyl) - 1H-pyrazol-5-carboxamid (known from CN 103265527 A) (CAS 1452877-50-7), 5-(1,3-Dioxan-2-yl)-4-[[4-(trifluormethyl)phenyl]methoxy]-pyrimidin (known from WO 2013/115391 A1) (CAS 1449021-97-9), 3-(4-Chlor-2,6-dimethylphenyl)-8-methoxy-1-methyl-1,8-diazaspiro[4.5]decane-2,4-dion (known from WO 2014/187846 A1) (CAS 1638765-58-8), 3-(4-Chlor-2,6-dimethylphenyl)-8-methoxy-1-methyl-2-oxo-1,8-diazaspiro[4.5]dec-3-en-4-yl-carbonsäureethylester (known from WO 2010/066780 A1, WO 2011151146 A1) (CAS 1229023-00-0), 4-[(5S)-5-(3,5-Dichlor-4-fluorophenyl) -4,5-dihydro-5-(trifluoromethyl)-3-isoxazolyl]-N-[(4R)-2-ethyl-3-oxo-4-isoxazolidinyl]-2-methyl-benzamid (known from WO 2011/067272, WO2013/050302) (CAS 1309959-62-3).

Examples of herbicides a) according to the invention are:
Acetochlor, acifluorfen, acifluorfen-sodium, aclonifen, alachlor, allidochlor, alloxydim, alloxydim-sodium, ametryn, amicarbazone, amidochlor, amidosulfuron, 4-amino-3-chloro-5-fluoro-6-(7-fluoro-lH-indol-6-yl)pyridine-2-carboxylic acid, aminocyclopyrachlor, aminocyclopyrachlor-potassium, aminocyclopyrachlor-methyl, aminopyralid, amitrole, ammoniumsulfamate, anilofos, asulam, atrazine, azafenidin, azimsulfuron, beflubutamid, benazolin, benazolin-ethyl, benfluralin, benfuresate, bensulfuron, bensulfuron-methyl, bensulide, bentazone, benzobicyclon, benzofenap, bicyclopyron, bifenox, bilanafos, bilanafos-sodium, bispyribac, bispyribac-sodium, bixlozone, bromacil, bromobutide, bromofenoxim, bromoxynil, bromoxynil-butyrate, -potassium, -heptanoate, and -octanoate, busoxinone, butachlor, butafenacil, butamifos, butenachlor, butralin, butroxydim, butylate, cafenstrole, carbetamide, carfentrazone, carfentrazone-ethyl, chloramben, chlorbromuron, 1-{2-chloro-3-[(3-cyclopropyl-5-hydroxy-1-methyl-1H-pyrazol-4-yl)carbonyl]-6-(trifluormethyl)phenyl}piperidin-2-on, 4-{2-chloro-3-[(3,5-dimethyl-1H-pyrazol-1-yl)methyl]-4-(methylsulfonyl)benzoyl}-1,3-dimethyl-1H-pyrazol-5-yl-1,3-dimethyl-1H-pyrazol-4-carboxylat, chlorfenac, chlorfenac-sodium, chlorfenprop, chlorflurenol, chlorflurenol-methyl, chloridazon, chlorimuron, chlorimuron-ethyl, 2-[2-chloro-4-(methylsulfonyl)-3-(morpholin-4-ylmethyl)benzoyl]-3-hydroxycyclohex-2-en-1-on, 4-{2-chloro-4-(methylsulfonyl)-3-[(2,2,2-trifluorethoxy)methyl]benzoyl}-1-ethyl-1H-pyrazol-5-yl-1,3-dimethyl-1H-pyrazol-4-carboxylat, chlorophthalim, chlorotoluron, chlorthal-dimethyl, 3-[5-chloro-4-(trifluormethyl)pyridine-2-yl]-4-hydroxy-1-methylimidazolidine-2-on, chlorsulfuron, cinidon, cinidon-ethyl, cinmethylin, cinosulfuron, clacyfos, clethodim, clodinafop, clodinafop-propargyl, clomazone, clomeprop, clopyralid, cloransulam, cloransulam-methyl, cumyluron, cyanamide, cyanazine, cycloate, cyclopyranil, cyclopyrimorate, cyclosulfamuron, cycloxydim, cyhalofop, cyhalofop-butyl, cyprazine, 2,4-D, 2,4-D-butotyl, -butyl, - dimethylammonium, -diolamin, -ethyl, -2-ethylhexyl, -isobutyl, -isooctyl, -isopropylammonium, - potassium, -triisopropanolammonium, and -trolamine, 2,4-DB, 2,4-DB-butyl, -dimethylammonium, - isooctyl, -potassium, and -sodium, daimuron (dymron), dalapon, dazomet, n-decanol, desmedipham, detosyl-pyrazolate (DTP), dicamba, dichlobenil, dichlorprop, dichlorprop-P, diclofop, diclofop-methyl, diclofop-P-methyl, diclosulam, difenzoquat, diflufenican, diflufenzopyr, diflufenzopyr-sodium, dimefuron, dimepiperate, dimethachlor, dimethametryn, dimethenamid, dimethenamid-P, 3-(2,6-dimethylphenyl)-6-[(2-hydroxy-6-oxocyclohex-1-en-1-yl)carbonyl]-1-methylchinazolin-2,4(1H,3H)-dion, 1,3-dimethyl-4-[2-(methylsulfonyl)-4-(trifluormethyl)benzoyl]-1H-pyrazol-5-yl-1,3-dimethyl-1H-pyrazol-4-carboxylat, dimetrasulfuron, dinitramine, dinoterb, diphenamid, diquat, diquat-dibromid, dithiopyr, diuron, DMPA, DNOC, endothal, EPTC, esprocarb, ethalfluralin, ethametsulfuron, ethametsulfuron-methyl, ethiozin, ethofumesate, ethoxyfen, ethoxyfen-ethyl, ethoxysulfuron, etobenzanid, ethyl-[(3-{2-chloro-4-fluoro-5-[3-methyl-2,6-dioxo-4-(trifluormethyl)-3,6-dihydropyrimidin-1(2H)-yl]phenoxy}pyridin-2-yl)oxy]acetat, F-9960, F-5231, i.e. N-{2-chloro-4-fluoro-5-[4-(3-fluoropropyl)-5-oxo-4,5-dihydro-1H-tetrazol-1-yl]phenyl}ethanesulfonamide, F-7967, i. e. 3-[7-chloro-5-fluoro-2-(trifluoromethyl)-1H-benzimidazol-4-yl]-1-methyl-6-(trifluoromethyl)pyrimidine-2,4(1H,3H)-dione, fenoxaprop, fenoxaprop-P, fenoxaprop-ethyl, fenoxaprop-P-ethyl, fenoxasulfone, fenquinotrione, fentrazamide, flamprop, flamprop-M-isopropyl, flamprop-M-methyl, flazasulfuron, florasulam, fluazifop, fluazifop-P, fluazifop-butyl, fluazifop-P-butyl, flucarbazone, flucarbazone-sodium, flucetosulfuron, fluchloralin, flufenacet, flufenpyr, flufenpyr-ethyl, flumetsulam, flumiclorac, flumiclorac-pentyl, flumioxazin, fluometuron, flurenol, flurenol-butyl, -dimethylammonium and -methyl, fluoroglycofen, fluoroglycofen-ethyl, flupropanate, flupyrsulfuron, flupyrsulfuron-methyl-sodium, fluridone, fluro-chloridone, fluroxypyr, fluroxypyr-meptyl, flurtamone, fluthiacet, fluthiacet-methyl, fomesafen, fomesafen-sodium, foramsulfuron, fosamine, glufosinate, glufosinate-ammonium, glufosinate-P-sodium, glufosinate-P-ammonium, glufosinate-P-sodium, glyphosate, glyphosate-ammonium, -isopropylammonium, -diammonium, - dimethylammonium, -potassium, -sodium, and -trimesium, H-9201, i.e. O-(2,4-dimethyl-6-nitrophenyl) O-ethyl isopropylphosphoramidothioate, halauxifen, halauxifen-methyl ,halosafen, halosulfuron, halosulfuron-methyl, haloxyfop, haloxyfop-P, haloxyfop-ethoxyethyl, haloxyfop-P-ethoxyethyl, haloxyfop-methyl, haloxyfop-P-methyl, hexazinone, HW-02, i.e. 1-(dimethoxyphosphoryl) ethyl-(2,4-dichlorophenoxy)acetate, 4-hydroxy-1-methoxy-5-methyl-3-[4-(trifluormethyl)pyridine-2-yl]imidazolidine-2-on, 4-hydroxy-1-methyl-3-[4-(trifluormethyl)pyridine-2-yl]imidazolidine-2-on, (5-hydroxy-1-methyl-1H-pyrazol-4-yl)(3,3,4-trimethyl-1,1-dioxido-2,3-dihydro-1-benzothiophen-5 -yl)methanon, 6-[(2-hydroxy-6-oxocyclohex-1-en-1-yl)carbonyl]-1,5-dimethyl-3-(2-methylphenyl)chinazolin-2,4(1H,3H)-dion, imazamethabenz, imazamethabenz-methyl, imazamox, imazamox-ammonium, imazapic, imazapic-ammonium, imazapyr, imazapyr-isopropylammonium, imazaquin, imazaquin-ammonium, imazethapyr, imazethapyr-immonium, imazosulfuron, indanofan, indaziflam, iodosulfuron, iodosulfuron-methyl-sodium, ioxynil, ioxynil-octanoate, -potassium and -sodium, ipfencarbazone, isoproturon, isouron, isoxaben, isoxaflutole, karbutilate, KUH-043, i.e. 3-({[5-(difluoromethyl)-1-methyl-3-(trifluoromethyl)-1H-pyrazol-4-yl]methyl}sulfonyl)-5,5-dimethyl-4,5-dihydro-1,2-oxazole, keto-spiradox, lactofen, lenacil, linuron, MCPA, MCPA-butotyl, -dimethylammonium, -2-ethylhexyl, - isopropylammonium, -potassium, and -sodium, MCPB, MCPB-methyl, -ethy,l and -sodium, mecoprop, mecoprop-sodium, and -butotyl, mecoprop-P, mecoprop-P-butotyl, -dimethylammonium, -2-ethylhexyl, and -potassium, mefenacet, mefluidide, mesosulfuron, mesosulfuron-methyl, mesotrione, methabenzthiazuron, metam, metamifop, metamitron, metazachlor, metazosulfuron, methabenzthiazuron, methiopyrsulfuron, methiozolin, 2-({2-[(2-methoxyethoxy)methyl]-6-(trifluormethyl)pyridin-3-yl}carbonyl)cyclohexan-1,3-dion, methyl isothiocyanate, 1-methyl-4-[(3,3,4-trimethyl-1,1-dioxido-2,3-dihydro-1-benzothiophen-5-yl)carbonyl]-1H-pyrazol-5-ylpropan-1-sulfonat, metobromuron, metolachlor, S-metolachlor, metosulam, metoxuron, metribuzin, metsulfuron, metsulfuron-methyl, molinat, monolinuron, monosulfuron, monosulfuron-ester, MT-5950, i.e. N-(3-chloro-4-isopropylphenyl)-2-methylpentan amide, NGGC-011, napropamide, NC-310, i.e. [5-(benzyloxy)-1-methyl-1H-pyrazol-4-yl](2,4-dichlorophenyl)-methanone, neburon, nicosulfuron, nonanoic acid (pelargonic acid), norflurazon, oleic acid (fatty acids), orbencarb, orthosulfamuron, oryzalin, oxadiargyl, oxadiazon, oxasulfuron, oxaziclomefon, oxyfluorfen, paraquat, paraquat dichloride, pebulate, pendimethalin, penoxsulam, pentachlorphenol, pentoxazone, pethoxamid, petroleum oils, phenmedipham, picloram, picolinafen, pinoxaden, piperophos, pretilachlor, primisulfuron, primisulfuron-methyl, prodiamine, profoxydim, prometon, prometryn, propachlor, propanil, propaquizafop, propazine, propham, propisochlor, propoxy-carbazone, propoxycarbazone-sodium, propyrisulfuron, propyzamide, prosulfocarb, prosulfuron, pyraclonil, pyraflufen, pyraflufen-ethyl, pyrasulfotole, pyrazolynate (pyrazolate), pyrazosulfuron, pyrazosulfuron-ethyl, pyrazoxyfen, pyribambenz, pyribambenz-isopropyl, pyribambenz-propyl, pyribenzoxim, pyributicarb, pyridafol, pyridate, pyriftalid, pyriminobac, pyriminobac-methyl, pyrimi-sulfan, pyrithiobac, pyrithiobac-sodium, pyroxasulfone, pyroxsulam, quinclorac, quinmerac, quino-clamine, quizalofop, quizalofop-ethyl, quizalofop-P, quizalofop-P-ethyl, quizalofop-P-tefuryl, QYM-201, QYR-301, rimsulfuron, saflufenacil, sethoxydim, siduron, simazine, simetryn, SL-261, sulcotrion, sulfentrazone, sulfometuron, sulfometuron-methyl, sulfosulfuron, SYN-523, SYP-249, i.e. 1-ethoxy-3-methyl-1-oxobut-3-en-2-yl 5-[2-chloro-4-(trifluoromethyl)phenoxy]-2-nitrobenzoate, SYP-300, i.e. 1-[7-fluoro-3-oxo-4-(prop-2-yn-1-yl)-3,4-dihydro-2H-1,4-benzoxazin-6-yl] -3 -propyl-2- thioxoimidazolidine-4,5-dione, 2,3,6-TBA, TCA (trichloroacetic acid), TCA-sodium, tebuthiuron, tefuryltrione, tembotrione, tepraloxydim, terbacil, terbucarb, terbumeton, terbuthylazin, terbutryn, tetflupyrolimet, thenylchlor, thiazopyr, thiencarbazone, thiencarbazone-methyl, thifensulfuron, thifensulfuron-methyl, thiobencarb, tiafenacil, tolpyralate, topramezone, tralkoxydim, triafamone, tri-allate, triasulfuron, triaziflam, tribenuron, tribenuron-methyl, triclopyr, trietazine, trifloxysulfuron, trifloxysulfuron-sodium, trifludimoxazin, trifluralin, triflusulfuron, triflusulfuron-methyl, tritosulfuron, urea sulfate, vernolate, ZJ-0862, i.e. 3,4-dichloro-N-{2-[(4,6-dimethoxypyrimidin-2-yl)oxy]benzyl}aniline.

The at least one active ingredient is preferably selected from the group comprising fungicides selected from the group comprising classes as described here above (1) Inhibitors of the respiratory chain at complex, in particular azoles, (2) Inhibitors of the respiratory chain at complex I or II, (3) Inhibitors of the respiratory chain at complex, (4) Inhibitors of the mitosis and cell division, (6) Compounds capable to induce a host defence, (10) Inhibitors of the lipid and membrane synthesis, and (15).

Further preferred, the at least one active ingredient a) as fungicide is selected from the group comprising Trifloxystrobin, Bixafen, Penflufen, Prothioconazole, Inpyrfluxam, Isoflucypram, Fluopicolide, Fluopyram, Fluoxapiprolin, Tebuconazole.

The at least one insecticide is preferably selected from the group comprising insecticides selected from the group comprising classes as described here above (2 GABA-gated chloride channel antagonists, (3) Sodium channel modulators / voltage-dependent sodium channel blockers (4) (4) Nicotinic acetylcholine receptor (nAChR) competitive activators, (23) Inhibitors of acetyl-CoA carboxylase, (28) Ryanodinreceptor-modulators, (30) other active ingredients.

Also further preferred, the at least one active ingredient a) as insecticide is selected from the group comprising Spirotetramat, Tetraniliprole, Ethiprole, Imidacloprid, Deltamethrin, Flupyradifuron, Spidoxamat.

Lastly further preferred, the at least one active ingredient a) as herbicide is selected from the group comprising Triafamone, Tembotrione, Thiencarbazone-methyl, preferably in combination with safeners Isoxadifen-ethyl and Cyprosulfamat.

Even more preferred, the at least one active ingredient is selected from the group comprising trifloxystrobin, bixafen, penflufen, tebuconazole, prothioconazole, inpyrfluxam, isoflucypram, fluopicolide, fluopyram, fluoxapiprolin, spirotetramat, tetraniliprole, ethiprole, imidacloprid, deltamethrin, flupyradifuron, spidoxamat, triafamone, tembotrione, thiencarbazone-methyl, isoxadifen-ethyl and cyprosulfamat.

All named active ingredients as described here above can be present in the form of the free compound or, if their functional groups enable this, an agrochemically active salt thereof.

Furthermore, mesomeric forms as well as stereoisomeres or enantiomeres, where applicable, shall be enclosed, as these modifications are well known to the skilled artisan, as well as polymorphic modifications.

If not otherwise specified, in the present invention solid, agrochemical active compounds a) are to be understood as meaning all substances customary for plant treatment, whose melting point is above 20°C.

### Drift reducing agents b)

Suitable drift reducing agents are poly(ethylene oxides), wherein the polymer has an average molecular weight preferably from 0.5 to 12 million g/mol, more preferred from 0.75 to 10 million g/mol, and most preferred from 1 to 8 million g/mol, and hydroxypropyl guar, as well as vegetable oils and vegetable oil esters and diesters (including esters with glycerine and propylene glycol).

Particularly preferred are methyl, ethyl, isopropyl, isobutyl, butyl, hexyl and ethylheyxl esters.

More preferred the vegetable oils and esters are selected from the group consisting of methyl oleate, methyl palmitate, rape seed oil methyl ester, isopropyl myristate, isopropyl palmitate, ethylhexyl palmitate, ethylhexyl oleate, mixture of ethylhexyl myristate/laurate, ethylhexyl laurate, mixture of ethylhexyl caprylate/caprate, diisopropyl adipate, coconut oil propyleneglycol diester, sunflower oil, rapeseed oil, corn oil, soybean oil, rice bran oil, olive oil, peanut oil, mixed caprylic and capric triglycerides, and mixed decanoyl and octanoyl glycerides.

Also suitable as drift reducing agent are mineral oils.

### Spreading agents (c):

Suitable spreading agents are selected from the group comprising mono-and diesters of sulfosuccinate metal salts with branched or linear alcohols comprising 1-10 carbon atoms, in particular alkali metal salts, more particular sodium salts, and most particular sodium dioctylsulfosuccinate; as well as organosilicone ethoxylates such as organomodified polysiloxanes/ trisiloxane alkoxylates with the following CAS No. 27306-78-1, 67674-67-3, 134180-76-0, e.g., Silwet^{®} L77, Silwet^{®} 408, Silwet^{®} 806, BreakThru^{®} S240, BreakThru^{®} S278.

Other suitable spreading agents are ethoxylated diacetylene-diols with 1 to 6 EO, e.g. Surfynol^{®} 420 and 440, as well as 1-hexanol, 3,5,5-trimethyl-, ethoxylated, propoxylated (CAS-No 204336-40-3), e.g. Break-Thru^{®} Vibrant.

Preferred are polyalkyleneoxide modified heptamethyltrisiloxane, more preferred selected from the group comprising the siloxane groups Poly(oxy-1,2-ethanediyl),.alpha.-methyl-.omega.-[3-[1,3,3,3-tetramethyl-1-[(trimethylsilyl)oxy]disiloxanyl]propoxy] (CAS No (27306-78-1), , Poly(oxy-1,2-ethanediyl),.alpha.-[3-[1,3,3,3-tetramethyl-1-[(trimethylsilyl)oxy]disiloxanyl]propyl]-.omega.-hydroxy (Cas No 67674-67-3), and Oxirane, methyl-, polymer with oxirane, mono3-1,3,3,3-tetramethyl-1-(trimethylsilyl)oxydisiloxanylpropyl ether (Cas No 134180-76-0).

Preferably the spreading agent is selected from the group comprising sodium dioctylsulfosuccinate, polyalkyleneoxide modified heptamethyltrisiloxane and ethoxylated diacetylene-diols.

### Other formulants (f) :

**f1** Suitable non-ionic surfactants or dispersing aids f1) are all substances of this type which can customarily be employed in agrochemical agents. Preferably, polyethylene oxide-polypropylene oxide block copolymers, preferably having a molecular weight of more than 6,000 g/mol or a polyethylene oxide content of more than 45%, more preferably having a molecular weight of more than 6,000 g/mol and a polyethylene oxide content of more than 45%, polyoxyalkylenamine derivatives, polyvinylpyrrolidone, copolymers of polyvinyl alcohol and polyvinylpyrrolidone, and copolymers of (meth)acrylic acid and (meth)acrylic acid esters. Out of the examples mentioned above selected classes can be optionally phosphated, sulphonated or sulphated and neutralized with bases.

Possible anionic surfactants f1) are all substances of this type which can customarily be employed in agrochemical agents. Alkali metal, alkaline earth metal and ammonium salts of alkylsulphonic or alkylphospohric acids as well as alkylarylsulphonic or alkylarylphosphoric acids are preferred. A further preferred group of anionic surfactants or dispersing aids are alkali metal, alkaline earth metal and ammonium salts of polystyrenesulphonic acids, salts of polyvinylsulphonic acids, salts of alkylnaphthalene sulphonic acids, salts of naphthalene-sulphonic acid-formaldehyde condensation products, salts of condensation products of naphthalenesulphonic acid, phenolsulphonic acid and formaldehyde, and salts of lignosulphonic acid.

**f2** A rheological modifier is an additive that when added to the recipe at a concentration that reduces the gravitational separation of the dispersed active ingredient during storage results in a substantial increase in the viscosity at low shear rates. Low shear rates are defined as 0.1 s⁻¹ and below and a substantial increase as greater than x2 for the purpose of this invention. The viscosity can be measured by a rotational shear rheometer.

Suitable rheological modifiers E2) by way of example are:
- Polysaccharides including xanthan gum, and hydroxyethyl cellulose. Examples are Kelzan^{®}, Rhodopol^{®} G and 23, Satiaxane^{®} CX911 and Natrosol^{®} 250 range.
- Clays including montmorillonite, bentonite, sepeolite, attapulgite, laponite, hectorite. Examples are Veegum^{®} R, Van Gel^{®} B, Bentone^{®} 34, 38, CT, HC, EW, Pangel^{®} M100, M200, M300, S, M, W, Attagel^{®} 50, Laponite^{®} RD,
- Fumed and precipitated silica, examples are Aerosil^{®} 200, Sipernat^{®} 22.

Preferred are xanthan gum, montmorillonite clays, bentonite clays and fumed silica.

**f3** Suitable antifoam substances e3) are all substances which can customarily be employed in agrochemical agents for this purpose. Silicone oils, silicone oil preparations are preferred. Examples are Silcolapse^{®} 426 and 432 from Bluestar Silicones, Silfoam^{®} SRE and SC132 from Wacker, SAF-184^{®} fron Silchem, Foam-Clear ArraPro-S^{®} from Basildon Chemical Company Ltd, SAG^{®} 1572 and SAG^{®} 30 from Momentive [Dimethyl siloxanes and silicones, CAS No. 63148-62-9]. Preferred is SAG^{®} 1572.

**f4** Suitable antifreeze agents are all substances which can customarily be employed in agrochemical agents for this purpose. Suitable examples are propylene glycol, ethylene glycol, urea and glycerine.

**f5** Suitable other formulants e5) are selected from biocides, colourants, pH adjusters, buffers, stabilisers, antioxidants, inert filling materials, humectants, crystal growth inhibitors, micronutirients by way of example are:
Possible preservatives are all substances which can customarily be employed in agrochemical agents for this purpose. Suitable examples for preservatives are preparations containing 5-chloro-2-methyl-4-isothiazolin-3-one [CAS-No. 26172-55-4], 2-methyl-4-isothiazolin-3-one [CAS-No. 2682-20-4] or 1.2-benzisothiazol-3(2H)-one [CAS-No. 2634-33-5]. Examples which may be mentioned are Preventol^{®} D7 (Lanxess), Kathon^{®} CG/ICP (Dow), Acticide^{®} SPX (Thor GmbH) and Proxel^{®} GXL (Arch Chemicals).

Possible colourants are all substances which can customarily be employed in agrochemical agents for this purpose. Titanium dioxide, carbon black, zinc oxide, blue pigments, Brilliant Blue FCF, red pigments and Permanent Red FGR may be mentioned by way of example.

Possible pH adjusters and buffers are all substances which can customarily be employed in agrochemical agents for this purpose. Citric acid, sulfuric acid, hydrochloric acid, sodium hydroxide, sodium hydrogen phosphate (Na₂HPO₄), sodium dihydrogen phosphate (NaH₂PO₄), potassium dihydrogen phosphate (KH₂PO₄), potassium hydrogen phosphate (K₂HPO₄), may be mentioned by way of example.

Suitable stabilisers and antioxidants are all substances which can customarily be employed in agrochemical agents for this purpose. Butylhydroxytoluene [3.5-Di-tert-butyl-4-hydroxytoluol, CAS-No. 128-37-0] is preferred.

**Carriers (g)** are those which can customarily be used for this purpose in agrochemical formulations.

A carrier is a solid or liquid, natural or synthetic, organic or inorganic substance that is generally inert, and which may be used as a solvent. The carrier generally improves the application of the compounds, for instance, to plants, plants parts or seeds. Examples of suitable
*solid carriers* include, but are not limited to, ammonium salts, in particular ammonium sulfates, ammonium phosphates and ammonium nitrates, natural rock flours, such as kaolins, clays, talc, chalk, quartz, attapulgite, montmorillonite and diatomaceous earth, silica gel and synthetic rock flours, such as finely divided silica, alumina and silicates. Examples of typically useful solid carriers for preparing granules include, but are not limited to crushed and fractionated natural rocks such as calcite, marble, pumice, sepiolite and dolomite, synthetic granules of inorganic and organic flours and granules of organic material such as paper, sawdust, coconut shells, maize cobs and tobacco stalks.

Preferred solid carriers are selected from clays, talc and silica.

Examples of suitable *liquid carriers* include, but are not limited to, water, organic solvents and combinations thereof. Examples of suitable *solvents* include polar and nonpolar organic chemical liquids, for example from the classes of
- alcohols and polyols (which may optionally also be substituted, etherified and/or esterified, such as ethanol, propanol, butanol, benzylalcohol, cyclohexanol or glycol, 2-ethyl hexanol),
- ethers such as dioctyl ether, tetrahydrofuran, dimethyl isosorbide, solketal, cyclopentyl methyl ether, solvents offered by Dow under the Dowanol Product Range e.g. Dowanol DPM, anisole, phenetole, different molecular weight grades of dimethyl polyethylene glycol, different molecular weight grades of dimethyl polypropylene glycol, dibenzyl ether
- ketones (such as acetone, methyl ethyl ketone, methyl isobutyl ketone, cyclopentanone, cyclohexanone, cycloheptanone, acetophenone, propiophenone),
- lactate esters, such as methyl lactate, ethyl lactate, propyl lactate, butyl lactate, 2-ethyl hexyl lactate
- (poly)ethers such as different molecular weight grades of polyethylene glycol, different molecular weight grades of polypropylene glycol
- unsubstituted and substituted amines
- amides (such as dimethylformamide, or N,N-dimethyl lactamide, or N-formyl morpholine, or fatty acid amides such N,N-dimethyl decanamide or N,N-dimethyl dec-9-en-amide) and esters thereof
- lactams (such as 2-pyrrolidone, or N-alkylpyrrolidones, such as N-methylpyrrolidone, or N-butylpyrrolidone, or N-octylpyrrolidone, or N-dodecylpyrrolidone or N-methyl caprolactam, N-alkyl caprolactam)
- lactones (such as gamma-butyrolactone, gamma-valerolactone, delta-valerolactone, or alphamethyl gamma-butyrolactone
- sulfones and sulfoxides (such as dimethyl sulfoxide),
- nitriles, such as linear or cyclic alkyl nitriles, in particular acetonitrile, cyclohexane carbonitrile, octanonitrile, dodecanonitrile).
- linear and cyclic carbonates, such as diethyl carbonate, dipropyl carbonate, dibutyl carbonate, dioctyl carbonate, or ethylene carbonate, propylene carbonate, butylene carbonate, glycerine carbonate

Most preferred the carrrier is water.

These spray liquids are applied by customary methods, i.e., for example, by spraying, pouring or injecting, in particular by spraying, and most particular by spraying by UAV.

The application rate of the formulations according to the invention can be varied within a relatively wide range. It is guided by the particular active agrochemicals and by their amount in the formulations.

With the aid of the formulations according to the invention it is possible to deliver active agrochemical to plants and/or their habitat in a particularly advantageous way.

The present invention is also directed to the use of agrochemical compositions according to the invention for the application of the agrochemical active compounds contained to plants and/or their habitat.

With the formulations of the invention it is possible to treat all plants and plant parts. By plants here are meant all plants and plant populations, such as desirable and unwanted wild plants or crop plants (including naturally occurring crop plants). Crop plants may be plants which can be obtained by conventional breeding and optimization methods or by biotechnological and gene-technological methods or combinations of these methods, including the transgenic plants and including the plant cultivars which can or cannot be protected by varietal property rights. By plant parts are to be meant all above-ground and below-ground parts and organs of the plants, such as shoot, leaf, flower and root, an exemplary listing embracing leaves, needles, stems, trunks, flowers, fruit bodies, fruits and seeds and also roots, tubers and rhizomes. The plant parts also include harvested material and also vegetative and generative propagation material.

What may be emphasized in this context is the particularly advantageous effect of the formulations according to the invention with regard to their use in cereal plants such as, for example, wheat, oats, barley, spelt, triticale and rye, but also in maize, sorghum and millet, rice, sugar cane, soya beans, sunflowers, potatoes, cotton, oilseed rape, canola, tobacco, sugar beet, fodder beet, asparagus, hops and fruit plants (comprising pome fruit such as, for example, apples and pears, stone fruit such as, for example, peaches, nectarines, cherries, plums and apricots, citrus fruits such as, for example, oranges, grapefruits, limes, lemons, kumquats, tangerines and satsumas, nuts such as, for example, pistachios, almonds, walnuts and pecan nuts, tropical fruits such as, for example, mango, papaya, pineapple, dates and bananas, and grapes) and vegetables (comprising leaf vegetables such as, for example, endives, corn salad, Florence fennel, lettuce, cos lettuce, Swiss chard, spinach and chicory for salad use, cabbages such as, for example, cauliflower, broccoli, Chinese leaves, Brassica oleracea (L.) convar. acephala var. sabellica L. (curly kale, feathered cabbage), kohlrabi, Brussels sprouts, red cabbage, white cabbage and Savoy cabbage, fruit vegetables such as, for example, aubergines, cucumbers, capsicums, table pumpkins, tomatoes, courgettes and sweetcorn, root vegetables such as, for example celeriac, wild turnips, carrots, including yellow cultivars, Raphanus sativus var. niger and var. radicula, beetroot, scorzonera and celery, legumes such as, for example, peas and beans, and vegetables from the Allium family such as, for example, leeks and onions.

The treatment of the plants and plant parts in accordance with the invention with the inventive formulations is carried out directly or by action on their environment, habitat or storage area in accordance with the customary treatment methods, for example by dipping, spraying, vaporizing, atomizing, broadcasting or painting on and, in the case of propagation material, especially seeds, additionally by single or multiple coating.

The active agrochemicals comprised develop a better biological activity than when applied in the form of the corresponding conventional formulations.

If not otherwise defined in this application, the molecular weight refers to the weight-average molecular weight Mw which is determined by GPC in methylene chloride at 25 °C with polystyrene as the standard.

### Leaf surfaces

In Tables M1a and Mlb the contact angle of water on leaf surfaces for textured and non-textured is shown.

**Table M1a Plants with textured leaves**

| Plant | Species | Contact angle of water ° (adaxial) |
|---|---|---|
| barley | Hordeum vulgare (var. Montoya) | 143° |
| corn, BBCH-11 | Zea mays | 150° |
| corn, BBCH-12 | Zea mays | 149° |
| corn, BBCH-13/14 | Zea mays | 148° |
| soybean, BBCH-12 | Glycine max | 149° |
| soybean, BBCH-13 | Glycine max | 144° |
| rice | Oryza sativa | 180° |
| wheat, BBCH-12 | Triticum aestivum | 148° |
| fat-hen | Chenopodium album | 137° |
| purple crabgrass | Digitaria sanguinalis | 144° |

**Table M1b Plants with non-textured leaves**

| Plant | Species | Contact angle of water ° (adaxial) |
|---|---|---|
| apple | Malus domestica | 104° |
| tomato | Solanum lycopersicum | 106° |
| corn, BBCH-15/16 | Zea mays | 108° |
| corn, BBCH-17 | Zea mays | 107° |
| corn, BBCH-18 | Zea mays | 96° |
| corn, BBCH-19 | Zea mays | 87° |
| velvetleaf | Abutilon theophrasti | 103° |
| redroot pigweed | Amaranthus retroflexus | not measured |

Examples of non-textured crops and plants include tomatoes, peppers, potatoes, carrot, celery, sugar beet, beetroot, spinach, lettuce, beans, peas, clover, apple, pear, peach, apricot, plum, mango, avocado, olive, citrus, orange, lemon, lime, grape, fig, cucumber, melon, water melon, strawberry, raspberry, blueberry, sunflower, pumpkin, soybean (≥ GS 16 (BBCH 16)), corn (≥ GS 15 (BBCH 15), cotton.

Examples of textured crops and plants include garlic, onions, leeks, soybean (≤ GS 16 (BBCH 16)), oats, wheat, barley, rice, sugarcane, pineapple, banana, linseed, lilies, orchids, corn (≤ GS 15 (BBCH 15)), cabbage, brussels sprouts, broccoli, Cauliflower, rye, rapeseed, tulips and peanut.

Examples of non-textured weeds include *Abutilon theophrasti, Capsella bursa-pastoris, Datura stramonium, Galium aparine, Ipomoea purpurea, Polygonum lapathifolium, Portulaca oleracea, Senecio vulgaris, Sida spinosa, Sinapis arvensis, Solanum nigrum, Stellaria media, Xanthium orientale, Cyperus rotundus, and Amaranthus retroflexus.*

Examples of textured weeds include *Cassia obtusifolia, Chenopodium album, Agropyron repens, Alopecurus myosuroides, Apera spica-venti, Avena fatua, Brachiaria plantaginea, Bromus secalinus, Cynodon dactylon, Digitaria sanguinalis, Echinochloa crus-galli, Panicum dichotomiflorum, Poa annua, Setaria faberi and Sorghum halepense.*

The invention is illustrated by the following examples.

### Examples

### Method 1: Flowables SC and SE preparation (oil)

The method of the preparation of flowable suspension concentrate and suspo-emulsion formulations are known in the art and can be produced by known methods familiar to those skilled in the art. A 2% gel of the xanthan (f) in water and the biocides (f) was prepared with low shear stirring. If present in the recipe, a 50% oil in water emulsion of oil (b) was prepared by adding oil (50%) to water (49%) and Synperonic PE/F127 (1%) in solution (or equivalent surfactant) under high shear mixing (Ultra-Turrax^{®}). The active ingredient (a), non-ionic and anionic dispersants (f), antifoam (f) and other formulants (f) were mixed with the water to form a slurry, first mixed with a high shear rotor-stator mixer (Ultra-Turrax^{®}) to reduce the particle size D(v,0.9) to approximately 50 microns, then passed through one or more bead mills (Eiger^{®} 250 Mini Motormill) to achieve a particles size D(v,0.9) typically 1 to 15 microns. Then the additives (b) as the 50% emulsion prepared above, (c) and xanthan gel prepared above were added and mixed in with low shear stirring until homogeneous. Finally, the pH is adjusted if needed with acid or base (f).

Flowable formulations containing small levels of emulsified oils can be described as both Suspension Concentrate and Suspo-emulsion formulation types (www.croplife.org, Technical Monograph No: 2, Catalogue of pesticide formulation types and international coding system, Edition: March 2017).

### Method 2: Flowables SC preparation (polymer)

The method of the preparation of flowable suspension concentrate formulations are known in the art and can be produced by known methods familiar to those skilled in the art. A 2% gel of the xanthan (f) in water and the biocides (f) was prepared with low shear stirring. If present in the recipe, a 1-4% of polymer (b) was prepared. The active ingredient (a), non-ionic and anionic dispersants (f), antifoam (f) and other formulants (f) were mixed with the water to form a slurry, first mixed with a high shear rotor-stator mixer (Ultra-Turrax^{®}) to reduce the particle size D(v,0.9) to approximately 50 microns, then passed through one or more bead mills (Eiger^{®} 250 Mini Motormill) to achieve a particles size D(v,0.9) typically 1 to 15 microns. Then the additives (b) as the polymer solution prepared above, (c) and xanthan gel prepared above were added and mixed in with low shear stirring until homogeneous. Finally, the pH is adjusted if needed with acid or base (f).

The polymer (b) solution is prepared according to the viscosity concentration limit and content required in the recipe. Typical values are: Polyox WSR301 (1-2%), Polyox WSR N60K (1-3%), Polyox WSR N12K (2-4%), AgRho DS2000 (1-2%).

### Method 3: EC preparation

The method of the preparation of EC formulations are known in the art and can be produced by known methods familiar to those skilled in the art. In general, EC formulations are obtained by mixing the active ingredient (a) with the rest of the formulation components, which include, amongst others, surfactants (c), spreader (b), a carrier (d) in a vessel equipped with a stirring device. In some cases the dissolving or mixing was facilitated by raising the temperature slightly (not exceeding 60°C). Stirring is continued until a homogeneous mixture has been obtained.

### Method 4: OD preparation

Formulation components are weighed in, homogenized with a high-shear device (e.g. Ultraturrax or colloidal mill) and subsequently milled in a bead mill (e.g. Dispermat SL50, 80% filling, 1.0-1.25 mm glass beads, 4000 rpm, circulation grinding) until a particle size of <10µ is achieved. Alternatively, formulation components are mixed in a bottle followed by addition of approx. 25vol.-% of 1.0-1.25 mm glass beads. The bottle is then closed, clamped in an agitator apparatus (e.g. Retsch MM301) and treated at 30 Hz for several minutes until a particle size of <10µ is achieved.

### Method 5: WG preparation

The methods of the preparation water dispersible granule formulations are known in the art and can be produced by known methods familiar to those skilled in the art.

For example, to produce a fluid bed granule first a water-based technical concentrate has to be prepared. With low shear stirring all ingredients (a, b and c) like e.g. the active ingredient, surfactants, dispersants, binder, antifoam, anti-drift-agent, and filler are mixed in water and finally pre-milled in a high shear rotor-stator mixer (Ultra-Turrax^{®}) to reduce the particle size D(v,0.9) to approximately 50 microns, afterwards passed through one or more bead mills (KDL, Bachofen, Dynomill, Bühler, Drais, Lehmann) to achieve a particles size D(v,0.9) typically 1 to 15 microns. This water-based technical concentrate is then spray-dried in a fluid-bed granulation process to form the wettable granules (WG).

The particle size is determined according to CIPAC (CIPAC = Collaborative International Pesticides Analytical Council; www.cipac.org) method MT 187. The particle size distribution is determined by means of laser diffraction. A representative amount of sample is dispersed in degassed water at ambient temperature (self-saturation of the sample), treated with ultrasound (usually 60 s) and then measured in a device from the Malvern Mastersizer series (Malvern Panalytical). The scattered light is measured at various angles using a multi-element detector and the associated numerical values are recorded. With the help of the Fraunhofer model, the proportion of certain size classes is calculated from the scatter data and from this a volume-weighted particle size distribution is calculated. Usually the d50 or d90 value = active ingredient particle size (50 or 90% of all volume particles) is given. The average particle size denotes the d50 value.

Likewise, any other spraying process, like e.g. classical spray drying can be used as granulation method.

A further technique to produce water dispersible granules is for example low pressure extrusion. The ingredients of the formulation are mixed in dry from and are subsequently milled, e.g. using air-jet milling to reduce the particle size. Subsequently this dry powder is stirred while water is added to the mixture (approximately 10 - 30 wt%, dependent on the composition of the formulation). In a further step the mixture is pushed through an extruder (like a dome extruder, double dome extruder, basket extruder, sieve mill, or similar device) with a die size of usually between 0.8 and 1.2 mm to form the extrudates. In a last step the extrudates are post-dried, e.g. in a fluidized bed dryer to reduce the water content of the powder, commonly to a level of 1- 3 wt% of residual water.

### Method 6: Drift wind chamber

A custom-built drift chamber approximately 2.8 m wide, 2.8 m long and 1 m in height containing a spray nozzle, a horizontal windflow, and a drift collector screen was used to measure the drift of formulations. The spray nozzle is at a height of 0.5 m above the base of the chamber and a distance of 1.4 m from the collector screen approximately 0.6 m in height across end wall of the spray chamber. The spray liquid collected by the detector screen is weighed and the amount of drift from the spray calculated from the flow rate of the spray liquid and the fraction captured by the detector screen. The velocity of the windflow was 3 m/s. The formulations were diluted in water to the required concentration, sprayed through a TeeJet^{®} TP8002EVS nozzle at a pressure of 2 bar and the amount of drift recorded once a steady state was achieved. This technique provides a comparative measurement of drift between different recipes.

### Method 7: Drift droplet size P15

The formulations were diluted in water to the required concentration, sprayed through a TeeJet^{®} TP8002EVS nozzle at a pressure of 3 bar and the droplet size spectra measured with an Oxford Lasers VisiSize P15 which captures images of the spray droplets and measures their size. The spray nozzle was positioned 20 cm above the image capture point slowly moved repeatedly across the image capture window of the VisiSize P15 until 5000 to 10000 droplet images were captured. The droplet size spectra were calculated by the instrument software as volume % less than 100 microns and/or volume % less than 150 microns, which are commonly regarded as the driftable fraction of the spray droplets. The relative amount of driftable droplets was calculated as the % volume <100 microns for the invention recipe / % volume <100 microns for the reference recipe x100 (%) and/or as the % volume <150 microns for the invention recipe / % volume <150 microns for the reference recipe x100 (%). Accordingly, a value of 60% would demonstrate that the invention recipe has only 60% of the driftable fraction of spray droplets compared to the reference recipe which would have here 100%.

### Method 8: Drift droplet size laser

The formulations were diluted in water to the required concentration, sprayed through a TeeJet 11002VS nozzle at a pressure of 3 bar and the droplet size spectra measured with a Malvern SprayTec laser diffraction instrument with a single, long-axis scan across the spray fan at a distance of 350 mm below the nozzle.

### Method 9: Drift filter paper deposits

The formulations were diluted in water to the required concentration with a small amount of a fluorescent tracer (Tinopal SC), sprayed through a TeeJet 11002E nozzle at a pressure of 2 bar onto filter paper and the droplet size spectra measured using ImageJ.

The filter paper is photographed using a digital camera, with UV light [365nm] as the illuminating resource. In the pictures of filter paper, droplet deposits which are fluorescently labelled have much higher intensity than the filter paper and other background.

Images are processed in the ImageJ software (www.fiji.com). First, the RGB image is split into Red, Green and Blue channel, only the Green or Blue channel is used for further analysis, depending on the intensity of the original image. Next, the 'Subtract background' algorithm is applied to the single channel image to remove background noise, which in turn improve the contrast between the droplet deposits and the background. Afterward, an intensity threshold is generated automatically and applied by the software, resulting in a binary image where droplet deposits are remained with maximum intensity while the background such as the filter paper itself has zero intensity. Finally, the 'watershed' algorithm is applied to the binary image, in order to segment droplets that are connected in the image. All remained and segmented objects are detected and labelled with their positions and sizes. The size of each object represents the area of each deposit, is in the unit of um².

The nozzle used in the spray test has a VMD of 210um with water. The Volume Median Diameter (VMD) is determined from the cumulative distribution functions (CDFs) of droplet volume V, droplets that have sizes smaller than VMD account for 50% of the total sprayed volume. Since there is no direct correlation between the deposit area obtained from filter paper and the actual droplet size/volume, the VMD of water has been used as a reference to rescale the CDFs of formulation sprays.

From ImageJ analysis, the area (A) of each droplet deposit on filter paper is recorded. The diameter of each deposit d_{A} = (4A/π)^{1/2}, the estimate droplet volume Vₑₛₜᵢₘₐₜₑ = π · d_{A}³/6. The CDF of the basic formulation is plotted using the estimate droplet volume Vₑₛₜᵢₘₐₜₑ, which is calculated from the deposit area on the filter paper, VMD of the basic formulation is also obtained from the CDF curve. With the assumption that the basic formulation has similar droplet size distribution as water, by matching the VMD of the basic formulation to VMD of water, a size factor *f* = VMD_{basic}/VMD_{water} is generated. Given a droplet deposit area A from the filter paper, the actual droplet diameter d = *f* · (4A/π)^{1/2}, the droplet volume V = π · d³/6.

The cumulative distributions of droplet volume V of different formulations are plotted with bins of logarithmic scale. From each cumulative distribution curve, the percentage of droplets that have diameters less than 150um is counted. This volume percentage of fine droplets corresponds to the degree of drift potential. Using the percentage of a basic formulation (p_{basic}) as a reference, the relative difference of the percentage between a formulation with adjuvants (p) and the basic formulation is computed. The relative difference *r* = p/ p_{hasic} · 100%. If the relative difference (*r*) is lower than 100%, the formulation has lower potential for drift compared with a basic formulation, and vice versa.

### Method 10: Insecticide greenhouse tests

Selected crops were grown under greenhouse conditions in plastic pots containing "peat soil T". At appropriate crop stage, plants were prepared for the treatments, e.g. by infestation with target pest approximately 2 days prior to treatment (s. table below).

Spray solutions were prepared with different doses of active ingredient directly by dilution of formulations with tap water and addition of appropriate amount of additives in tank mix, where required.

The application was conducted with a tracksprayer onto the upperside of leaves with 3001/ha or 101/ha application volume. Nozzles used: TeeJet TP8003E (for 300 l/ha) and Lechler's 652.246 together with a pulse-width-module (PWM) (for 10 l/ha). For each single dose applied, usually 2 to 5 replicates were simultaneously treated.

After treatment, plants were artificially infested, if needed, and kept during test duration in a greenhouse or climate chamber. The efficacy of the treatments was rated after evaluation of mortality (in general, given in %) and/or plant protection (calculated e.g. from feeding damage in comparison to corresponding controls) at different points of time. Only mean values are reported.

**Table M3: Pests and crops used in the tests.**

| **crop** | **crop stage** | **infestation** | **pest** | **English name** | **pest life stage** | **test objective** |
|---|---|---|---|---|---|---|
| soybean | BBCH12, 5 plants in pot | after treatment | *Nezara viridula* | green stink bug | 10x nymphs N2-N3 | contact and oral uptake |
| cabbage | BBCH12, 1-leaf | prior to treatment | *Myzus persicae* | green peach aphid | mixed population | translaminar activity |

Selected crops were grown under greenhouse conditions in plastic pots containing "peat soil T". At appropriate crop stage, plants were prepared for the treatments, e.g. by infestation with target pest approximately 2 days prior to treatment (table M3).

Spray solutions were prepared with different doses of active ingredient directly by dilution of formulations with tap water and addition of appropriate amount of additives in tank mix, where required.

The application was conducted with tracksprayer onto upperside of leaves with 300 l/ha or 10 l/ha application volume. Nozzles used: TeeJet TP8003E (for 300 l/ha) and Lechler's 652.246 together with a pulse-width-module (PWM) (for 10 l/ha). For each single dose applied, usually 2 to 5 replicates were simultaneously treated.

After treatment, plants were artificially infested, if needed, and kept during test duration in a greenhouse or climate chamber. The efficacy of the treatments was rated after evaluation of mortality (in general, given in %) and/or plant protection (calculated e.g. from feeding damage in comparison to corresponding controls) at different points of time. Only mean values are reported.

### Method 11 : Description for Herbicide Greenhouse tests

Seeds of crops and monocotyledonous and dicotyledonous harmful plants are laid out in sandy loam in plastic pots, covered with soil and cultivated in a greenhouse under optimum growth conditions. Two to three weeks after sowing, the test plants are treated at the one- to two-leaf stage. The test herbicide formulations are prepared with different concentrations and sprayed onto the surface of the green parts of the plants using different water application rates: 200 l/ha as a standard conventional rate and 10 l/ha as an ultra-low-volume (ULV) application rate. The nozzle type used for all applications is TeeJet DG 95015 EVS. The ULV application rate is achieved by using a pulse-width-modulation (PWM) -system that gets attached to the nozzle and the track sprayer device. After application, the test plants were left to stand in the greenhouse for 3 to 4 weeks under optimum growth conditions. Then, the activity of the herbicide formulation is scored visually (for example: 100% activity = the whole plant material is dead, 0% activity = plants are similar to the non-treated control plants).

**Table M4: Plant species used in the tests.**

| **Plant species** | **Abbreviation/EPPO Code** | **Crop Variety** |
|---|---|---|
| *Setaria viridis* | SETVI | |
| *Echinochloa crus-galli* | ECHCG | |
| *Alopecurus myosuroides* | ALOMY | |
| *Hordeum murinum* | HORMU | |
| *Avenafatua* | AVEFA | |
| *Lolium rigidum* | LOLRI | |
| *Matricaria inodora* | MATIN | |
| *Veronica persica* | VERPE | |
| *Abutilon theophrasti* | ABUTH | |
| *Pharbitis purpurea* | PHBPU | |
| *Polygonum convolvulus* | POLCO | |
| *Amaranthus retroflexus* | AMARE | |
| *Stellaria media* | STEME | |
| *Zea mays* | ZEAMA | A ventura |
| *Triticum aestivum* | TRZAS | Triso |
| *Brassica napus* | BRSNW | Fontan |

### Method 12 : Description for Fungicide Greenhouse tests

Seeds were laid out in "peat soil T" in plastic pots, covered with soil and cultivated in a greenhouse under optimum growth conditions. Two to three weeks after sowing, the test plants were treated at the one- to two-leaf stage. The test fungicide formulations were prepared with different concentrations and sprayed onto the surface of the plants using different water application rates: 200 I/ha as a standard conventional rate and 10 l/ha as an ultra-low-volume (ULV) application rate. The nozzle type used for all applications was TeeJet TP 8002E, used with 2 bar and 500 - 600 mm height above plant level. Cereal plants were put in an 45° angle as this reflected best the spray conditions in the field for cereals. The ULV application rate was achieved by using a pulse-width-modulation (PWM) system attached to the nozzle and the track sprayer device at 30Hz, opening 8% - 100% (10 l/ha - 200 l/ha spray volume).

In a protective treatment the test plants were inoculated 1 day after the spray application with the respective disease and left to stand in the greenhouse for 1 to 2 weeks under optimum growth conditions. Then, the activity of the fungicide formulation was assessed visually.

In curative conditions plants were first inoculated with the disease and treated 1-3 days later with the fungicide formulations. Visual assessment of the disease was done 3-6 days after application of formulations (dat).

The practices for inoculation are well known to those skilled in the art.

**Table M5: Diseases and crops used in the tests.**

| **Plant species** | **Crop Variety** | **Disease** | **English Name** | **Abbreviation / EPPO Code disease** |
|---|---|---|---|---|
| Soybean | Merlin | Phakopsora pachyrhizi | Soybean rust | PHAKP A |
| Wheat | Monopol | Puccinia recondita | Brown rust | PUCCRT |
| Barley | Gaulois | Pvrenophora teres | Net blotch | PYRNTE |
| Barley | Villa | Blumeria graminis | Powdery mildew | ERYSGH |
| Tomato | Rentita | Phytophtora infestans | Late blight | PHYTIN |

### Method 13 : Cuticle penetration test

The cuticle penetration test is a further developed and adapted version of the test method SOFU (simulation of foliar uptake) originally described by Schönherr and Baur (Schönherr, J., Baur, P. (1996), Effects of temperature, surfactants and other adjuvants on rates of uptake of organic compounds. In: The plant cuticle - an integrated functional approach, 134-155. Kerstiens, G. (ed.), BIOS Scientific publisher, Oxford); it is well suited for systematic and mechanistic studies on the effects of formulations, adjuvants and solvents on the penetration of agrochemicals.

Apple leaf cuticles were isolated from leaves taken from trees growing in an orchard as described by Schönherr and Riederer (Schönherr, J., Riederer, M. (1986), Plant cuticles sorb lipophilic compounds during enzymatic isolation. Plant Cell Environ. 9, 459-466). Only the astomatous cuticular membranes of the upper leaf surface lacking stomatal pores were obtained. Discs having diameters of 18 mm were punched out of the leaves and infiltrated with an enzymatic solution of pectinase and cellulase. The cuticular membranes were separated from the digested leaf cell broth, cleaned by gently washing with water and dried. After storage for about four weeks the permeability of the cuticles reaches a constant level and the cuticular membranes are ready for the use in the penetration test.

The cuticular membranes were applied to diffusion vessels. The correct orientation is important: the inner surface of the cuticle should face to the inner side of the diffusion vessel. A spray was applied in a spray chamber to the outer surface of the cuticle. The diffusion vessel was turned around and carefully filled with acceptor solution. Aqueous mixture buffered to pH 5.5 was used as acceptor medium to simulate the apoplast as natural desorption medium at the inner surface of the cuticle.

The diffusion vessels filled with acceptor and stirrer were transferred to a temperature-controlled stainless steel block which ensures not only a well-defined temperature but also a constant humidity at the cuticle surface with the spray deposit. The temperature at the beginning of experiments was 25°C, 30°C or 35°C and kept constant or changed to 35°C 24h after application at constantly 60% relative humidity.

An autosampler took aliquots of the acceptor in regular intervals and the content of active ingredient is determined by HPLC (DAD or MS). All data points were finally processed to obtain a penetration kinetic. As the variation in the penetration barrier of the cuticles is high, five to ten repetitions of each penetration kinetic were made.

### Method 14 : Cuticle wash-off

A disc from an apple cuticle was fixed with the outside surface facing upwards to a glass microscope slide with a thin layer of medium viscosity silicone oil. To this 0.9 µl drops of the different formulations diluted at the spray dilution in deionised water containing 5% CIPAC C water were applied with a micropipette and left to dry for 1 hour. Each deposit was examined in an optical transmission microscope fitted with crossed polarising filters and an image recorded. The slide containing the cuticle with the dried droplets of the formulations was held under gently running deionised water (flow rate approximately 300ml/minute at a height 10cm below the tap outlet) for 15s. The glass slide was allowed to dry and the deposits were re-examined in the microscope and compared to the original images. The amount of active ingredient washed off was visually estimated and recorded in steps of 10%. Three replicates were measured and the mean value recorded.

### Method 15 : Leaf wash-off

Apple or corn leaf sections were attached to a glass microscope slide. To this 0.9 to 1.4 µl drops of the different formulations diluted at the spray dilution in deionised water containing 5% CIPAC C water and a small amount of fluorescent tracer (Tinopal OB as a micron sized aqueous suspension) were applied with a micropipette and left to dry for 1 hour. Under UV illumination (365nm) the leaf deposits were imaged by a digital camera. The leaf sections were then held under gently running deionised water (flow rate approximately 300ml/minute at a height 10cm below the tap outlet) for 15s. The leaf sections were allowed to dry and the deposits were re-imaged and compared to the original images. The amount of active ingredient washed off was visually estimated between 5 with most remaining and 1 with most removed. Three or more replicates were measured and the mean value recorded.

### Method 16: Coverage (spray)

Greenhouse plants in the development stage as indicated in Tables M1a & Mlb were used for these experiments. Single leaves were cut just before the spraying experiment, placed into petri dishes and attached by tape at both tips at 0° (horizontally) or at 60° (so that 50% of leaf area can be sprayed). The leaves were carried with caution to avoid damage of the wax surface. These horizontally orientated leaves were either a) placed into a spay chamber where the spray liquid was applied via a hydraulic nozzle.

A small amount of UV dye was added to the spray liquid to visualize the spray deposits under UV light. The concentration of the dye has been chosen such that it does not influence the surface properties of the spray liquid and does not contribute to spreading itself. Tinopal OB as a colloidal suspension was used for all flowable and solid formulation such as WG, SC, OD and SE. Tinopal CBS-X or Blankophor SOL were used for formulations where active ingredient is dissolved such as EC, EW and SL. The Tinopal CBS-X was dissolved in the aqueous phase and the Blankophor SOL dissolved in the oil phase.

After evaporation of the spray liquid, the leaves were placed into a Camag, Reprostar 3 UV chamber where pictures of spray deposits were taken under visual light and under UV light at 366 nm. A Canon EOS 700D digital camera was attached to the UV chamber and used to acquire images the leaves. Pictures taken under visual light were used to subtract the leaf shape from the background. ImageJ software was used to calculate either a) the percentage coverage of the applied spray for sprayed leaves or b) spread area for pipetted drops in mm².

### Method 17: Coverage (pipette)

Greenhouse plants in the development stage as indicated in Tables M1a & Mlb were used for these experiments. A 1.4 µl drop of spray liquid containing a small amount of fluorescent tracer (Tinopal OB as a micron sized aqueous suspension) was pipetted on top without touching the leaf surface and left to dry. Under UV illumination (365nm) the leaf deposits were imaged by a digital camera and the area of the deposits measured using ImageJ software (www.fiji.com).

### Method 18: Persistent Foam

The persistent foam was determined according to CIPAC Method MT 47.1 with the conditions of using the recipe dose rate and spray volumes indicated in each example and the foam recorded after 1 minute and 3 minutes (www.cipac.org).

### Materials

**Table MAT1: Exemplified trade names and CAS-No's of preferred drift reducing materials - Polymers (b)**

| Product | Chemical name | Cas No. | Supplier |
|---|---|---|---|
| Polyox^{®} WSR N12K | Poly(ethylene oxide) (average molecular weight 1million g/mol) | 25322-68-3 | Dupont |
| Polyox^{®} WSR N60K | Poly(ethylene oxide) (average molecular weight 2million g/mol) | 25322-68-3 | Dupont |
| Polyox^{®} WSR 301 | Poly(ethylene oxide) (average molecular weight 4million g/mol) | 25322-68-3 | Dupont |
| Polyox^{®} WSR 308 | Poly(ethylene oxide) (average molecular weight 8million g/mol) | 25322-68-3 | Dupont |
| AgRho^{®} DR2000 | hydroxypropyl guar | 68442-94-4. 39421-75-5 | Solvay |
| Jaguar^{®} HP-120 | hydroxypropyl guar | 68442-94-4. 39421-75-5 | Solvay |
| Jaguar^{®} HP-8 | hydroxypropyl guar | 68442-94-4. 39421-75-5 | Solvay |
| Jaguar^{®} 308 NB | hydroxypropyl guar | 68442-94-4. 39421-75-5 | Solvay |

**Table MAT2: Exemplified trade names and CAS-No's of preferred drift reducing materials - Oils (b)**

| Product | Chemical name | Cas No. | Supplier |
|---|---|---|---|
| | | | |
| Radia^{®} 7060 | methyl oleate | 112-62-9 | Oleon NV, BE |
| Radia^{®} 7120 | methyl palmitate | 112-39-0 | Oleon NV, BE |
| AGNIQUE ME^{®} 18 RD-F, Edenor^{®} MESU | Rape seed oil methyl ester | 67762-38-3. 85586-25-0 | Clariant BASF |
| Crodamol^{®} EO | ethyl oleate | 111-62-6 | Croda |
| | | | |
| Estol^{®} 1514 Crodamol^{®} IPM | iso-propyl myristate | 110-27-0 | Croda |
| Radia^{®} 7732 Crodamol^{®} IPP | iso-propyl palmitate | 142-91-6 | Oleon NV, BE Croda, UK |
| | | | |
| Radia^{®} 7129 Crodamol^{®} OP | ethylhexyl palmitate | 29806-73-3 | Oleon NV, BE Croda, UK |
| Radia^{®} 7130 | ethylhexyl oleate | 26399-02-0 | Oleon NV, BE |
| Radia^{®} 7128 | ethylhexyl myristate/laurate C12/C14 | 29806-75-5 | Oleon NV, BE |
| Radia^{®} 7127 | ethylhexyl laurate | 20292-08-4 | Oleon NV, BE |
| Radia^{®} 7126 | ethylhexyl caprvlate/caprate C8/10 | 63321-70-0 | Oleon NV, BE |
| | | | |
| Crodamol DA | di-isopropyl adipate | 6938-94-9 | Croda |
| Crodamol PC DAB | Propyleneglycol di-ester of coconut fatty acids | 85409-09-2 | Croda |
| | | | |
| Sunflower oil | Triglycerides from different C14-C18 fatty acids, predominantly unsaturated | 8001-21-6 | |
| Rapeseed oil | Triglycerides from different C14-C18 fatty acids, predominantly unsaturated | 8002-13-9 | |
| Corn oil | Triglycerides from different C14-C18 fatty acids, predominantly unsaturated | 8001-30-7 | |
| Soybean oil | Triglycerides from different C14-C18 fatty acids, predominantly unsaturated | 8001-22-7 | |
| Rice bran oil | Triglycerides from different C14-C18 fatty acids, predominantly unsaturated | 68553-81-1 | |
| Olive oil | | | |
| Peanut oil | | | |
| Radia^{®} 7104 | Caprylic, capric triglycerides, neutral vegetable oil | 73398-61-5. 65381-09-1 | Oleon NV, BE |
| Miglyol 812N | Glycerides, mixed decanoyl and octanoyl | 73398-61-5. 65381-09-1 | IOI Oleochemical |

**Table MAT3: Exemplified trade names and CAS-No's of preferred high-spreading compounds (c)**

| Product | Chemical name | Cas No. | Supplier |
|---|---|---|---|
| Geropon^{®} DOS-PG | Dioctylsulfosuccinate sodium salt (65-70% in propylene glycol) | 577-11-7 | Rhodia |
| Synergen^{®} W 10 | Dioctylsulfosuccinate sodium salt (65-70% in propylene glycol) | 577-11-7 | Clariant |
| Aerosol^{®} OT 70 PG | Dioctylsulfosuccinate sodium salt (65-70% in propylene glycol) | 577-11-7 | Cytec |
| Lankropol KPH70 | Dioctylsulfosuccinate sodium salt (65-70% in propylene glycol) | 577-11-7 | Nouryon |
| Enviomet EM 5669 | Dioctylsulfosuccinate sodium salt (65-70% in propylene glycol) | 577-11-7 | Innospec |
| Surfynol^{®} S420 | 2,4,7,9-Tetramethyl-5-Decyne-4,7-Diol ethoxylate (1 mole) | 9014-85-1 | Evonik |
| Surfynol^{®} S440 | 2,4,7,9-Tetramethyl-5-Decyne-4,7-Diol ethoxylate (3.5 moles) | 9014-85-1 | Evonik |
| Surfynol^{®} S465 | 2,4,7,9-Tetramethyl-5-Decyne-4,7-Diol ethoxylate (10 moles) | 9014-85-1 | Evonik |
| Surfynol^{®} S485 | 2,4,7,9-Tetramethyl-5-Decyne-4,7-Diol ethoxylate (30 moles) | 9014-85-1 | Evonik |
| Break-Thru^{®} Vibrant | 1-Hexanol, 3,5,5-trimethyl-, ethoxylated, propoxylated | 204336-40-3 | Evonik |
| Genapol^{®} EP 0244 | C10-12 alcohol alkoxylate (PO+EO) | | Clariant |
| Synergen^{®} W06 | C11 alcohol alkoxylate (PO+EO) | | Clariant |
| Genapol^{®} EP 2584 | C12-15 alcohol alkoxylate (PO+EO) | | Clariant |
| Agnique^{®} PG8107 | Oligomeric D-glucopyranose decyl octyl glycosides | 68515-73-1 | BASF |
| Silwet^{®} L77 | 3 -(2-methoxyethoxy)propylmethyl-bis(trimethylsilyloxy)silane | 27306-78-1 | Momentive |
| Silwet^{®} 408 | 2-[3-[[dimethyl(trimethylsilyloxy)silyl]oxy-methyl-trimethylsilyloxysilyl]propoxy]ethanol | 67674-67-3 | Momentive |
| Silwet^{®} 806 | 3-[methyl-bis(trimethylsilyloxy)silyl]propan-1-ol;2-methyloxirane;oxirane | 134180-76-0 | Momentive |
| Break-thru^{®} S240 | 3-[methyl-bis(trimethylsilyloxy)silyl]propan-1-ol;2-methyloxirane;oxirane | 134180-76-0 | Evonik |
| Break-thru^{®} S278 | 3 -(2-methoxyethoxy)propylmethyl-bis(trimethylsilyloxy)silane | 27306-78-1 | Evonik |
| Silwet^{®} HS 312 | Polyalkyleneoxide silane | Not disclosed | Momentive |
| Silwet^{®} HS 604 | Poly(oxy-1,2-ethanediyl), alpha-(3-(dimethyl(2-(trimethylsilyl)ethyl)silyl)propyl)-omega-methoxy- | 881689-05-0 | Momentive |
| BreakThru^{®} OE 444 | Siloxanes and Silicones, cetyl Me, di-Me | 191044-49-2 | Evonik |

**Table MAT6: Exemplified trade names and CAS-No's of preferred compounds (f)**

| Product | Chemical name | Cas No. | Supplier |
|---|---|---|---|
| Synperonic^{®} PE/F127 | block-copolymer of polyethylene oxide and polypropylene oxide | 9003-11-6 | Croda |
| Synperonic^{®} PE/L62 | block-copolymer of polyethylene oxide and polypropylene oxide | 9003-11-6 | Croda |
| Xanthan | Polysaccharide | 11138-66-2 | |
| Proxel^{®} GXL | 1.2-benzisothiazol-3(2H)-one | 2634-33-5 | Arch Chemicals |
| Kathon^{®} CG/ICP | 5 -chloro- 2-methyl-4-isothiazolin-3-one plus 2-methyl-4-isothiazolin-3 -one | 26172-55-4 plus 2682-20-4 | Dow |
| Propylene glycol | 1,2-Propylene glycol | 57-55-6 | |
| Glycerol | Propane-1,2,3-triol | 56-81-5 | |
| SAG^{®} 1572 | Dimethyl siloxanes and silicones | 63148-62-9 | Momentive |
| Atlox^{®} 4913 | methyl methacrylate graft copolymer with polyethylene glycol | 119724-54-8 | Croda |
| Atlox^{®} 4894 | Fatty Alcohol Ethoxylate | 68131-39-5 | Croda |
| Atlas^{®} G 5000 | Oxirane, methyl-, polymer with oxirane, monobutyl ether | 9038-95-3 | Croda |
| Geropon^{®} T36 | Sodium polycarboxylate | 37199-81-8 | Solvay |
| Lucramul^{®} PS 29 | Poly(oxy-1,2-ethanediyl),. alpha.-phenyl-.omega.-hydroxy-, styrenated | 104376-75-2 | Levaco |
| Soprophor^{®} TS/29 | Poly(oxy-1,2-ethanediyl),. alpha.-phenyl- .omega.-hydroxy-, styrenated | 104376-75-2 | Solvay |
| Soprophor^{®} TS/54 | Poly(oxy-1,2-ethanediyl),. alpha.-phenyl- .omega.-hydroxy-, styrenated | 104376-75-2 | Solvay |
| Morwet^{®} IP | Naphthalenesulfonic acid, bis(1-methylethyl)-, Me derivs., sodium salts | 68909-82-0 | Akzo Nobel |
| Van Gel^{®} B Veegum^{®} R | Smectite-group minerals | 12199-37-0 | Vanderbilt |
| Aerosil R972 | Silane, dichlorodimethyl-, reaction products with silica | 68611-44-9 | Evonik |
| Silcolapse^{®} 454 | Polydimethylsiloxanes and silica | 9016-00-6 | Bluestar Silicones |
| Silcolapse^{®} 426R | Polvdimethylsiloxanes and silica | 9016-00-6 | Bluestar Silicones |
| Rhodopol^{®} 23 | Polysaccharide | 11138-66-2 | Solvay |
| Acticide^{®} MBS | Mixture of 2-methyl-4-isothiazolin-3-one (MIT) and 1,2-benzisothiazolin-3-one (BIT) in water | 2682-20-4 2634-33-5 | Thor GmbH |
| Sokalan^{®} K 30 | Polyvinylpyrrolidone | 9003-39-8 | BASF |
| Supragil^{®} WP | Sodium diisopropyl naphthalene sulfonate | 1322-93-6 | Solvay |
| Morwet^{®} D-425 | Sodium naphthalene sulphonate formaldehyde condensate | 577773-56-9 68425-94-5 9008-63-3 | Akzo Nobel, Nouryon |
| Soprophor^{®} 4 D 384 | Tristyrylphenol ethoxylate sulfate (16 EO) ammonium salt | 119432-41-6 | Solvay |
| Soprophor^{®} FLK | Poly(oxy-1,2-ethanediyl), alpha.-2,4,6-tris(1-phenylethyl)phenyl-.omega.-hydroxy-, phosphate, potassium salt | 163436-84-8 | Solvay |
| Rhodorsil^{®} Antim EP 6703 | absorbed poly(dimethylsiloxane) antifoam | unknown | Solvay |
| Kaolin Tec 1 | Aluminium hydrosilicate | 1318-74-7 1332-58-7 | Ziegler & Co. GmbH |
| Sipemat^{®} 22 S | synthetic amorphous silica (silicon dioxide) | 112926-00-8 7631-86-9 | Evonik |
| Rhodacal^{®} 60 BE | Calcium-dodecylbenzenesulphonate in 2-Ethvlhexanol | 26264-06-2 104-76-7 | Solvay |
| Sodium hydrogen phosphate | Na₂HPO₄ | 7558-79-4 | |
| Sodium dihydrogen phosphate | NaH₂PO₄ | 7558-80-7 | |
| Citric Acid | C₆H₈O₇ | 77-92-9 | |
| Glycerine | C₃H₈O₃ | 56-81-5 | |
| Urea | CH₄N₂O | 57-13-6 | |
| Supragil WP | Sodium diisopropyl naphthalene sulfonate | 1322-93-6 | Solvay |
| Morwet D-425 | Naphthalene sulphonate formaldehyde condensate Na salt | 9008-63-3 | Nouryon |
| Sokalan K 30 | Polyvinylpyrrolidone | 9003-39-8 | BASF |
| Silcolapse 454 | Polydimethylsiloxane | 7631-86-9 9016-00-6 | Solvay |
| Sipernat 50 S | synthetic amorphous silica (silicon dioxide) | 112926-00-8 7631-86-9 | Evonik |
| Kaolin Tec 1 | Aluminiumhydrosilicate | 1318-74-7 1332-58-7 | Ziegler & Co. GmbH |

### FUNGICIDE EXAMPLES

### Example FN1: Trifloxystrobin 20 SC

**Table FN1.1: Recipes FN1.1 and FN1.2.**

| **Component (g/l)** | **Recipe FN1.1 reference** | **Recipe FN1.2 according to the invention** |
|---|---|---|
| Trifloxystrobin | 20.0 | 20.0 |
| Morwet^{®} D425 | 5.0 | 5.0 |
| Atlox^{®} 4913 | 10.0 | 10.0 |
| Synperonic^{®} PE/F127 | 5.0 | 5.0 |
| Corn oil | 0.0 | 6.0 |
| Silwet^{®} 408 | 0.0 | 40.0 |
| Xanthan | 3.0 | 3.0 |
| Van Gel^{®} B | 5.0 | 5.0 |
| Proxel^{®} GXL | 1.8 | 1.8 |
| Kathon^{®} CG/ICP | 0.8 | 0.8 |
| Propylene glycol | 60.0 | 60.0 |
| SAG^{®} 1572 | 6.0 | 6.0 |
| Na₂HPO₄ (Buffer solution pH = 7) | 1.5 | 1.5 |
| NaH₂PO₄ (Buffer solution pH = 7) | 0.8 | 0.8 |
| Water (add to 1 litre) | To volume (∼891) | To volume (∼845) |

The method of preparation used was according to Method 1.

### Drift

The drift was determined according to method 7.

**Table FN1.2: Drift data for trifloxystrobin SC recipes.**

| Spray volume l/ha | Relative amount of driftable fraction of spray droplets <100 microns from recipe FN1.2 compared to recipe FN 1.1 % | Relative amount of driftable fraction of spray droplets <150 microns from recipe FN1.2 compared to recipe FN1.1 % | Concentration of drift reducing oil (b) in recipe g/l | Concentration of drift reducing oil (b) in spray liquid %w/v | Dose of drift reducing oil (b) in target crop g/ha |
|---|---|---|---|---|---|
| 20 | 78.9 | 92.7 | 6 | 0.0015 | 3 |

Formulations tested at 0.5 l/ha.

The results show that recipe FN1.2 illustrative of the invention show a lower driftable droplet fraction at 20 l/ha spray volume compared to the reference recipe FN1.1.

### Pipette spreading tests on leaves

The leaf deposit size was determined according to method 17.

**Table FN1.3: Spray dilution droplet size and dose on non-textured apple leaves and textured soybean and rice leaves.**

| Recipe | Deposit area mm^2 apple | Deposit area mm^2 soybean | Deposit area mm^2 rice | Spreading agent dose g/ha | Spreading agent dose in spray liquid %w/v |
|---|---|---|---|---|---|
| Recipe FN1.1 not according to the invention - 10 l/ha | 2.60 | 1.66 | 1.25 | 0 | 0 |
| Recipe FN1.1 not according to the invention - 200 l/ha | 2.51 | 1.23 | 1.02 | 0 | 0 |
| Recipe FN1.2 according to the invention - 10 l/ha | 134.07 | 177.96 | 145.89 | 20 | 0.2 |
| Recipe FN1.2 according to the invention - 200 1/ha | 24.82 | 17.58 | 12.29 | 20 | 0.01 |

Formulations applied at 0.5 l/ha.

The results show that recipe FN1.2 illustrative of the invention shows greater deposit sizes at 10 L/ha spray volume than at 200 L/ha and also compared to the reference recipe FN1.1.

### Greenhouse

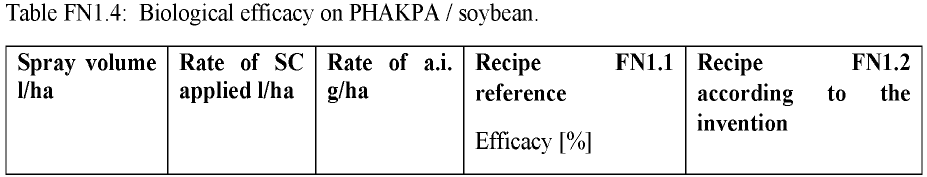

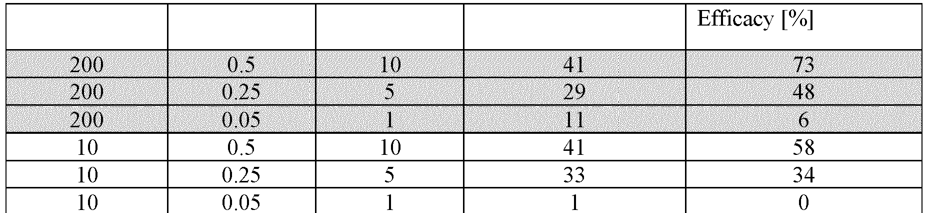

Method 12: soybean, 1 day protective, evaluation 7 dat

The results show that recipe FN1.2 illustrative of the invention shows higher efficacy at both 10 and 200 l/ha spray volume than the reference recipe FN1.1.

### Example FN2: Prothioconazole 20 SC

**Table FN2.1: Recipes FN2.1 and FN2.2.**

| **Component (g/l)** | **Recipe FN2.1 reference** | **Recipe FN2.2 according to the invention** |
|---|---|---|
| Prothioconazole | 20.0 | 20.0 |
| Morwet^{®} D425 | 5.0 | 5.0 |
| Atlox^{®} 4913 | 12.0 | 12.0 |
| Synperonic^{®} PE/F127 | 5.0 | 5.0 |
| Rapeseed oil | 0.0 | 10.0 |
| Silwet^{®} 806 | 0.0 | 50.0 |
| Xanthan | 3.0 | 3.0 |
| Van Gel^{®} B | 5.0 | 5.0 |
| Proxel^{®} GXL | 1.8 | 1.8 |
| Kathon^{®} CG/ICP | 0.8 | 0.8 |
| Propylene glycol | 60.0 | 60.0 |
| SAG^{®} 1572 | 6.0 | 6.0 |
| Na₂HPO₄ (Buffer solution pH = 7) | 1.5 | 1.5 |
| NaH₂PO₄ (Buffer solution pH = 7) | 0.8 | 0.8 |
| Water (add to 1 litre) | To volume (∼889) | To volume (∼829) |

The method of preparation used was according to Method 1.

### Pipette spreading tests on leaves

The leaf deposit size was determined according to method 17.

**Table FN2.2: Spray dilution droplet size and dose on non-textured apple leaves and textured soybean and rice leaves.**

| Recipe | Deposit area mm^2 apple | Deposit area mm^2 soybean | Deposit area mm^2 rice | Spreading agent dose g/ha | Spreading agent dose in spray liquid %w/v |
|---|---|---|---|---|---|
| Recipe FN2.1 not according to the invention - 10 l/ha | 2.00 | 0.93 | 0.96 | 0 | 0 |
| Recipe FN2.1 not according to the invention - 200 l/ha | 2.55 | 0.84 | 1.25 | 0 | 0 |
| Recipe FN2.2 according to the invention - 10 l/ha | 15.52 | 137.78 | 119.74 | 25 | 0.25 |
| Recipe FN2.2 according to the invention - 200 l/ha | 8.03 | 17.37 | 13.25 | 25 | 0.0125 |

Formulations applied at 0.5 l/ha.

The results show that recipe FN2.2 illustrative of the invention shows greater deposit sizes at 10 L/ha spray volume than at 200 L/ha and also compared to the reference recipe FN2.1.

### Example FN3: Fluopyram 200 SC

**Table FN3.1: Recipes FN3.1, FN3.2 and FN3.3.**

| **Component (g/l)** | **Recipe FN3.1 reference** | **Recipe FN3.2 according to the invention** | **Recipe FN3.3 reference** |
|---|---|---|---|
| Fluopyram | 200.0 | 200.0 | 200.0 |
| Morwet^{®} D425 | 5.0 | 5.0 | 5.0 |
| Synperonic^{®} PE/F127 | 20.0 | 20.0 | 20.0 |
| Geropon^{®} T36 | 5.0 | 5.0 | 5.0 |
| Rapeseed oil methyl ester | 0.0 | 12.0 | 0.0 |
| Silwet^{®} 408 | 0.0 | 30.0 | 30.0 |
| Xanthan | 3.0 | 3.0 | 3.0 |
| Van Gel^{®} B | 5.0 | 5.0 | 5.0 |
| Proxel^{®} GXL | 1.8 | 1.8 | 1.8 |
| Acticide^{®} SPX | 0.8 | 0.8 | 0.8 |
| Propylene glycol | 80.0 | 80.0 | 80.0 |
| SAG^{®} 1572 | 6.0 | 6.0 | 6.0 |
| Na₂HPO₄ (Buffer solution pH = 7) | 1.5 | 1.5 | 1.5 |
| NaH₂PO₄ (Buffer solution pH = 7) | 0.8 | 0.8 | 0.8 |
| Water (add to 1 litre) | To volume (∼761) | To volume (∼719) | To volume (∼731) |

The method of preparation used was according to Method 1.

### Drift

The drift was determined according to method 7.

**Table FN3.2: Drift data for fluopyram SC recipes.**

| Spray volume l/ha | Relative amount of driftable fraction of spray droplets <100 microns from recipe FN3.2 compared to recipe FN3.1 % | Relative amount of driftable fraction of spray droplets <150 microns from recipe FN3.2 compared to recipe FN3.1 % | Relative amount of driftable fraction of spray droplets <100 microns from recipe FN3.2 compared to recipe FN3.3 % | Relative amount of driftable fraction of spray droplets <150 microns from recipe FN3.2 compared to recipe FN3.3 % | Concentration of drift reducing oil (b) in recipe g/l | Concentration of drift reducing oil (b) in spray liquid %w/v | Dose of drift reducing oil (b) in target crop g/ha |
|---|---|---|---|---|---|---|---|
| 20 | 81.3 | 94.7 | 78.7 | 92.0 | 12.0 | 0.003 | 6.0 |

Formulations tested at 0.5 l/ha.

The results show that recipe FN3.2 illustrative of the invention shows a lower amount of driftable fraction of spray droplets less than 100 microns and less than 150 microns at 20 l/ha spray volume compared to the reference recipes FN3.1 and FN3.3.

### Pipette spreading tests on leaves

The leaf deposit size was determined according to method 17.

**Table FN3.3: Spray dilution droplet size and dose on non-textured apple leaves and textured soybean and rice leaves.**

| Recipe | Deposit area mm^2 apple | Deposit area mm^2 soybean | Deposit area mm^2 rice | Spreading agent dose g/ha | Spreading agent dose in spray liquid %w/v |
|---|---|---|---|---|---|
| Recipe FN3.1 not according to the invention - 20 l/ha | 3.42 | 2.18 | 2.17 | 0 | 0 |
| Recipe FN3.2 according to the invention - 20 l/ha | 12.09 | 37.44 | 79.31 | 15 | 0.075 |

Formulations applied at 0.5 l/ha.

The results show that recipe FN3.2 illustrative of the invention shows greater deposit sizes compared to the reference recipe FN3.1 without spreading agent (c) at 20 L/ha. The increase in spreading is greater on textured soybean and rice leaves than untextured apple leaves.

### Example FN4: Fluoxapiprolin 40 SC

**Table FN4.1: Recipes FN4.1, FN4.2, FN4.3, FN4.4, FN4.5, FN4.6 and FN4.7.**

| **Component (g/l)** | **Recipe FN4.1 referen ce** | **Recipe FN4.2 containi ng drift reducin g oil (b)** | **Recipe FN4.3 containi ng drift reducin g oil (b)** | **Recipe FN4.4 containi ng drift reducin g oil (b)** | **Recip e FN4.5 contai ning drift reduci ng oil (b)** | **Recip e FN4.6 contai ning drift reduci ng oil (b)** | **Recip e FN4.7 contai ning drift reduci ng oil (b)** |
|---|---|---|---|---|---|---|---|
| Fluoxapiprolin | 40.0 | 40.0 | 40.0 | 40.0 | 40.0 | 40.0 | 40.0 |
| Morwet^{®} D425 | 5.0 | 5.0 | 5.0 | 5.0 | 5.0 | 5.0 | 5.0 |
| Synperonic^{®} PE/F127 | 20.0 | 20.0 | 20.0 | 20.0 | 20.0 | 20.0 | 20.0 |
| Rapeseed oil methyl ester | 0.0 | 0.1 | 1.0 | 10.0 | 20.0 | 50.0 | 100.0 |
| Xanthan | 3.0 | 3.0 | 3.0 | 3.0 | 3.0 | 3.0 | 3.0 |
| Van Gel^{®} B | 5.0 | 5.0 | 5.0 | 5.0 | 5.0 | 5.0 | 5.0 |
| Proxel^{®} GXL | 1.8 | 1.8 | 1.8 | 1.8 | 1.8 | 1.8 | 1.8 |
| Kathon^{®} CG/ICP | 0.8 | 0.8 | 0.8 | 0.8 | 0.8 | 0.8 | 0.8 |
| Propylene glycol | 80.0 | 80.0 | 80.0 | 80.0 | 80.0 | 80.0 | 80.0 |
| SAG^{®} 1572 | 3.0 | 3.0 | 3.0 | 3.0 | 3.0 | 3.0 | 3.0 |
| Na₂HPO₄ (Buffer solution pH = 7) | 1.5 | 1.5 | 1.5 | 1.5 | 1.5 | 1.5 | 1.5 |
| NaH₂PO₄ (Buffer solution pH = 7) | 0.8 | 0.8 | 0.8 | 0.8 | 0.8 | 0.8 | 0.8 |
| Water (add to 1 litre) | To volume (∼861) | To volume (∼861) | To volume (∼860) | To volume (∼851) | To volum e (∼841) | To volum e (∼801) | To volum e (∼751) |

The method of preparation used was according to Method 1.

### Drift

The drift was determined according to method 7.

**Table FN4.2: Drift data for fluoxapiprolin SC recipes.**

| Recipe | Relative amount of driftable fraction of spray droplets <100 microns from recipe compared to recipe FN4.1 % | Relative amount of driftable fraction of spray droplets <150 microns from recipe compared to recipe FN4.1 % | Concentration of drift reducing oil (b) in recipe g/l | Concentration of drift reducing oil (b) in spray liquid %w/v | Dose of drift reducing oil (b) in target crop g/ha |
|---|---|---|---|---|---|
| FN4.1 | 100.0 | 100.0 | 0.0 | 0.0 | 0.0 |
| FN4.2 | 103.3 | 100.0 | 0.1 | 0.00025 | 0.05 |
| FN4.3 | 80.0 | 87.7 | 1.0 | 0.0025 | 0.5 |
| FN4.4 | 50.0 | 64.9 | 10.0 | 0.025 | 5.0 |
| FN4.5 | 53.3 | 66.7 | 20.0 | 0.05 | 10.0 |
| FN4.6 | 60.0 | 77.2 | 50.0 | 0.125 | 25.0 |
| FN4.7 | 46.7 | 66.7 | 100.0 | 0.25 | 50.0 |

Formulations tested at 0.5 l/ha.

The results show that recipes FN4.3, FN4.4 and FN4.5 illustrative of the inventive dose of drift reducing oil (b) show a lower amount of driftable fraction of spray droplets less than 100 microns and less than 150 microns at 20 l/ha spray volume compared to the reference recipe FN4.1 without drift reducing oil (b). Furthermore, the low amount of drift reducing oil in recipes FN4.4 and FN4.5 achieves the same level of reduction in the amount of the driftable fraction of spray droplets less than 100 microns and less than 150 microns compared to recipes FN4.6 and FN4.7 which contain significantly higher amounts of drift reducing oil (b).

### Example FN5: Inpyrfluxam SC

**Table FN5.1: Recipes FN5.1, FN5.2, FN5.3 and FN5.4.**

| **Component (g/l)** | **Recipe FN5.1 reference** | **Recipe FN5.2 according to the invention** | **Recipe FN5.3 reference** | **Recipe FN5.4 according to the invention** |
|---|---|---|---|---|
| Inpyrfluxam | 80.0 | 80.0 | 10.0 | 10.0 |
| Morwet^{®} D425 | 5.0 | 5.0 | 5.0 | 5.0 |
| Synperonic^{®} PE/F127 | 10.0 | 10.0 | 5.0 | 5.0 |
| Atlox^{®} 4913 | 10.0 | 10.0 | 5.0 | 5.0 |
| Soybean oil | 0.0 | 10.0 | 0.0 | 10.0 |
| Silwet^{®} 806 | 0.0 | 60.0 | 0.0 | 30.0 |
| Xanthan | 3.0 | 3.0 | 3.0 | 3.0 |
| Van Gel^{®} B | 5.0 | 5.0 | 5.0 | 5.0 |
| Proxel^{®} GXL | 1.8 | 1.8 | 1.8 | 1.8 |
| Kathon^{®} CG/ICP | 0.8 | 0.8 | 0.8 | 0.8 |
| Propylene glycol | 60.0 | 60.0 | 80.0 | 80.0 |
| SAG^{®} 1572 | 6.0 | 6.0 | 6.0 | 6.0 |
| Na₂HPO₄ (Buffer solution pH = 7) | 1.5 | 1.5 | 1.5 | 1.5 |
| NaH₂PO₄ (Buffer solution pH = 7) | 0.8 | 0.8 | 0.8 | 0.8 |
| Water (add to 1 litre) | To volume (∼866) | To volume (∼816) | To volume (∼886) | To volume (∼846) |

The method of preparation used was according to Method 1.

### Greenhouse

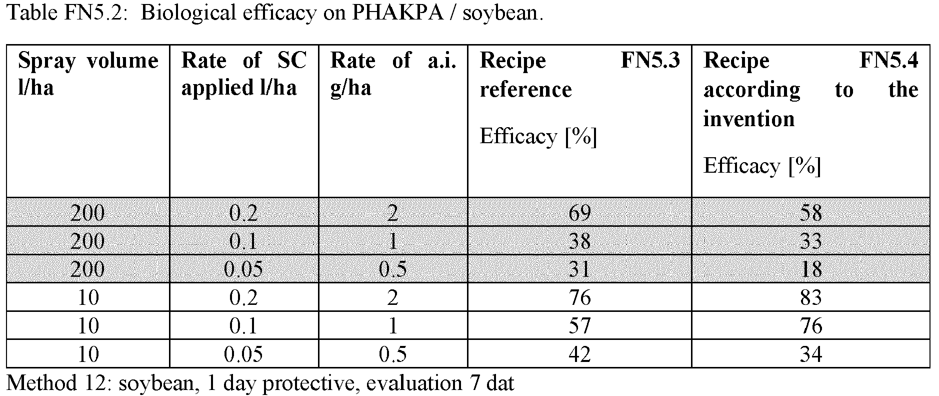

The results show that recipe FN5.4 illustrative of the invention shows improved efficacy at both 10 and 2001/ha spray volume compared to the reference recipe FN5.3. Furthermore, recipe FN5.4 shows higher efficacy at 10 l/ha compared to 200 l/ha.

### Example FN6: Bixafen 50 SC

**Table FN6.1: Recipes FN6.1, FN6.2 and FN6.3.**

| **Component (g/l)** | **Recipe FN6.1 reference** | **Recipe FN6.2 according to the invention** | **Recipe FN6.3 reference** |
|---|---|---|---|
| Bixafen | 50.0 | 50.0 | 50.0 |
| Morwet^{®} D425 | 5.0 | 5.0 | 5.0 |
| Atlox^{®} 4913 | 10.0 | 10.0 | 10.0 |
| Synperonic^{®} PE/F127 | 10.0 | 10.0 | 10.0 |
| Crodamol^{®} OP | 0.0 | 12.0 | 0.0 |
| Silwet^{®} 408 | 0.0 | 45.0 | 45.0 |
| Xanthan | 3.0 | 3.0 | 3.0 |
| Van Gel^{®} B | 5.0 | 5.0 | 5.0 |
| Proxel^{®} GXL | 1.8 | 1.8 | 1.8 |
| Kathon^{®} CG/ICP | 0.8 | 0.8 | 0.8 |
| Propylene glycol | 60.0 | 60.0 | 60.0 |
| SAG^{®} 1572 | 6.0 | 6.0 | 6.0 |
| Na₂HPO₄ (Buffer solution pH = 7) | 1.5 | 1.5 | 1.5 |
| NaH₂PO₄ (Buffer solution pH = 7) | 0.8 | 0.8 | 0.8 |
| Water (add to 1 litre) | To volume (∼886) | To volume (∼779) | To volume (∼791) |

The method of preparation used was according to Method 1.

### Drift

The drift was determined according to method 7.

**Table FN6.2: Drift data.**

| Spray volume l/ha | Relative amount of driftable fraction of spray droplets <100 microns from recipe FN6.2 compared to recipe FN6.3 % | Relative amount of driftable fraction of spray droplets <150 microns from recipe FN6.2 compared to recipe FN6.3 % | Concentration of drift reducing oil (b) in recipe g/l | Concentration of drift reducing oil (b) in spray liquid %w/v | Dose of drift reducing oil (b) in target crop g/ha |
|---|---|---|---|---|---|
| 20 | 102.7 | 92.9 | 12 | 0.003 | 6 |

Formulations tested at 0.5 l/ha.

The results show that recipe FN6.2 illustrative of the invention show a comparable driftable droplet fraction <100 microns and a lower driftable droplet fraction <150 microns at 20 l/ha spray volume compared to the reference recipe FN6.3 without drift reducing oil (b).

### Pipette spreading tests on leaves

The leaf deposit size was determined according to method 17.

**Table FN6.3: Spray dilution droplet size and dose on non-textured apple leaves and textured soybean and rice leaves.**

| Recipe | Deposit area mm^2 apple | Deposit area mm^2 soybean | Deposit area mm^2 rice | Spreading agent dose g/ha | Spreading agent dose in spray liquid %w/v |
|---|---|---|---|---|---|
| Recipe FN6.1 not according to the invention - 10 l/ha | 2.96 | 1.99 | 1.40 | 0 | 0 |
| Recipe FN6.1 not according to the invention - 200 l/ha | 2.44 | 1.58 | 1.20 | 0 | 0 |
| Recipe FN6.2 according to the invention - 10 l/ha | 146.09 | 90.48 | 98.87 | 22.5 | 0.225 |
| Recipe FN6.2 according to the invention - 200 l/ha | 19.45 | 15.18 | 14.90 | 22.5 | 0.01125 |

Formulations applied at 0.5 l/ha.

The results show that recipe FN6.2 illustrative of the invention shows greater deposit sizes at 10 L/ha spray volume than at 200 L/ha and also compared to the reference recipe FN6.1.

### Greenhouse

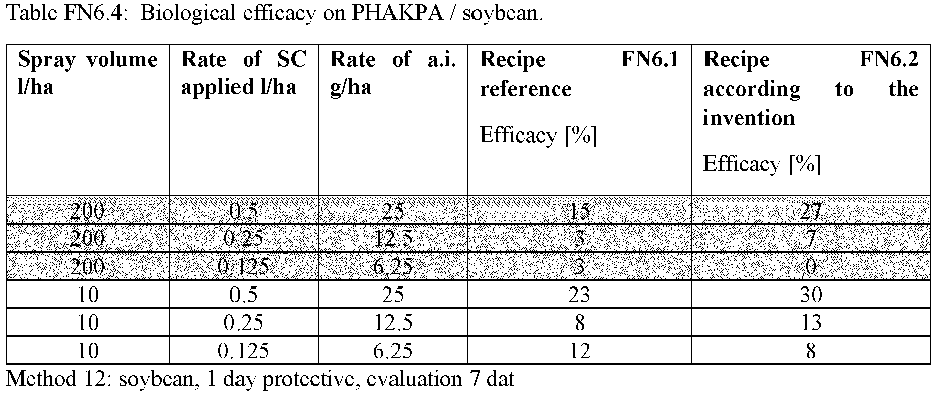

The results show that recipe FN6.2 illustrative of the invention shows higher efficacy at 10 l/ha spray volume than the reference recipe FN6.1 at both 10 and 200 l/ha. Furthermore, recipe FN6.2 shows higher efficacy at 10 l/ha compared to 200 l/ha.

### Example FN7: Isoflucypram 20 SC

**Table FN7.1: Recipes FN7.1 and FN7.2.**

| **Component (g/l)** | **Recipe FN7.1 reference** | **Recipe FN7.2 according to the invention** |
|---|---|---|
| Isoflucypram | 20.0 | 20.0 |
| Morwet^{®} D425 | 5.0 | 5.0 |
| Atlox^{®} 4913 | 10.0 | 10.0 |
| Synperonic^{®} PE/F127 | 5.0 | 5.0 |
| Corn oil | 0.0 | 15.0 |
| Silwet^{®} 806 | 0.0 | 60.0 |
| Xanthan | 3.0 | 3.0 |
| Van Gel^{®} B | 5.0 | 5.0 |
| Proxel^{®} GXL | 1.8 | 1.8 |
| Kathon^{®} CG/ICP | 0.8 | 0.8 |
| Glycerine | 60.0 | 60.0 |
| SAG^{®} 1572 | 6.0 | 6.0 |
| Na₂HPO₄ (Buffer solution pH = 7) | 1.5 | 1.5 |
| NaH₂PO₄ (Buffer solution pH = 7) | 0.8 | 0.8 |
| Water (add to 1 litre) | To volume (∼891) | To volume (∼816) |

The method of preparation used was according to Method 1.

### Pipette spreading tests on leaves

The leaf deposit size was determined according to method 17.

**Table FN7.2: Spray dilution droplet size and dose on non-textured apple leaves and textured soybean and rice leaves.**

| Recipe | Deposit area mm^2 apple | Deposit area mm^2 soybean | Deposit area mm^2 rice | Spreading agent dose g/ha | Spreading agent dose in spray liquid %w/v |
|---|---|---|---|---|---|
| Recipe FN7.1 not according to the invention - 10 l/ha | 2.91 | 1.67 | 0.81 | 0 | 0 |
| Recipe FN7.1 not according to the invention - 200 l/ha | 2.55 | 1.30 | 1.22 | 0 | 0 |
| Recipe FN7.2 according to the invention - 10 l/ha | 206.76 | 181.98 | 175.45 | 30 | 0.3 |
| Recipe FN7.2 according to the invention - 200 l/ha | 31.42 | 17.07 | 15.08 | 30 | 0.015 |

Formulations applied at 0.5 l/ha.

The results show that recipe FN7.2 illustrative of the invention shows greater deposit sizes at 10 L/ha spray volume than at 200 L/ha and also compared to the reference recipe FN7.1.

### Spreading on wheat plants

Wheat plants at a height of 15-25cm were sprayed with a TeeJet^{®} TP8002E nozzle at a pressure of 2 bar. A PWM device was used to achieve the spray volume of 10 l/ha. A small amount of a fluorescent marker was added to the spray liquid and the % coverage was determined under UV illumination (365nm) visually.

**Table FN7.3: Spray % coverage on wheat plants.**

| Recipe | Deposit area coverage % | Spreading agent dose g/ha | Spreading agent dose in spray liquid %w/v |
|---|---|---|---|
| Recipe FN7.1 not according to the invention - 10 l/ha | 8 | 0 | 0 |
| Recipe FN7.1 not according to the invention - 200 l/ha | 50 | 0 | 0 |
| Recipe FN7.2 according to the invention - 10 l/ha | 50 | 60 | 0.6 |
| Recipe FN7.2 according to the invention - 200 l/ha | 80 | 60 | 0.03 |

Formulations applied at 1.0 l/ha.

The results show that recipe FN7.2 illustrative of the invention shows greater leaf coverage compared to the reference recipe FN7.1 at both 10 l/ha and 200 l/ha spray volumes.

### Greenhouse

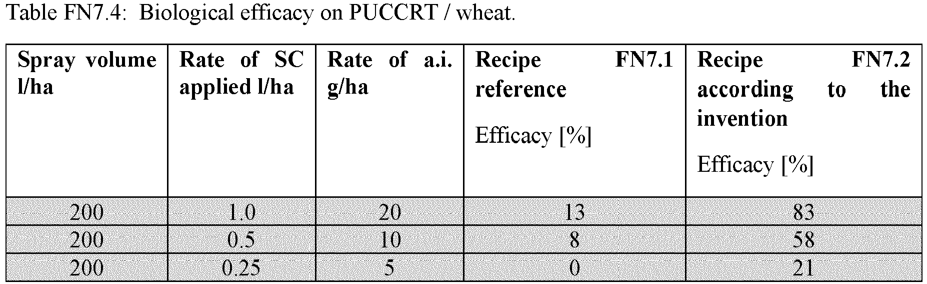

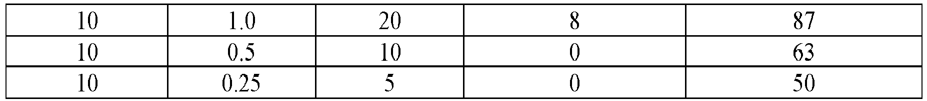

### Method 12: wheat, 2 day curative, evaluation 7 dat.

The results show that recipe FN7.2 illustrative of the invention shows higher efficacy at both 10 and 200 l/ha spray volume than the reference recipe FN7.1. Furthermore, recipe FN7.2 shows higher efficacy at 10 l/ha compared to 200 l/ha.

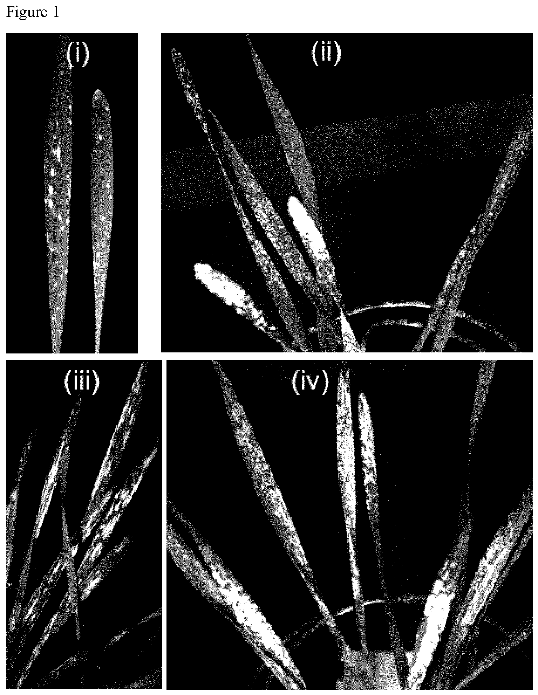

Images of the leaf deposits on sprayed wheat plants are shown in Figure 1 and surprisingly show that recipe FN7.2 illustrative of the invention shows remarkably high coverage at a spray volume of 10 l/ha while the reference recipe FN7.1 shows poor coverage as expected for a spray applied at a low spray volume of 10 l/ha. It is also surprising how this difference in coverage at 10 l/ha corresponds to a strong increase in efficacy with FN7.2 even when applied at 0.5 and 0.25 l/ha where the active ingredient and spreading agent (c) doses are lower.

### Example FN8: Fluoxapiprolin 10 SC

**Table FN8.1: Recipes FN8.1, FN8.2 and FN8.3.**

| **Component (g/l)** | **Recipe FN8.1 reference** | **Recipe FN8.2 according to the invention** | **Recipe FN8.3 reference** |
|---|---|---|---|
| Fluoxapiprolin | 10.0 | 10.0 | 10.0 |
| Morwet^{®} D425 | 5.0 | 5.0 | 5.0 |
| Atlox^{®} 4913 | 5.0 | 5.0 | 5.0 |
| Synperonic^{®} PE/F127 | 5.0 | 5.0 | 5.0 |
| Rapeseed oil methyl ester | 0.0 | 12.0 | 0.0 |
| Silwet^{®} 408 | 0.0 | 40.0 | 40.0 |
| Xanthan | 3.0 | 3.0 | 3.0 |
| Van Gel^{®} B | 5.0 | 5.0 | 5.0 |
| Proxel^{®} GXL | 1.8 | 1.8 | 1.8 |
| Kathon^{®} CG/ICP | 0.8 | 0.8 | 0.8 |
| Propylene glycol | 80.0 | 80.0 | 60.0 |
| SAG^{®} 1572 | 6.0 | 6.0 | 6.0 |
| Na₂HPO₄ (Buffer solution pH = 7) | 1.5 | 1.5 | 1.5 |
| NaH₂PO₄ (Buffer solution pH = 7) | 0.8 | 0.8 | 0.8 |
| Water (add to 1 litre) | To volume (∼886) | To volume (∼834) | To volume (∼846) |

The method of preparation used was according to Method 1.

### Drift

The drift was determined according to method 9.

**Table FN8.2: Drift data.**

| Spray volume | Amount of drift (at %vol < 100 microns) from recipe FN8.2 according to the invention compared to recipe FN8.1 not according to the invention % | Amount of drift (at %vol < 100 microns) from recipe FN8.2 according to the invention compared to recipe FN8.3 not according to the invention % |
|---|---|---|
| 101/ha | 93 | 73 |

Formulations tested at 0.35 l/ha.

The results show that recipe FN8.2 illustrative of the invention shows a lower drift at 10 L/ha spray volume compared to the reference recipes FN8.1 and FN8.3.

### Spreading on tomato plants

Tomato plants at the 4 leaf growth stage (BBCH 14) were sprayed with a TeeJet^{®} TP8002E nozzle at a pressure of 2 bar. A PWM device was used to achieve the spray volume of 15 l/ha. A small amount of a fluorescent marker was added to the spray liquid and the % coverage was determined under UV illumination (365nm) visually.

**Table FN8.3: Spray % coverage on tomato plants.**

| Recipe | Deposit area coverage % | Spreading agent dose g/ha | Spreading agent dose in spray liquid %w/v |
|---|---|---|---|
| Recipe FN8.1 not according to the invention - 15 l/ha | 5 | 0 | 0 |
| Recipe FN8.1 not according to the invention - 200 l/ha | 40 | 0 | 0 |
| Recipe FN8.2 according to the invention - 15 l/ha | 30 | 40 | 0.267 |
| Recipe FN8.2 according to the invention - 200 l/ha | 60 | 40 | 0.02 |

Formulations applied at 1.0 l/ha.

The results show that recipe FN8.2 illustrative of the invention shows greater leaf coverage compared to the reference recipe FN8.1 at both 15 l/ha and 200 l/ha spray volumes.

### Greenhouse

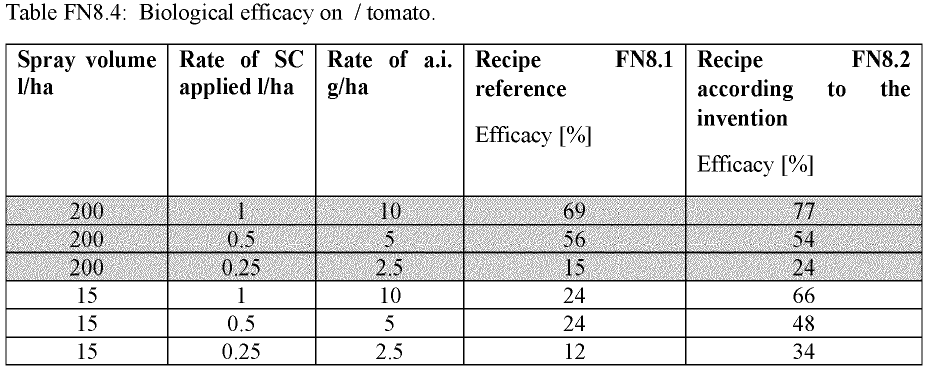

Method 12: tomato, 1 day curative, evaluation 4 dat

The results show that the reference recipe FN8.1 shows a large decrease in efficacy on reducing the spray volume from 200 l/ha to 15 l/ha. The recipe FN8.2 illustrative of the invention maintains a markedly better efficacy as the spray volume is decreased from 200 l/ha to 15 l/ha. Furthermore, recipe FN8.2 shows higher efficacy at both 15 and 200 l/ha spray volume compared to the reference recipe FN8.1.

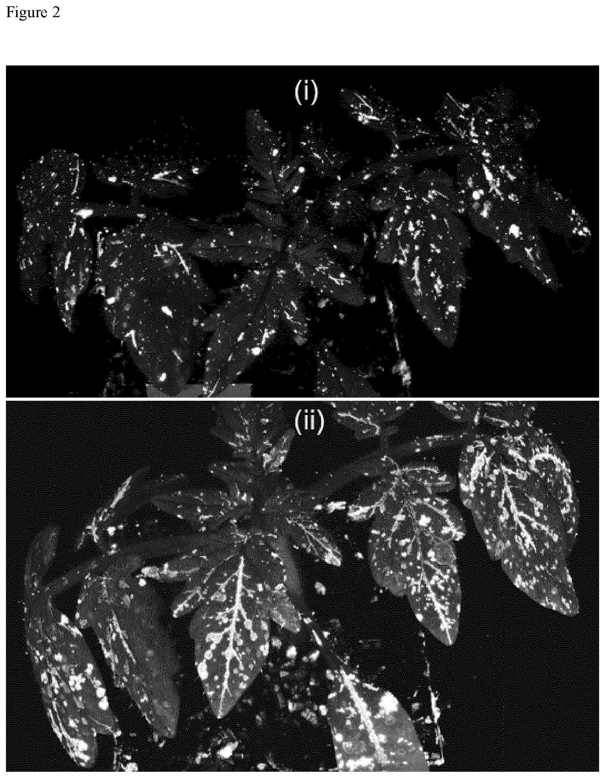

Images of the leaf deposits on sprayed tomato plants are shown in Figure 2 and show that recipe FN8.2 illustrative of the invention shows high coverage at a spray volume of 15 l/ha while the reference recipe FN8.1 shows poor coverage as expected for a spray applied at a low spray volume of 15 l/ha. It is surprising how this difference in coverage at 15 l/ha corresponds to an increase in efficacy with FN8.2 even when applied at 0.5 and 0.25 l/ha where the active ingredient and spreading agent (c) doses are lower.

### Example FN9: Fluopicolide SC

**Table FN9.1: Recipes FN9.1, FN9.2, FN9.3 and FN9.4.**

| **Component (g/l)** | **Recipe FN9.1 reference** | **Recipe FN9.2 according to the invention** | **Recipe FN9.3 reference** | **Recipe FN9.4 reference** |
|---|---|---|---|---|
| Fluopicolide | 20.0 | 20.0 | 20.0 | 20.0 |
| Morwet^{®} D425 | 5.0 | 5.0 | 5.0 | 5.0 |
| Synperonic^{®} PE/F127 | 8.0 | 8.0 | 8.0 | 8.0 |
| AgRho^{®} DR2000 | 0.0 | 6.0 | 0.0 | 12.0 |
| Silwet^{®} 408 | 0.0 | 20.0 | 20.0 | 0.0 |
| Xanthan | 3.0 | 3.0 | 3.0 | 3.0 |
| Van Gel^{®} B | 5.0 | 5.0 | 5.0 | 5.0 |
| Proxel^{®} GXL | 1.8 | 1.8 | 1.8 | 1.8 |
| Kathon^{®} CG/ICP | 0.8 | 0.8 | 0.8 | 0.8 |
| Propylene glycol | 80.0 | 80.0 | 80.0 | 80.0 |
| SAG^{®} 1572 | 8.0 | 8.0 | 8.0 | 8.0 |
| Na₂HPO₄ (Buffer solution pH = 7) | 1.5 | 1.5 | 1.5 | 1.5 |
| NaH₂PO₄ (Buffer solution pH = 7) | 0.8 | 0.8 | 0.8 | 0.8 |
| Water (add to 1 litre) | To volume (∼876) | To volume (∼850) | To volume (∼856) | To volume (∼864) |

The method of preparation used was according to Method 2.

### Spreading on tomato plants

Tomato plants at the 4 leaf growth stage (BBCH 14) were sprayed with a TeeJet^{®} TP8002E nozzle at a pressure of 2 bar. A PWM device was used to achieve the spray volume of 15 l/ha. A small amount of a fluorescent marker was added to the spray liquid and the % coverage was determined under UV illumination (365nm) visually.

**Table FN9.2: Spray % coverage on tomato plants.**

| Recipe | Deposit area coverage % | Spreading agent dose g/ha | Spreading agent dose in spray liquid %w/v |
|---|---|---|---|
| Recipe FN9.1 not according to the invention - 15 l/ha | 10 | 0 | 0 |
| Recipe FN9.1 not according to the invention - 200 l/ha | 50 | 0 | 0 |
| Recipe FN9.2 according to the invention - 15 l/ha | 25 | 20 | 0.133 |
| Recipe FN9.2 according to the invention - 200 l/ha | 55 | 20 | 0.01 |

Formulations applied at 1.0 l/ha.

The results show that recipe FN9.2 illustrative of the invention shows greater leaf coverage compared to the reference recipe FN9.1 at both 15 l/ha and 200 l/ha spray volumes.

### Greenhouse

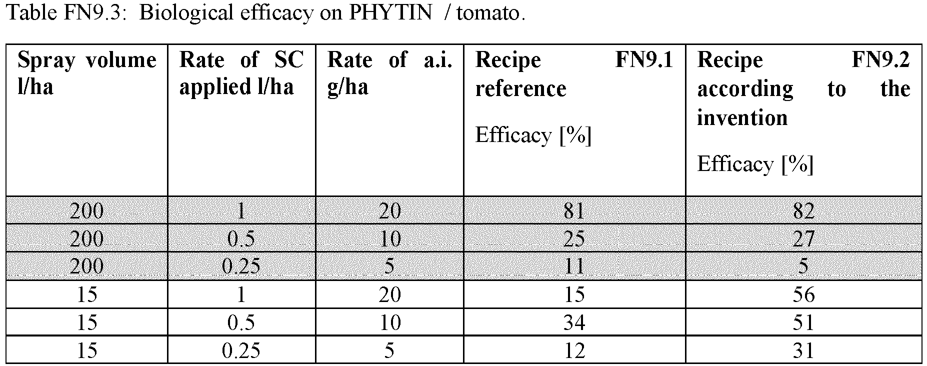

Method 12: tomato, 1 day curative, evaluation 4 dat

The results show that the recipe FN9.2 illustrative of the invention demonstrates a better efficacy compared to the reference recipe FN9.1 at both 2001/ha and 15 l/ha. Furthermore, the efficacy of recipe FN9.2 is surprisingly high at 15 l/ha for the lower coverage observed (Table FN9.3) compared to 200 l/ha.

### Physical Aspect

The physical aspect with regard to viscosity was assessed visually.

**Table FN9.5: Physical aspect of recipes.**

| Recipe | Drift reducing polymer (b) concentration in recipe g/l | Physical aspect |
|---|---|---|
| Recipe FN9.1 not according to the invention | 0.0 | Fluid pourable suspension. |
| Recipe FN9.2 according to the invention | 6.0 | Fluid pourable suspension. |
| Recipe FN9.3 not according to the invention | 0.0 | Fluid pourable suspension. |
| Recipe FN9.4 not according to the invention | 12.0 | Highly viscous suspension, difficult to pour. |

The results show that recipe FN9.4 is too viscous for use by customers and illustrates that there is an upper concentration limit for how much polymer can be incorporated in an SC recipe. For the drift reducing polymer AgRho DR2000 this is approximately 10 g/l.

### Example FN10: Inpyrfluxam SC

**Table FN10.1: Recipes FN10.1, FN10.2 and FN10.3**

| **Component (g/l)** | **Recipe FN10.1 reference** | **Recipe FN10.2 according to the invention** | **Recipe FN10.3 reference** |
|---|---|---|---|
| Inpyrfluxam | 100.0 | 100.0 | 100.0 |
| Morwet^{®} D425 | 5.0 | 5.0 | 5.0 |
| Atlox^{®} 4913 | 10.0 | 10.0 | 10.0 |
| Synperonic^{®} PE/F127 | 10.0 | 10.0 | 10.0 |
| Sunflower oil | 0.0 | 16.0 | 0.0 |
| Silwet^{®} 408 | 0.0 | 30.0 | 30.0 |
| Xanthan | 3.0 | 3.0 | 3.0 |
| Van Gel^{®} B | 5.0 | 5.0 | 5.0 |
| Proxel^{®} GXL | 1.8 | 1.8 | 1.8 |
| Acticide^{®} SPX | 0.8 | 0.8 | 0.8 |
| Propylene glycol | 80.0 | 80.0 | 80.0 |
| SAG^{®} 1572 | 6.0 | 6.0 | 6.0 |
| Na₂HPO₄ (Buffer solution pH = 7) | 1.5 | 1.5 | 1.5 |
| NaH₂PO₄ (Buffer solution pH = 7) | 0.8 | 0.8 | 0.8 |
| Water (add to 1 litre) | To volume (∼836) | To volume (∼790) | To volume (∼806) |

The method of preparation used was according to Method 1.

### Drift

The drift was determined according to method 7.

**Table FN10.2: Drift data.**

| Spray volume l/ha | Relative amount of driftable fraction of spray droplets <100 microns from recipe FN10.2 compared to recipe FN10.3 % | Relative amount of driftable fraction of spray droplets <150 microns from recipe FN10.2 compared to recipe FN10.3 % | Concentration of drift reducing oil (b) in recipe g/l | Concentration of drift reducing oil (b) in spray liquid %w/v | Dose of drift reducing oil (b) in target crop g/ha |
|---|---|---|---|---|---|
| 20 | 78.6 | 88.1 | 16.0 | 0.04 | 8.0 |

Formulations tested at 0.5 l/ha.

The results show that recipe FN10.2 illustrative of the invention show a lower driftable droplet fraction at 20 l/ha spray volume compared to the reference recipe FN10.3 without drift reducing oil (b).

### Pipette spreading tests on leaves

The leaf deposit size was determined according to method 17.

**Table FN10.3: Spray dilution droplet size and dose on non-textured apple leaves and textured soybean leaves.**

| Recipe | Deposit area mm^2 apple | Deposit area mm^2 soybean | Deposit area mm^2 rice | Spreading agent dose g/ha | Spreading agent dose in spray liquid %w/v |
|---|---|---|---|---|---|
| Recipe FN10.1 not according to the invention - 20 l/ha | 4.25 | 2.41 | 2.04 | 0 | 0 |
| Recipe FN10.1 not according to the invention - 200 l/ha | 2.76 | 1.65 | 3.46 | 0 | 0 |
| Recipe FN10.2 according to the invention - 20 l/ha | 103.58 | 84.30 | 64.78 | 30 | 0.3 |
| Recipe FN10.2 according to the invention - 200 l/ha | 13.03 | 15.14 | 10.99 | 30 | 0.015 |

Formulations applied at 0.5 l/ha.

The results show that recipe FN10.2 illustrative of the invention shows greater deposit sizes at 20 l/ha spray volume than at 200 l/ha and also compared to the reference recipe FN10.1.

### Example FN11: Fluoxapiprolin SC

**Table FN11.1: Recipes FN11.1, FN11.2 and FN11.3**

| **Component (g/l)** | **Recipe FN11.1 reference** | **Recipe FN11.2 according to the invention** | **Recipe FN11.3 reference** |
|---|---|---|---|
| Fluoxapiprolin | 50.0 | 50.0 | 50.0 |
| Morwet^{®} D425 | 5.0 | 5.0 | 5.0 |
| Soprophor^{®} FLK | 8.0 | 8.0 | 8.0 |
| Synperonic^{®} PE/F127 | 10.0 | 10.0 | 10.0 |
| Polyox^{®} WSR N60K | 0.0 | 2.2 | 0.0 |
| Silwet^{®} 408 | 0.0 | 24.0 | 24.0 |
| Xanthan | 3.0 | 3.0 | 3.0 |
| Van Gel^{®} B | 5.0 | 5.0 | 5.0 |
| Proxel^{®} GXL | 1.8 | 1.8 | 1.8 |
| Acticide^{®} SPX | 0.8 | 0.8 | 0.8 |
| Glycerine | 70.0 | 70.0 | 70.0 |
| SAG^{®} 1572 | 8.0 | 8.0 | 8.0 |
| Na₂HPO₄ (Buffer solution pH = 7) | 1.5 | 1.5 | 1.5 |
| NaH₂PO₄ (Buffer solution pH = 7) | 0.8 | 0.8 | 0.8 |
| Water (add to 1 litre) | To volume (∼866) | To volume (∼840) | To volume (∼842) |

The method of preparation used was according to Method 2.

### Drift

The drift was determined according to method 7.

**Table FN11.2: Drift data.**

| Spray volume l/ha | Relative amount of driftable fraction of spray droplets <100 microns from recipe FN11.2 compared to recipe FN11.3 % | Relative amount of driftable fraction of spray droplets <150 microns from recipe FN 11.2 compared to recipe FN11.3 % | Concentration of drift reducing polymer (b) in recipe g/l | Concentration of drift reducing polymer (b) in spray liquid %w/v | Dose of drift reducing polymer (b) in target crop g/ha |
|---|---|---|---|---|---|
| 20 | 90.3 | 87.9 | 2.2 | 0.0055 | 1.1 |

Formulations tested at 0.5 l/ha.

The results show that recipe FN11.2 illustrative of the invention show a lower driftable droplet fraction at 20 l/ha spray volume compared to the reference recipe FN11.3 without drift reducing polymer (b).

### Pipette spreading tests on leaves

The leaf deposit size was determined according to method 17.

**Table FN11.3: Spray dilution droplet size and dose on non-textured apple leaves and textured soybean leaves.**

| Recipe | Deposit area mm^2 apple | Deposit area mm^2 soybean | Spreading agent dose g/ha | Spreading agent dose in spray liquid %w/v |
|---|---|---|---|---|
| Recipe FN11.1 not according to the invention - 20 l/ha | 2.76 | 4.66 | 0 | 0 |
| Recipe FN11.1 not according to the invention - 200 l/ha | 3.01 | 3.29 | 0 | 0 |
| Recipe FN11.2 according to the invention - 20 l/ha | 90.43 | 65.13 | 24 | 0.12 |
| Recipe FN11.2 according to the invention - 200 l/ha | 13.47 | 7.96 | 24 | 0.012 |

Formulations applied at 0.5 l/ha.

The results show that recipe FN11.2 illustrative of the invention shows greater deposit sizes at 20 l/ha spray volume than at 200 l/ha and also compared to the reference recipe FN11.1.

### Example FN16: Bixafen SC

**Table FN16.1: Recipes FN16.1, FN16.2, FN16.3, FN16.4 and FN16.5.**

| **Component (g/l)** | **Recipe FN16.1 reference** | **Recipe FN16.2 containing drift reducing polymer (b)** | **Recipe FN16.3 containing drift reducing polymer (b)** | **Recipe FN16.4 containing drift reducing polymer (b)** | **Recipe FN16.5 containing drift reducing polymer (b)** |
|---|---|---|---|---|---|
| Bixafen | 100.0 | 100.0 | 100.0 | 100.0 | 100.0 |
| Morwet^{®} D425 | 5.0 | 5.0 | 5.0 | 5.0 | 5.0 |
| Atlox^{®} 4913 | 20.0 | 20.0 | 20.0 | 20.0 | 20.0 |
| Synperonic^{®} PE/F127 | 5.0 | 5.0 | 5.0 | 5.0 | 5.0 |
| Polyox^{®} WSR 301 | 0.0 | 0.3 | 0.6 | 0.9 | 1.2 |
| Xanthan | 3.0 | 3.0 | 3.0 | 3.0 | 3.0 |
| Van Gel^{®} B | 5.0 | 5.0 | 5.0 | 5.0 | 5.0 |
| Proxel^{®} GXL | 1.8 | 1.8 | 1.8 | 1.8 | 1.8 |
| Kathon^{®} CG/ICP | 0.8 | 0.8 | 0.8 | 0.8 | 0.8 |
| Propylene glycol | 80.0 | 80.0 | 80.0 | 80.0 | 80.0 |
| SAG^{®} 1572 | 8.0 | 8.0 | 8.0 | 8.0 | 8.0 |
| Na₂HPO₄ (Buffer solution pH = 7) | 1.5 | 1.5 | 1.5 | 1.5 | 1.5 |
| NaH₂PO₄ (Buffer solution pH = 7) | 0.8 | 0.8 | 0.8 | 0.8 | 0.8 |
| Water (add to 1 litre) | To volume (∼831) | To volume (∼831) | To volume (∼830) | To volume (∼830) | To volume (∼830) |

The method of preparation used was according to Method 2.

### Physical Aspect

The physical aspect with regard to viscosity was assessed visually.

**Table FN16.4: Physical aspect of recipes.**

| Recipe | Drift reducing polymer (b) concentration in recipe g/l | Physical aspect |
|---|---|---|
| FN16.1 | 0.0 | Fluid pourable suspension. |
| FN16.2 | 0.3 | Fluid pourable suspension. |
| FN16.3 | 0.6 | Fluid pourable suspension. |
| FN16.4 | 0.9 | Fluid pourable suspension. |
| FN16.5 | 1.2 | Fluid pourable suspension. |

The results show that the polymer Polyox^{®} WSR301 can be incorporated into SC recipes over the concentration range of 0.3 to 1.2 g/L.

### Spray droplet size

The spray droplet size was determined according to method 9.

**Table FN16.4: Driftable fraction of spray droplets.**

| Recipe | Drift reducing polymer (b) concentration in recipe g/l | Amount of driftable droplet fraction (at %vol < 100 microns) from recipe compared to recipe FN16.1 % | Amount of driftable droplet fraction (at %vol < 150 microns) from recipe compared to recipe FN16.1 % |
|---|---|---|---|
| FN16.1 | 0.0 | 100 | 100 |
| FN16.2 | 0.3 | 99 | 97 |
| FN16.3 | 0.6 | 95 | 93 |
| FN16.4 | 0.9 | 80 | 82 |
| FN16.5 | 1.2 | 72 | 77 |

Formulations applied at 0.5 l/ha in a spray volume of 15 l/ha.

The results show that the polymer Polyox^{®} WSR301 can reduce the driftable fraction of spray droplets <100 microns and <150 microns over the concentration range of 0.6 to 1.2 g/L (for a recipe used at 0.5 l/ha in a spray volume of 15 l/ha).

### Example FN17: Tebuconazole SC

**Table FN17.1: Recipes FN17.1, FN17.2, FN17.3, FN17.4 and FN17.5.**

| **Component (g/l)** | **Recipe FN17.1 reference** | **Recipe FN17.2 containing drift reducing polymer (b)** | **Recipe FN17.3 containing drift reducing polymer (b)** | **Recipe FN17.4 containing drift reducing polymer (b)** | **Recipe FN17.5 containing drift reducing polymer (b)** |
|---|---|---|---|---|---|
| Tebuconazole | 200.0 | 200.0 | 200.0 | 200.0 | 200.0 |
| Morwet^{®} D425 | 5.0 | 5.0 | 5.0 | 5.0 | 5.0 |
| Atlox^{®} 4913 | 20.0 | 20.0 | 20.0 | 20.0 | 20.0 |
| Synperonic^{®} PE/F127 | 10.0 | 10.0 | 10.0 | 10.0 | 10.0 |
| Polyox^{®} WSR N12K | 0.0 | 0.8 | 1.6 | 2.4 | 3.2 |
| Xanthan | 3.0 | 3.0 | 3.0 | 3.0 | 3.0 |
| Van Gel^{®} B | 5.0 | 5.0 | 5.0 | 5.0 | 5.0 |
| Proxel^{®} GXL | 1.8 | 1.8 | 1.8 | 1.8 | 1.8 |
| Kathon^{®} CG/ICP | 0.8 | 0.8 | 0.8 | 0.8 | 0.8 |
| Propylene glycol | 80.0 | 80.0 | 80.0 | 80.0 | 80.0 |
| SAG^{®} 1572 | 8.0 | 8.0 | 8.0 | 8.0 | 8.0 |
| Na₂HPO₄ (Buffer solution pH = 7) | 1.5 | 1.5 | 1.5 | 1.5 | 1.5 |
| NaH₂PO₄ (Buffer solution pH = 7) | 0.8 | 0.8 | 0.8 | 0.8 | 0.8 |
| Water (add to 1 litre) | To volume (∼736) | To volume (∼735) | To volume (∼734) | To volume (∼734) | To volume (∼733) |

The method of preparation used was according to Method 2.

**Table FN17.2: Recipes FN17.6, FN17.7, FN17.8 and FN17.9.**

| **Component (g/l)** | **Recipe FN17.6 containing drift reducing polymer (b)** | **Recipe FN17.7 containing drift reducing polymer (b)** | **Recipe FN17.8 containing drift reducing polymer (b)** | **Recipe FN17.9 containing drift reducing polymer (b)** |
|---|---|---|---|---|
| Tebuconazole | 200.0 | 200.0 | 200.0 | 200.0 |
| Morwet^{®} D425 | 5.0 | 5.0 | 5.0 | 5.0 |
| Atlox^{®} 4913 | 20.0 | 20.0 | 20.0 | 20.0 |
| Synperonic^{®} PE/F127 | 10.0 | 10.0 | 10.0 | 10.0 |
| Polyox^{®} WSR N12K | 0.8 | 1.6 | 2.4 | 3.2 |
| Silwet^{®} L77 | 40.0 | 40.0 | 40.0 | 40.0 |
| Xanthan | 3.0 | 3.0 | 3.0 | 3.0 |
| Van Gel^{®} B | 5.0 | 5.0 | 5.0 | 5.0 |
| Proxel^{®} GXL | 1.8 | 1.8 | 1.8 | 1.8 |
| Kathon^{®} CG/ICP | 0.8 | 0.8 | 0.8 | 0.8 |
| Propylene glycol | 80.0 | 80.0 | 80.0 | 80.0 |
| SAG^{®} 1572 | 8.0 | 8.0 | 8.0 | 8.0 |
| Na₂HPO₄ (Buffer solution pH = 7) | 1.5 | 1.5 | 1.5 | 1.5 |
| NaH₂PO₄ (Buffer solution pH = 7) | 0.8 | 0.8 | 0.8 | 0.8 |
| Water (add to 1 litre) | To volume (∼695) | To volume (∼694) | To volume (∼694) | To volume (∼693) |

The method of preparation used was according to Method 2.

### Physical Aspect

The physical aspect with regard to viscosity was assessed visually.

**Table FN17.4: Physical aspect of recipes.**

| Recipe | Drift reducing polymer (b) concentration in recipe g/l | Physical aspect |
|---|---|---|
| FN17.1 | 0.0 | Fluid pourable suspension. |
| FN17.2 | 0.6 | Fluid pourable suspension. |
| FN17.3 | 1.2 | Fluid pourable suspension. |
| FN17.4 | 1.8 | Fluid pourable suspension. |
| FN17.5 | 2.4 | Fluid pourable suspension. |
| FN17.6 | 0.6 | Fluid pourable suspension. |
| FN17.7 | 1.2 | Fluid pourable suspension. |
| FN17.8 | 1.8 | Fluid pourable suspension. |
| FN17.9 | 2.4 | Fluid pourable suspension. |

The results show that the polymer Polyox^{®} WSR N12K can be incorporated into SC recipes over the concentration range of 0.6 to 2.4 g/L.

### Spray droplet size

The spray droplet size was determined according to method 9.

**Table FN17.5: Driftable fraction of spray droplets.**

| Recipe | Drift reducing polymer (b) concentration in recipe g/l | Amount of driftable droplet fraction (at %vol < 100 microns) from recipe compared to recipe FN17.1 % | Amount of driftable droplet fraction (at %vol < 150 microns) from recipe compared to recipe FN17.1 % |
|---|---|---|---|
| FN17.1 | 0.0 | 100 | 100 |
| FN17.2 | 0.6 | 88 | 94 |
| FN17.3 | 1.2 | 75 | 84 |
| FN17.4 | 1.8 | 60 | 67 |
| FN17.5 | 2.4 | 55 | 63 |
| FN17.6 | 0.6 | 95 | 99 |
| FN17.7 | 1.2 | 80 | 90 |
| FN17.8 | 1.8 | 69 | 77 |
| FN17.9 | 2.4 | 78 | 84 |

Formulations applied at 0.5 l/ha in a spray volume of 15 l/ha.

The results show that the polymer Polyox^{®} WSR N12K can reduce the driftable fraction of spray droplets <100 microns and <150 microns over the concentration range of 0.6 to 2.4 g/L (for a recipe used at 0.5 l/ha in a spray volume of 15 l/ha). Furthermore, these results demonstrate that the reduction of the driftable fraction is also observed with spreading agents (c).

### INSECTICIDE EXAMPLES

### Example IN1: Spirotetramat 150 SC

**Table IN 1.1: Recipes IN11 and IN16.**

| **Component (g/l)** | **Recipe IN11 reference** | **Recipe IN16 according to the invention** |
|---|---|---|
| Spirotetramat | 150.0 | 150.0 |
| Morwet^{®} D425 | 5.0 | 5.0 |
| Soprophor TS29 | 30.0 | 30.0 |
| Miglyol 812N | 0.0 | 20.0 |
| Synperonic PE/F 127 | 0.0 | 2.0 |
| Surfynol 440 | 0.0 | 20.0 |
| Rhodopol 23 | 2.0 | 2.0 |
| Proxel^{®} GXL | 1.5 | 1.5 |
| Kathon^{®} CG/ICP | 0.8 | 0.8 |
| Glycerine | 80.0 | 80.0 |
| SAG^{®} 1572 | 2.0 | 2.0 |
| Citric Acid | 1.0 | 1.0 |
| Water (add to 1 litre) | To volume | To volume |

The method of preparation used was according to Method 1

### Pipette spreading tests on leaves

The leaf deposit size was determined according to method 17.

**Table IN1.2: Spray dilution droplet size and dose on non-textured apple leaves and textured rice leaves.**

| Recipe | Deposit area mm^2 apple | Deposit area mm^2 rice | Spreading agent dose g/ha | Spreading agent dose in spray liquid %w/v |
|---|---|---|---|---|
| Recipe IN11 not according to the invention - 8 l/ha | 4,20 | 1,12 | 0 | 0 |
| Recipe IN11 not according to the invention - 15 l/ha | 4,50 | 0,83 | 0 | 0 |
| Recipe IN11 not according to the invention - 100 l/ha | 3,52 | 1,11 | 0 | 0 |
| Recipe IN 16 according to the invention - 8 l/ha | 9,80 | 23,98 | 10 | 0,125 |
| Recipe IN 16 according to the invention - 15 l/ha | 8,05 | 32,81 | 10 | 0,067 |
| Recipe IN 16 according to the invention - 100 l/ha | 4,63 | 6,12 | 10 | 0,01 |

Formulations applied at 8/15/100 l/ha.

The results show that recipe IN16 illustrative of the invention shows greater deposit sizes at 8&15 L/ha spray volume than at 100 L/ha and also compared to the reference recipe IN11.

### Example IN2: Tetraniliprole 80 SC

**Table IN 2.1: Recipes IN21, IN26 and IN86**

| **Component (g/l)** | **Recipe IN21 reference** | **Recipe IN26 according to the invention** | **Recipe IN86 according to the invention** |
|---|---|---|---|
| | | | |
| Tetraniliprole | 80.0 | 80.0 | 80.0 |
| Morwet^{®} IP | 2.4 | 2.4 | 2.4 |
| Atlox 4913 | 9.4 | 9.4 | 9.4 |
| Synperonic PE/F 127 | 3.5 | 4.4 | 3.5 |
| Radia 7130 | 0.0 | 10.6 | 0.0 |
| Polyox WSR N12K | 0.0 | 0.0 | 21.0 |
| Break-Thru Vibrant | 0.0 | 21.0 | 0.0 |
| Silwet HS 312 | 0.0 | 0.0 | 21.0 |
| Xanthan | 3.5 | 3.5 | 3.5 |
| Proxel^{®} GXL | 1.5 | 1.5 | 1.5 |
| Kathon^{®} CG/ICP | 0.8 | 0.8 | 0.8 |
| Propylene Glycol | 52.0 | 52.0 | 52.0 |
| SAG^{®} 1572 | 2.0 | 2.0 | 2.0 |
| Citric Acid | 1.0 | 1.0 | 1.0 |
| Water (add to 1 litre) | To volume | To volume | To volume |

The method of preparation used was according to Method 1 (IN21, IN26), and according to Method 2 (IN86)

### Pipette spreading tests on leaves

The leaf deposit size was determined according to method 17.

**Table IN2.2: Spray dilution droplet size and dose on non-textured apple leaves and textured rice leaves.**

| Recipe | Deposit area mm^2 apple | Deposit area mm^2 rice | Spreading agent dose g/ha | Spreading agent dose in spray liquid %w/v |
|---|---|---|---|---|
| Recipe IN81 not according to the invention - 8 l/ha | 2,95 | 1,25 | 0 | 0 |
| Recipe IN81 not according to the invention - 15 l/ha | 3,18 | 1,49 | 0 | 0 |
| Recipe IN81 not according to the invention - 100 l/ha | 3,21 | 1,22 | 0 | 0 |
| Recipe IN86 according to the invention - 8 l/ha | 7,00 | 48,61 | 10 | 0,125 |
| Recipe IN86 according to the invention - 15 l/ha | 4,01 | 28,96 | 10 | 0,067 |
| Recipe IN86 according to the invention - 100 l/ha | 4,99 | 4,20 | 10 | 0,01 |

Formulations applied at 8/15/100 l/ha.

The results show that recipe IN86 illustrative of the invention shows greater deposit sizes at 8&15 L/ha spray volume than at 100 L/ha and also compared to the reference recipe IN81.

### Example IN3: Imidacloprid + Thiacloprid 300 SC

**Table IN 3.1: Recipes IN31 and IN36**

| **Component (g/l)** | **Recipe IN31 reference** | **Recipe IN36 according to the invention** |
|---|---|---|
| Imidacloprid | 150.0 | 150.0 |
| Thiacloprid | 150.0 | 150.0 |
| Morwet^{®} D425 | 5.0 | 5.0 |
| Atlox 4913 | 30.0 | 30.0 |
| Soprophor TS54 | 10.0 | 10.0 |
| Exxsol D80 | 0.0 | 20.0 |
| Synperonic PE/F 127 | 0.0 | 2.0 |
| Break-Thru Vibrant | 0.0 | 20.0 |
| Rhodopol 23 | 2.0 | 2.0 |
| Proxel^{®} GXL | 1.5 | 1.5 |
| Kathon^{®} CG/ICP | 0.8 | 0.8 |
| Glycerine | 80.0 | 80.0 |
| SAG^{®} 1572 | 2.0 | 2.0 |
| Citric Acid | 1.0 | 1.0 |
| Water (add to 1 litre) | To volume | To volume |

The method of preparation used was according to Method 1.

### Pipette spreading tests on leaves

The leaf deposit size was determined according to method 17.

**Table IN3.2: Spray dilution droplet size and dose on non-textured apple leaves and textured rice leaves.**

| Recipe | Deposit area mm^2 apple | Deposit area mm^2 rice | Spreading agent dose g/ha | Spreading agent dose in spray liquid %w/v |
|---|---|---|---|---|
| Recipe IN31 not according to the invention - 8 l/ha | 3,610 | 7,570 | 0 | 0 |
| Recipe IN31 not according to the invention - 15 l/ha | 3,280 | 5,690 | 0 | 0 |
| Recipe IN31 not according to the invention - 100 l/ha | 4,750 | 9,050 | 0 | 0 |
| Recipe IN36 according to the invention - 8 l/ha | 6,850 | 15,150 | 10 | 0,125 |
| Recipe IN36 according to the invention - 15 l/ha | 6,860 | 20,480 | 10 | 0,067 |
| Recipe IN36 according to the invention - 100 l/ha | 3,370 | 4,470 | 10 | 0,01 |

Formulations applied at 8/15/100 l/ha.

The results show that recipe IN36 illustrative of the invention shows greater deposit sizes at 8 and 15 L/ha spray volume than at 100 L/ha and also compared to the reference recipe IN31.

### Example IN4: Deltamethrin 25 SC

**Table IN 4.1: Recipes IN41 and IN46**

| **Component (g/l)** | **Recipe IN41 reference** | **Recipe IN46 according to the invention** |
|---|---|---|
| Deltamethrin | 25.0 | 25.0 |
| Soprophor TS29 | 20.0 | 20.0 |
| Marcol 82 | 0.0 | 30.0 |
| Synperonic PE/F 127 | 0.0 | 3.0 |
| Surfynol 420 | 0.0 | 20.0 |
| Rhodopol 23 | 2.0 | 2.0 |
| Proxel^{®} GXL | 1.5 | 1.5 |
| Kathon^{®} CG/ICP | 0.8 | 0.8 |
| Glycerine | 80.0 | 80.0 |
| SAG^{®} 1572 | 2.0 | 2.0 |
| Citric Acid | 1.0 | 1.0 |
| Water (add to 1 litre) | To volume | To volume |

The method of preparation used was according to Method 1.

### Pipette spreading tests on leaves

The leaf deposit size was determined according to method 17.

**Table IN4.2: Spray dilution droplet size and dose on non-textured apple leaves and textured rice leaves.**

| Recipe | Deposit area mm^2 apple | Deposit area mm^2 rice | Spreading agent dose g/ha | Spreading agent dose in spray liquid %w/v |
|---|---|---|---|---|
| Recipe IN41 not according to the invention - 8 l/ha | 5,21 | 1,19 | 0 | 0 |
| Recipe IN41 not according to the invention - 15 l/ha | 4,63 | 0,95 | 0 | 0 |
| Recipe IN41 not according to the invention - 100 l/ha | 5,47 | 2,29 | 0 | 0 |
| Recipe IN46 according to the invention - 8 l/ha | 6,64 | 14,10 | 10 | 0,125 |
| Recipe IN46 according to the invention - 15 l/ha | 6,35 | 14,16 | 10 | 0,067 |
| Recipe IN46 according to the invention - 100 l/ha | 4,63 | 4,49 | 10 | 0,01 |

Formulations applied at 8/15/100 l/ha.

The results show that recipe IN46 illustrative of the invention shows greater deposit sizes at 8 & 15 L/ha spray volume than at 100 L/ha and also compared to the reference recipe IN41.

### Example IN5: Ethiprole 200 SC

**Table IN 5.1: Recipes IN51 and IN56**

| **Component (g/l)** | **Recipe IN51 reference** | **Recipe IN56 according to the invention** |
|---|---|---|
| Ethiprole | 200.0 | 200.0 |
| Soprophor FLK | 30.0 | 30.0 |
| Rapeseed Oil | 0.0 | 30.0 |
| Synperonic PE/F 127 | 0.0 | 3.0 |
| Geropon DOS | 0.0 | 20.0 |
| Rhodopol 23 | 2.0 | 2.0 |
| Proxel^{®} GXL | 1.5 | 1.5 |
| Kathon^{®} CG/ICP | 0.8 | 0.8 |
| Glycerine | 80.0 | 80.0 |
| SAG^{®} 1572 | 2.0 | 2.0 |
| Citric Acid | 1.0 | 1.0 |
| Water (add to 1 litre) | To volume | To volume |

The method of preparation used was according to Method 1.

### Pipette spreading tests on leaves

The leaf deposit size was determined according to method 17.

**Table IN5.2: Spray dilution droplet size and dose on non-textured apple leaves and textured rice leaves.**

| Recipe | Deposit area mm^2 apple | Deposit area mm^2 rice | Spreading agent dose g/ha | Spreading agent dose in spray liquid %w/v |
|---|---|---|---|---|
| Recipe IN51 not according to the invention - 8 l/ha | 3,310 | 1,560 | 0 | 0 |
| Recipe IN51 not according to the invention - 15 l/ha | 2,540 | 2,300 | 0 | 0 |
| Recipe IN51 not according to the invention - 100 l/ha | 3,9 | 2,290 | 0 | 0 |
| Recipe IN56 not according to the invention - 8 l/ha | 9,390 | 22,310 | 10 | 0,125 |
| Recipe IN56 not according to the invention - 15 l/ha | 7,940 | 13,330 | 10 | 0,067 |
| Recipe IN56 not according to the invention - 100 l/ha | 8,050 | 5,600 | 10 | 0,01 |

Formulations applied at 8/15/100 l/ha.

The results show that recipe IN56 illustrative of the invention shows greater deposit sizes at 8 and 15 L/ha spray volume than at 100 L/ha and also compared to the reference recipe IN51.

### Example IN6: Flupyradifurone 150 SC

**Table IN 6.1: Recipes IN61 and IN66**

| **Component (g/l)** | **Recipe IN61 reference** | **Recipe IN66 according to the invention** |
|---|---|---|
| Flupyradifurone | 150.0 | 150.0 |
| Atlox 4894 | 11.0 | 11.0 |
| Atlox 4913 | 48.0 | 48.0 |
| Crodamol OP | 0.0 | 30.0 |
| Synperonic PE/F 127 | 0.0 | 3.0 |
| Break-Thru Vibrant | 0.0 | 20.0 |
| Rhodopol 23 | 2.0 | 2.0 |
| Aerosil R972 | 6.0 | 6.0 |
| Proxel^{®} GXL | 1.5 | 1.5 |
| Kathon^{®} CG/ICP | 0.8 | 0.8 |
| Urea | 70.0 | 70.0 |
| SAG^{®} 1572 | 1.0 | 1.0 |
| Citric Acid | 0.2 | 0.2 |
| Water (add to 1 litre) | To volume | To volume |

The method of preparation used was according to Method 1.

### Pipette spreading tests on leaves

The leaf deposit size was determined according to method 17.

**Table IN6.2: Spray dilution droplet size and dose on non-textured apple leaves and textured rice leaves.**

| Recipe | Deposit area mm^2 apple | Deposit area mm^2 rice | Spreading agent dose g/ha | Spreading agent dose in spray liquid %w/v |
|---|---|---|---|---|
| Recipe IN61 not according to the invention - 8 l/ha | 6,570 | 1,890 | 0 | 0 |
| Recipe IN61 not according to the invention - 15 l/ha | 6,990 | 1,420 | 0 | 0 |
| Recipe IN61 according to the invention - 100 l/ha | 6,520 | 1,120 | 0 | 0 |
| Recipe IN66 according to the invention - 8 l/ha | 2,460 | 1,670 | 10 | 0,125 |
| Recipe IN66 according to the invention - 15 l/ha | 3,570 | 1,380 | 10 | 0,067 |
| Recipe IN66 according to the invention - 100 l/ha | 3,440 | 1,260 | 10 | 0,01 |

Formulations applied at 8/15/100 l/ha.

The results show that recipe IN66 illustrative of the invention shows greater deposit sizes at 8&15 L/ha spray volume than at 100 L/ha and also compared to the reference recipe IN61.

### Example IN7: Spidoxamat 48 SC

**Table IN 5.1: Recipes IN71 and IN76**

| **Component (g/l)** | **Recipe IN71 reference** | **Recipe IN76 according to the invention** |
|---|---|---|
| Spidoxamat | 48.0 | 48.0 |
| Soprophor TS54 | 15.0 | 15.0 |
| Atlox 4913 | 45.0 | 45.0 |
| Rapeseed Oil Methyl ester | 0.0 | 20.0 |
| Synperonic PE/F 127 | 0.0 | 2.0 |
| Break-Thru Vibrant | 0.0 | 20.0 |
| Rhodopol 23 | 2.0 | 2.0 |
| Citric Acid | 0.2 | 0.2 |
| Glycerine | 100.0 | 100.0 |
| Proxel^{®} GXL | 1.5 | 1.5 |
| Kathon^{®} CG/ICP | 1.5 | 1.5 |
| SAG^{®} 1572 | 1.0 | 1.0 |
| Water | To volume | To volume |

The method of preparation used was according to Method 1

### Pipette spreading tests on leaves

The leaf deposit size was determined according to method 17.

**Table IN7.2: Spray dilution droplet size and dose on non-textured apple leaves and textured rice leaves.**

| Recipe | Deposit area mm^2 apple | Deposit area mm^2 rice | Spreading agent dose g/ha | Spreading agent dose in spray liquid %w/v |
|---|---|---|---|---|
| Recipe IN71 not according to the invention - 8 l/ha | 5,530 | 1,980 | 0 | 0 |
| Recipe IN71 not according to the invention - 15 l/ha | 7,160 | 1,020 | 0 | 0 |
| Recipe IN71 according to the invention - 100 l/ha | 7,430 | 2,220 | 0 | 0 |
| Recipe IN76 according to the invention - 8 l/ha | 6,100 | 21,910 | 10 | 0,125 |
| Recipe IN76 according to the invention - 15 l/ha | 3,980 | 17,670 | 10 | 0,067 |

aL/ha spray volume on rice compared to than at 100 L/ha and also compared to the reference recipe IN71.

### HERBICIDE EXAMPLES

### Example HB1: Triafamone 100 SC

**Table HB1.1: Recipes HB1.1 and HB1.2.**

| **Component (g/l)** | **Recipe HB1.1 reference** | **Recipe HB1.2 according to the invention** |
|---|---|---|
| TRIAFAMONE | 100.0 | 100.0 |
| Synperonic^{®} PE/F127 | 10.8 | 10.8 |
| Atlox^{®} 4913 | 32.4 | 32.4 |
| Atlox^{®} 44894 | 21.6 | 21.6 |
| Polyox^{®} WSR N60K | 0.0 | 0.8 |
| Silwet^{®} HS-312 | 0.0 | 20 |
| Xanthan gum | 0.4 | 0.4 |
| Proxel^{®} GXL | 1.8 | 1.8 |
| Kathon^{®} CG/ICP | 0.8 | 0.8 |
| Propylene glycol | 54 | 54 |
| Silcolapse^{®} 545 | 0.2 | 0.2 |
| Na₂HPO₄ (Buffer solution pH = 7) | 1.5 | 1.5 |
| NaH₂PO₄ (Buffer solution pH = 7) | 0.8 | 0.8 |
| Water (add to 1 litre) | To volume (∼850) | To volume (∼829) |

The method of preparation used was according to Method 2.

### Pipette spreading tests on leaves

The leaf deposit size was determined according to method 17.

**Table HB1.2: Spray dilution droplet size and dose on non-textured abutilon theophrasti, amaranthus retroflexus and apple leaves.**

| Recipe | Deposit area mm^2 abutilon | Deposit area mm^2 amaranthus | Deposit area mm^2 apple | Spreading agent dose g/ha | Spreading agent dose in spray liquid %w/v |
|---|---|---|---|---|---|
| Recipe HB1.1 not according to the invention - 10 l/ha | 7.0 | 4.9 | 5.6 | 0 | 0 |
| Recipe HB1.1 not according to the invention - 200 l/ha | 5.4 | 7.9 | 4.0 | 0 | 0 |
| Recipe HB1.2 according to the invention - 10 l/ha | 11.6 | 34.3 | 12.4 | 10 | 0.1 |
| Recipe HB 1.2 according to the invention - 200 l/ha | 5.9 | 6.7 | 4.7 | 10 | 0.005 |

Formulations applied at 0.5 1/ha.

The results show that recipe HB1.2 illustrative of the invention shows greater deposit sizes at 10 L/ha spray volume than at 200 L/ha and also compared to the reference recipe HB 1.1.

**Table HB1.3: Spray dilution droplet size and dose on textured digitaria sanguinalis, chenopodium album, soybean and rice leaves.**

| Recipe | Deposit area mm^2 digitaria | Deposit area mm^2 chenopodium | Deposit area mm^2 soybean | Deposit area mm^2 rice | Spreading agent dose g/ha | Spreading agent dose in spray liquid %w/v |
|---|---|---|---|---|---|---|
| Recipe HB1.1 not according to the invention - 10 l/ha | 3.6 | 4.3 | 4.5 | 2.8 | 0 | 0 |
| Recipe HB1.1 not according to the invention - 200 l/ha | 1.3 | 1.9 | 2.8 | 4.1 | 0 | 0 |
| Recipe HB1.2 according to the invention - 10 l/ha | 57.7 | 9.2 | 64.1 | 63.2 | 10 | 0.1 |
| Recipe HB1.2 according to the invention - 200 l/ha | 3.4 | 4.7 | 5.1 | 7.3 | 10 | 0.005 |

Formulations applied at 0.5 1/ha.

The results show that recipe HB1.2 illustrative of the invention shows greater deposit sizes at 10 L/ha spray volume than at 200 L/ha and also compared to the reference recipe HB 1.1.

### Example HB2: Tembotrione + Isoxadifen 315 SC

**Table HB2.1: Recipes HB2.1, HB2.2 and HB2.3**

| **Component (g/l)** | **Recipe HB2.1 reference** | **Recipe HB2.2 according to the invention** | **Recipe HB2.3 reference** |
|---|---|---|---|
| TEMBOTRIONE | 210.00 | 210.00 | 210.00 |
| ISOXADIFEN -ETHYL | 105.00 | 105.00 | 105.00 |
| Atlox^{®} 4913 | 37.00 | 37.00 | 37.00 |
| Atlas^{®} G 5000 | 12.00 | 12.00 | 12.00 |
| SYNPERONIC^{®} A7 | 12.00 | 12.00 | 12.00 |
| Rapeseed oil methyl ester | 0.00 | 14.00 | 0.00 |
| Silwet^{®} HS-312 | 0.00 | 20.00 | 20.00 |
| 1.2-Propylene glycol | 61.00 | 61.00 | 61.00 |
| Silcolapse^{®} 482 | 2.50 | 2.50 | 2.50 |
| Acticide^{®} MBS | 2.50 | 2.50 | 2.50 |
| Xanthan gum | 2.00 | 2.00 | 2.00 |
| Water (add to 1 litre) | To volume (∼761) | To volume (∼607) | To volume (∼607) |

The method of preparation used was according to Method 1.

### Drift

The drift was determined according to method 7.

**Table HB2.2.: Drift data.**

| Spray volume l/ha | Relative amount of driftable fraction of spray droplets <100 microns from recipe HB2.2 compared to recipe HB2.3 % | Relative amount of driftable fraction of spray droplets <150 microns from recipe HB2.2 compared to recipe HB2.3 % | Concentration of drift reducing oil (b) in recipe g/l | Concentration of drift reducing oil (b) in spray liquid %w/v | Dose of drift reducing oil (b) in target crop g/ha |
|---|---|---|---|---|---|
| 20 | 60.0 | 77.8 | 0.8 | 0.0002 | 0.4 |

Formulations tested at 0.5 1/ha.

The results show that recipes HB2.2 illustrative of the invention shows a lower amount of driftable fraction of spray droplets less than 100 microns and less than 150 microns at 20 1/ha spray volume compared to the reference recipe HB2.3 without drift reducing additive (b).

### Pipette spreading tests on leaves

The leaf deposit size was determined according to method 17.

**Table HB2.3: Spray dilution droplet size and dose on non-textured apple leaves.**

| Recipe | Deposit area mm^2 apple | Spreading agent dose g/ha | Spreading agent dose in spray liquid %w/v |
|---|---|---|---|
| Recipe HB2.1 not according to the invention - 10 l/ha | 4.5 | 0 | 0 |
| Recipe HB2.1 not according to the invention - 200 1/ha | 3.0 | 0 | 0 |
| Recipe HB2.2 according to the invention - 10 l/ha | 6.1 | 10 | 0.1 |
| Recipe HB2.2 according to the invention - 200 l/ha | 6.6 | 10 | 0.05 |

Formulations applied at 0.5 1/ha.

The results show that recipe HB2.2 illustrative of the invention shows greater deposit sizes at 10 L/ha spray volume than at 200 L/ha and also compared to the reference recipe HB2.1.

**Table HB2.4: Spray dilution droplet size and dose on textured rice leaves.**

| Recipe | Deposit area mm^2 rice | Spreading agent dose g/ha | Spreading agent dose in spray liquid %w/v |
|---|---|---|---|
| Recipe HB2.1 not according to the invention - 10 l/ha | 3.0 | 0 | 0 |
| Recipe HB2.1 not according to the invention - 200 l/ha | 2.4 | 0 | 0 |
| Recipe HB2.2 according to the invention - 10 l/ha | 36.9 | 10 | 0.1 |
| Recipe HB2.2 according to the invention - 200 l/ha | 6.5 | 10 | 0.05 |

Formulations applied at 0.5 l/ha.

The results show that recipe HB2.2 illustrative of the invention shows greater deposit sizes at 10 L/ha spray volume than at 200 L/ha and also compared to the reference recipe HB2.1.

### Example HB3: Thiencarbazone + Cyprosulfamide 200 SC

**Table HB3.1: Recipes HB3.1 and HB3.2.**

| **Component (g/l)** | **Recipe HB3.1 reference** | **Recipe HB3.2 according to the invention** | **Recipe HB3.2 according to the invention** |
|---|---|---|---|
| | | | |
| Thiencarbazone-methyl | 100.00 | 100.00 | 100.00 |
| Cyrosulfamide | 100.00 | 100.00 | 100.00 |
| Dispersogen^{®} LFH | 50.00 | 50.00 | 50.00 |
| Multitrope^{®} 1620 | 12.00 | 12.00 | 12.00 |
| Rapeseed oil methyl ester | 0.00 | 14.00 | 0.00 |
| Silwet^{®} HS-312 | 0.00 | 20.00 | 20.00 |
| 1.2-Propylene glycol | 80.00 | 80.00 | 80.00 |
| Silcolapse^{®} 416 | 3.00 | 3.00 | 3.00 |
| Procel^{®} GLX | 1.20 | 1.20 | 1.20 |
| Xanthan gum | 3.50 | 3.50 | 3.50 |
| Water (add to 1 litre) | To volume | To volume | To volume |

The method of preparation used was according to Method 1.

### Drift

The drift was determined according to method 7.

**Table HB3.2.: Drift data.**

| Spray volume l/ha | Relative amount of driftable fraction of spray droplets <100 microns from recipe HB3.2 compared to recipe HB3.3 % | Relative amount of driftable fraction of spray droplets <150 microns from recipe HB3.2 compared to recipe HB3.3 % | Concentration of drift reducing oil (b) in recipe g/l | Concentration of drift reducing oil (b) in spray liquid %w/v | Dose of drift reducing oil (b) in target crop g/ha |
|---|---|---|---|---|---|
| 20 | 82.3 | 87.7 | 0.8 | 0.0002 | 0.4 |

Formulations tested at 0.5 l/ha.

The results show that recipes HB3.2 illustrative of the invention shows a lower amount of driftable fraction of spray droplets less than 100 microns and less than 150 microns at 20 l/ha spray volume compared to the reference recipe HB3.3 without drift reducing additive (b).

### Pipette spreading tests on leaves

The leaf deposit size was determined according to method 17.

**Table HB3.3: Spray dilution droplet size and dose on non-textured apple leaves.**

| Recipe | Deposit area mm^2 apple | Spreading agent dose g/ha | Spreading agent dose in spray liquid %w/v |
|---|---|---|---|
| Recipe HB3.1 not according to the invention - 10 l/ha | 6.8 | 0 | 0 |
| Recipe HB3.1 not according to the invention - 200 l/ha | 4.9 | 0 | 0 |
| Recipe HB3.2 according to the invention - 10 l/ha | 5.6 | 10 | 0.1 |
| Recipe HB3.2 according to the invention - 200 l/ha | 3.3 | 10 | 0.05 |

Formulations applied at 0.5 1/ha.

The results show that recipe HB3.2 illustrative of the invention shows greater deposit sizes at 10 L/ha spray volume than at 200 L/ha.

**Table HB3.4: Spray dilution droplet size and dose on textured rice leaves.**

| Recipe | Deposit area mm^2 rice | Spreading agent dose g/ha | Spreading agent dose in spray liquid %w/v |
|---|---|---|---|
| Recipe HB3.1 not according to the invention - 10 l/ha | 2.0 | 0 | 0 |
| Recipe HB3.1 not according to the invention - 200 l/ha | 1.7 | 0 | 0 |
| Recipe HB3.2 according to the invention - 10 l/ha | 9.1 | 10 | 0.1 |
| Recipe HB3.2 according to the invention - 200 l/ha | 1.6 | 10 | 0.05 |

Formulations applied at 0.5 l/ha.

The results show that recipe HB3.2 illustrative of the invention shows greater deposit sizes at 10 L/ha spray volume than at 200 L/ha and also compared to the reference recipe HB3.1.

## Claims

1. Agrochemical formulation comprising
a) One or more active ingredients,
b) One or more drift reducing ingredients
c) One or more spreading agents,
f) Other formulants,
g) one or more carriers to volume,
wherein b) is present in 0.01 to 50 g/l. and
wherein c) is present in 5 to 250 g/l.

2. Agrochemical formulation according to claim 1, wherein b) is selected from the group comprising poly(ethylene) oxides with an average molecular weight preferably from 0.5 to 12 million g/mol, more preferred from 0.75 to 10 million g/mol, and most preferred from 1 to 8 million g/mol, and vegetable oils and vegetable oil esters and diester including esters with glycerine and propylene glycol.

3. Agrochemical formulation according to claim 1 or 2, wherein b) is selected from the group comprising a polymer selected from the group consisting of hydroxypropyl guar and poly(ethylene) oxides with an average molecular weight preferably from 0.5 to 12 million g/mol, more preferred from 0.75 to 10 million g/mol, and most preferred from 1 to 8 million g/mol, and is present in 0.05 to 10 g/l, preferably from 0.1 to 8 g/l, and most preferred from 0.2 to 6 g/l., more preferred a poly (ethylene oxide).

4. Agrochemical formulation according to claim 1 or 2, wherein b) is selected from the group comprising vegetable oils and vegetable oil esters and diester including esters with glycerine and propylene glycol and is present 1 to 50 g/l, preferably from 5 to 30 g/l, and most preferred from 6 to 30 g/l.

5. Agrochemical formulation according to one or more of claims 1 to 4, wherein c) is selected from the group comprising polyalkyleneoxide modified heptamethyltrisiloxanes, dioctylsulfosuccinate, alcohol ethoxylates and ethoxylated diacetylene-diols with 1 to 6 EO, preferably from the group comprising polyalkyleneoxide modified heptamethyltrisiloxanes, dioctylsulfosuccinate and ethoxylated diacetylene-diols with 1 to 6 EO.

6. Agrochemical formulation according to one or more of claims 1 to 5, wherein a) is present in an amount from 5 to 500 g/l, preferably from 10 to 320 g/l, and most preferred from 20 to 230 g/l.

7. Agrochemical formulation according to one or more of claims 1 to 6, wherein c) is present in 5 to 150 g/l, preferably from 10 to 120 g/l, and most preferred from 20 to 80 g/l.

8. Agrochemical formulation according to one or more of claims 1 to 7, wherein b) present according to claim 4 is applied from 0.1 g/ha to 50 g/ha, more preferably from 1 g/ha to 40 g/ha, and most preferred from 5 g/ha to 30 g/ha.

9. Agrochemical formulation according to one or more of claims 1 to 7, wherein b) present according to claim 3 is applied from 0.01 g/ha to 25 g/ha, more preferably from 0.05 g/ha to 10 g/ha, and most preferred from 0.1 g/ha to 6 g/ha.

10. Agrochemical formulation according to one or more of claims 1 to 9, wherein the active ingredient is selected from the group consisting of trifloxystrobin, bixafen, penflufen, tebuconazole, prothioconazole, inpyrfluxam, isoflucypram, fluopicolide, fluopyram, fluoxapiprolin, spirotetramat, tetraniliprole, ethiprole, imidacloprid, deltamethrin, flupyradifuron, spidoxamat, triafamone, tembotrione, thiencarbazone-methyl, isoxadifen-ethyl and cyprosulfamat.

11. Agrochemical formulation according to one or more of claims 1 to 10, wherein component f) comprises at least one non-ionic surfactant and / or ionic surfactant (f1), one rheological modifier (f2), and one antifoam substance (f3) and at least one antifreeze agent (f4).

12. Agrochemical formulation according to claim any one of claims 1 to 11, comprising the components a) to g) in the following amounts
a) from 5 to 500 g/l, preferably from 10 to 320 g/l, and most preferred from 20 to 230 g/l,
b) from 0.01 to 50 g/l, preferably from 0.1 to 30 g/l, and most preferred from 1 to 20 g/l, and in case of b) being an vegetable oil or ester from in 1 to 50 g/l, preferably from 5 to 30 g/l, and most preferred from 6 to 30 g/l, in case of b) being a drift reducing polymer in 0.05 to 3 g/l, preferably from 0.1 to 2 g/l, and most preferred from 0.2 to 1.5 g/l
c) from 5 to 150 g/l, preferably from 10 to 120 g/l, and most preferred from 20 to 80 g/l,
d) from 10 to 180 g/l, preferably from 20 to 150 g/l, and most preferred from 30 to 140 g/l,
f1) from 4 to 250 g/l, preferably from 8 to 120 g/l, and most preferred from 10 to 80 g/l,
f2) from 0 to 60 g/l, preferably from 1 to 20 g/l, and most preferred from 2 to 10 g/l,
f3) from 0 to 30 g/l, preferably from 0.5 to 20 g/l, and most preferred from 1 to 12 g/l,
f4) from 0 to 200 g/l, preferably from 5 to 150 g/l, and most preferred from 10 to 120 g/l,
f5) from 0 to 200 g/l, preferably from 0.1 to 120 g/l, and most preferred from 0.5 to 80 g/l,
g) carrier to volume.

13. Agrochemical composition according to one or more claims 1 to 12, wherein the formulation is applied at a spray volume of between 1 and 20 1/ha, preferably 2 and 15 1/ha, more preferably 5 and 15 1/ha.

14. Method of applying an agrochemical composition according to one or more claims 1 to 12 onto crops, wherein the formulation is applied at a spray volume of between 1 and 20 1/ha, preferably 2 and 15 l/ha, and more preferably 5 and 15 l/ha.

15. Use of an agrochemical composition according to one or more of the claims 1 to 12 in application of the agrochemical compounds for controlling harmful organisms, wherein the composition is applied by a UAV, UGV, PWM.
